# EUROPEAN PATENT APPLICATION

(11) **EP 4 799 910 A1**
(43) Date of publication of application: **02.09.2026**
(21) Application number: 24884861.6
(22) Date of filing: 30.10.2024
(51) Int. Cl.: B62D 21/02, B60K 1/04

(54) **VEHICLE**

(30) Priority: 30.10.2023 CN 202311422964
(71) Applicant: BYD Company Limited, Shenzhen, Guangdong 518118 (CN)
(72) Inventor: YANG, Feng, Shenzhen, Guangdong 518118 (CN); YI, Bengang, Shenzhen, Guangdong 518118 (CN); YAN, Junfei, Shenzhen, Guangdong 518118 (CN); LIU, Tengyong, Shenzhen, Guangdong 518118 (CN); LIANG, Darong, Shenzhen, Guangdong 518118 (CN)
(74) Representative: Taor, Simon Edward William
(86) International application number: PCT/CN2024/128675
(87) International publication number: WO 2025/092861

(57) **Abstract**

A vehicle includes a rear compartment frame, a passenger compartment frame, and a connecting assembly. In a front-rear direction of the vehicle, the connecting assembly is disposed between the rear compartment frame and the passenger compartment frame, and is separately connected to the rear compartment frame and the passenger compartment frame. The connecting assembly is an integral part.

## Description

### CROSS-REFERENCES TO RELATED APPLICATIONS

This application claims priority to Chinese patent application filed with the China National Intellectual Property Administration on October 30, 2023, application number 202311422964.0, entitled "VEHICLE", which is incorporated herein by reference in its entirety.

### TECHNICAL FIELD

The present disclosure relates to the field of vehicle technologies, and more specifically, to a vehicle.

### BACKGROUND

In a front-rear direction of a vehicle, a front side member, a sill beam, and a rear side member are usually connected from front to rear in sequence, forming a force transmission path in the front-rear direction of the vehicle. However, in the related art, a portion connecting a front end of the rear side member to the sill beam is formed by joining a plurality of sheet metal parts (usually a dozen to over twenty sheet metal parts) through splicing. This not only results in redundant structures at overlapping edges between the sheet metal parts, but also causes a step-like distribution of strength in a connection area. This affects the connection rigidity between the rear side member and the sill beam, thereby affecting the impact force transmission in the front-rear direction of the vehicle during rear collision.

### SUMMARY

A purpose of the present disclosure is to provide a vehicle, to at least partially resolve problems existing in the related art.

To achieve the foregoing objective, this application provides a vehicle, including: a rear compartment frame, a passenger compartment frame, and a connecting assembly. In a front-rear direction of the vehicle, the connecting assembly is disposed between the rear compartment frame and the passenger compartment frame, and is separately connected to the rear compartment frame and the passenger compartment frame. The connecting assembly is an integral part.

Optionally, the connecting assembly is integrally formed.

Optionally, the connecting assembly is provided with a first mounting surface, and the first mounting surface is configured as at least a part of a battery pack mounting surface.

Optionally, the passenger compartment frame includes a sill beam, and at least a part of a bottom surface of the sill beam is configured as at least a part of the battery pack mounting surface.

Optionally, the first mounting surface is flush with at least the part of the bottom surface of the sill beam on a horizontal plane.

Optionally, in a width direction of the vehicle, at least a part of the first mounting surface is located inside the sill beam.

Optionally, the passenger compartment frame further includes a first connecting plate, and the first connecting plate is connected to the sill beam.

Optionally, the vehicle further includes a battery pack, and the battery pack and the first connecting plate are spaced apart in a height direction of the vehicle to form a receiving space.

Optionally, the receiving space is adapted to receive an on-board charger.

Optionally, the passenger compartment frame further includes a second connecting plate; the second connecting plate is connected to at least one of the first connecting plate and the sill beam; and the battery pack, the first connecting plate, the second connecting plate, and the sill beam form the receiving space.

Optionally, the first connecting plate and the second connecting plate are integrally formed.

Optionally, an inspection port is provided on the first connecting plate.

Optionally, the battery pack, the first connecting plate, the second connecting plate, the sill beam, and the connecting assembly form the receiving space.

Optionally, the two connecting assemblies are spaced apart in a width direction of the vehicle, the vehicle further includes a rear crossmember, and two ends of the rear crossmember are respectively connected to the two connecting assemblies.

Optionally, the connecting assembly further includes a connecting portion, one end of the connecting portion is connected to the rear crossmember, and the other end of the connecting portion is formed as a rear side member connecting portion for connecting a rear side member.

Optionally, a projection of the rear crossmember in the front-rear direction of the vehicle at least partially overlaps a projection of the rear side member connecting portion in the front-rear direction of the vehicle.

Optionally, a projection of the rear crossmember in a left-right direction of the vehicle at least partially overlaps a projection of the rear side member connecting portion in the left-right direction of the vehicle.

Optionally, a projection of the rear side member in the front-rear direction of the vehicle at least partially overlaps a projection of the rear crossmember in the front-rear direction of the vehicle.

Optionally, the passenger compartment frame further includes the first connecting plate, the battery pack of the vehicle and the first connecting plate are spaced apart in the height direction of the vehicle to form the receiving space, and the rear crossmember and the battery pack are spaced apart in the height direction of the vehicle, so that an air vent in communication with the receiving space is formed between the battery pack and the rear crossmember.

Optionally, in the height direction of the vehicle, the rear crossmember is located on a side of the first connecting plate away from the battery pack.

Optionally, in the height direction of the vehicle, the first connecting plate is located on an upper side of the first mounting surface.

Optionally, the connecting assembly is provided with a rear subframe mounting point.

Optionally, in the height direction of the vehicle, a plane on which the rear subframe mounting point is located is located on an upper side of the first mounting surface.

Optionally, in the front-rear direction of the vehicle, the rear subframe mounting point is located on a rear side of a connecting portion between the battery pack of the vehicle and the connecting assembly.

Optionally, the connecting assembly further includes a rear side member connecting portion, and in the front-rear direction of the vehicle, the rear side member connecting portion is located on a rear side of the rear subframe mounting point.

Optionally, in the height direction of the vehicle, the first mounting surface is located on a lower side of the rear subframe mounting point, and the rear side member connecting portion is located on an upper side of the rear subframe mounting point.

Optionally, the connecting assembly further includes the rear side member connecting portion, and in the height direction of the vehicle, the rear side member connecting portion is located on an upper side of a plane on which the rear subframe mounting point is located.

Optionally, the passenger compartment frame includes a sill beam, and the connecting assembly is connected to a rear end of the sill beam.

Optionally, the sill beam has a first connecting surface and a second connecting surface that intersect each other, and both the first connecting surface and the second connecting surface are connected to the connecting assembly.

Optionally, the first connecting surface is located on a rear end face of the sill beam, and the connecting assembly is directly connected to the first connecting surface.

Optionally, the vehicle further includes an intermediate connecting member, the second connecting surface is an inner surface of the sill beam, and the connecting assembly is connected to the second connecting surface via the intermediate connecting member.

Optionally, the intermediate connecting member includes a third connecting surface and a fourth connecting surface, the third connecting surface is connected to the second connecting surface, and the fourth connecting surface is connected to the connecting assembly.

Optionally, the fourth connecting surface is parallel to or located on a same plane as the first connecting surface.

Optionally, a projection of the sill beam in the front-rear direction of the vehicle at least partially overlaps a projection of the connecting assembly in the front-rear direction of the vehicle.

Optionally, a projection of the sill beam in the left-right direction of the vehicle at least partially overlaps a projection of the connecting assembly in the left-right direction of the vehicle.

Optionally, the sill beam includes a sill body and a sill reinforcement beam, the sill body is provided with a sill reinforcement beam receiving space, and the sill reinforcement beam is disposed within the sill reinforcement beam receiving space; the connecting assembly is connected to both the sill body and the sill reinforcement beam; and the intermediate connecting member is connected to both the sill body and the sill reinforcement beam.

Optionally, the vehicle further includes a side reinforcement member, at least a part of the side reinforcement member is disposed within the sill reinforcement beam receiving space, and the side reinforcement member is connected to both the sill reinforcement beam and the sill body.

Optionally, a projection of the sill reinforcement beam in the width direction of the vehicle, a projection of the intermediate connecting member in the width direction of the vehicle, and a projection of the side reinforcement member in the width direction of the vehicle at least partially overlap with each other.

Optionally, the side reinforcement member extends out of the sill reinforcement beam receiving space to be connected to a rear C-pillar reinforcement panel of the vehicle.

Optionally, in the height direction of the vehicle, the rear C-pillar reinforcement panel is located on an upper side of the sill beam.

Optionally, the connecting assembly further includes force transmission ribs, and the force transmission ribs extend along the rear compartment frame toward the sill beam.

Optionally, a projection of the force transmission ribs in the front-rear direction of the vehicle at least partially overlaps a projection of the sill beam in the front-rear direction of the vehicle.

Optionally, the passenger compartment frame further includes a seat crossmember, and a projection of the sill beam in the height direction of the vehicle at least partially overlaps a projection of the seat crossmember in the height direction of the vehicle.

Optionally, a projection of the sill beam in the width direction of the vehicle at least partially overlaps a projection of the seat crossmember in the width direction of the vehicle.

Optionally, the sill beam includes a receiving portion, and the receiving portion is used for partially receiving the seat crossmember.

Optionally, the sill beam is provided with a battery pack mounting portion, in the height direction of the vehicle, the battery pack mounting portion is located on a lower side of the receiving portion, and in the width direction of the vehicle, the battery pack mounting portion is located on an outer side of the receiving portion.

Optionally, the sill beam is further provided with a battery pack sealing portion, in the height direction of the vehicle, the battery pack sealing portion is located between the receiving portion and the battery pack mounting portion, and in the width direction of the vehicle, the battery pack sealing portion is located between the receiving portion and the battery pack mounting portion.

Optionally, a lateral fastener connecting the sill beam and the seat crossmember is further included.

Optionally, the battery pack of the vehicle is at least partially formed as a vehicle floor.

Optionally, an upper end of the rear C-pillar reinforcement panel of the vehicle is connected to a vehicle frame side member of the passenger compartment frame.

Optionally, the upper end of the rear C-pillar reinforcement panel is connected to a rear upper crossmember of the passenger compartment frame.

Optionally, the vehicle further includes a front C-pillar reinforcement panel, an upper end of the front C-pillar reinforcement panel is connected to the vehicle frame side member, and a lower end of the front C-pillar reinforcement panel is connected to the sill beam of the vehicle.

Optionally, the front C-pillar reinforcement panel is disposed on a front side of the rear C-pillar reinforcement panel.

Optionally, the rear C-pillar reinforcement panel is provided with a front C-pillar reinforcement panel connecting portion, and the rear C-pillar reinforcement panel is connected to the front C-pillar reinforcement panel via the front C-pillar reinforcement panel connecting portion.

According to the foregoing technical solutions, the integration of the connecting assembly can be improved, and the assembly process can be simplified, contributing to vehicle lightweighting. In addition, the strength of the battery pack mounting point can be further improved.

Other features and advantages of the present disclosure will be described in detail in the following specific implementations.

### DESCRIPTION OF DRAWINGS

The accompanying drawings are intended to provide a further understanding of the present disclosure, form a part of this specification, and together with the following specific implementations, are used to explain the present disclosure, but do not constitute a limitation on the present disclosure. In the accompanying drawings:
FIG. 1 is a schematic side view of a vehicle according to an embodiment of the present disclosure;
FIG. 2 is a diagram of an exploded side view of a vehicle according to an embodiment of the present disclosure;
FIG. 3 is a three-dimensional structural diagram of a vehicle from a bottom view according to an embodiment of the present disclosure;
FIG. 4 is a diagram of a cross-sectional view along N-N in FIG. 1;
FIG. 5 is a diagram of a cross-section along N-N in FIG. 1;
FIG. 6 is an enlarged diagram of part A in FIG. 5;
FIG. 7 is an enlarged diagram of part B in FIG. 5;
FIG. 8 is a three-dimensional structural diagram of a vehicle from a rear view according to an embodiment of the present disclosure;
FIG. 9 is a diagram of a longitudinal cross-section of a partial structure of a vehicle according to an embodiment of the present disclosure;
FIG. 10 is a schematic bottom view of a vehicle according to an embodiment of the present disclosure, where an annular structure is shown in dashed lines, and a battery pack is not shown;
FIG. 11 is a schematic bottom view of a vehicle according to an embodiment of the present disclosure, where an annular structure is shown in dashed lines, and a battery pack is shown;
FIG. 12 is a three-dimensional structural diagram of a vehicle according to an embodiment of the present disclosure, where an annular structure is shown in dashed lines;
FIG. 13 is a three-dimensional structural diagram of a partial structure of a vehicle according to an embodiment of the present disclosure, where a first annular structure is shown in dashed lines;
FIG. 14 is a three-dimensional structural diagram of the vehicle in FIG. 12 from an E-E view, where a first annular structure is shown in dashed lines;
FIG. 15 is a three-dimensional structural diagram of a partial structure of a vehicle according to an embodiment of the present disclosure (F-F view);
FIG. 16 is a three-dimensional structural diagram of a partial structure of a vehicle according to an embodiment of the present disclosure (front view);
FIG. 17 is a three-dimensional structural diagram of a partial structure of a vehicle according to an embodiment of the present disclosure (rear view), where a third annular structure is shown in dashed lines;
FIG. 18 is a three-dimensional structural diagram of a rear structure of a vehicle according to an embodiment of the present disclosure;
FIG. 19 is a schematic side view of a part of a vehicle according to an embodiment of the present disclosure;
FIG. 20 is a diagram of a G-G interface in FIG. 19;
FIG. 21 is a three-dimensional structural diagram of a partial structure of a vehicle according to an embodiment of the present disclosure (H-H view);
FIG. 22 is a schematic side view of a connection between a front subframe and a battery pack of a vehicle according to an embodiment of the present disclosure;
FIG. 23 is a schematic side view of a connection between a rear subframe and a battery pack of a vehicle according to an embodiment of the present disclosure;
FIG. 24 is a three-dimensional structural diagram of a connection between a battery pack and a front compartment battery pack mounting member of a vehicle according to an embodiment of the present disclosure;
FIG. 25 is a three-dimensional structural diagram of a connection between a battery pack and a rear compartment battery pack mounting member of a vehicle according to an embodiment of the present disclosure;
FIG. 26 is a schematic front view of a side impact force transmission structure of a vehicle according to an embodiment of the present disclosure;
FIG. 27 is a three-dimensional structural diagram of a battery pack of a vehicle according to an embodiment of the present disclosure;
FIG. 28 is a diagram of an assembly of a battery pack and a seat crossmember of a vehicle according to an embodiment of the present disclosure;
FIG. 29 to FIG. 31 are partial diagrams of a position of a battery pack mounting member of a vehicle according to an embodiment of the present disclosure;
FIG. 32 is an exploded diagram of a part of a vehicle according to an embodiment of the present disclosure;
FIG. 33 is a partial diagram of a position of a battery pack mounting member of a vehicle according to an embodiment of the present disclosure;
FIG. 34 is a diagram of a Z1 section of FIG. 33;
FIG. 35 is a diagram of an X1 section of FIG. 33;
FIG. 36 is a diagram of a Y1 section of FIG. 33;
FIG. 37 to FIG. 39 are partial diagrams of a position of a battery pack mounting member of a vehicle according to an embodiment of the present disclosure;
FIG. 40 and FIG. 41 are exploded diagrams of a part of a vehicle according to an embodiment of the present disclosure;
FIG. 42 to FIG. 45 are partial diagrams of a position of a battery pack mounting member of a vehicle according to an embodiment of the present disclosure;
FIG. 46 is an exploded diagram of a part of a vehicle according to an embodiment of the present disclosure;
FIG. 47 to FIG. 54 are partial diagrams of a position of a battery pack mounting member of a vehicle according to an embodiment of the present disclosure;
FIG. 55 is a diagram of an exploded side view of a vehicle according to an embodiment of the present disclosure;
FIG. 56 is a side cross-sectional view of a position of a rear floor crossmember of a vehicle according to an embodiment of the present disclosure;
FIG. 57 and FIG. 58 are partial diagrams of a position of a sill of a vehicle according to an embodiment of the present disclosure;
FIG. 59 is a diagram of a connection between a center console and a seat crossmember of a vehicle according to an embodiment of the present disclosure;
FIG. 60 to FIG. 64 are partial diagrams of a position of a battery pack of a vehicle according to an embodiment of the present disclosure;
FIG. 65 to FIG. 76 are partial diagrams of a position of a battery pack mounting member of a vehicle according to an embodiment of the present disclosure;
FIG. 77 is a diagram showing a relative position of a rear floor crossmember and a front C-pillar reinforcement panel of a vehicle according to an embodiment of the present disclosure;
FIG. 78 is a diagram of D-D in FIG. 77;
FIG. 79 is a diagram of E-E in FIG. 77; and
FIG. 80 and FIG. 83 are partial diagrams of a vehicle according to an embodiment of the present disclosure.

### DETAILED DESCRIPTION OF PREFERRED EMBODIMENTS

The following describes in detail specific implementations of the present disclosure with reference to accompanying drawings. It should be understood that, the specific implementations described herein are only used to illustrate and explain the present disclosure and are not intended to limit the present disclosure.

In the descriptions of the present disclosure, it should be noted that, an orientation or a position relationship indicated by terms such as "up" and "down" depends on drawing directions shown in the accompanying drawings. The terms are only intended for the purpose of describing the present disclosure and simplifying the descriptions, rather than indicating or implying that the referred device or component must have a specific orientation, or be constructed and operated in a specific orientation, and therefore cannot be construed as a limitation on the present disclosure. The terms "inner" and "outer" indicates inner and outer contours of a corresponding structure. In addition, the terms "first", "second" and the like are merely used for distinguishing one element from another and do not indicate any order or importance.

In the present disclosure, unless otherwise stated, directional terms such as "up", "down", "left", "right", "front", and "rear" are used for indicating an orientation or a position relationship depending on directions shown in the accompanying drawings. The terms are only intended for the purpose of describing the present disclosure and simplifying the descriptions, rather than indicating or implying that the referred device or component must have a specific orientation, or be constructed and operated in a specific orientation, and therefore cannot be construed as a limitation on the present disclosure. For example, "up", "down", "left", "right", "front", and "rear" may be defined based on an up-down direction, a left-right direction, and a front-rear direction of a vehicle in a normal driving state. Specifically, in the accompanying drawings, an X direction is the front-rear direction of the vehicle, where a side an arrow points to is "front", and an opposite side is "rear"; a Y direction is the left-right direction of the vehicle, where a side an arrow points to is "right", and an opposite side is "left"; and a Z direction is the up-down direction of the vehicle, where a side an arrow points to is "up", and an opposite side is "down". The terms "inner" and "outer" indicates inner and outer contours of a corresponding structure.

In addition, it should be noted that, terms such as "first" and "second" are used for distinguishing one element from another and do not indicate any order or importance. In addition, in the descriptions with reference to the accompanying drawings, a same reference numeral in different accompanying drawings indicates a same element.

In the descriptions of the present disclosure, it should also be noted that, unless otherwise expressly specified and limited, the terms "arranged", "connected", "coupled", and "mounted" should be understood in a broad sense. For example, it may be a fixed connection, a detachable connection, or an integral connection; may be a direct connection; or may be an indirect connection through an intermediary. A person of ordinary skill in the art may interpret specific meanings of the foregoing terms in the present disclosure according to specific cases.

In addition, the term "crossmember" in the present disclosure may refer to a beam extending along the left-right direction of the vehicle, and the term "side member" may refer to a beam extending along the front-rear direction of the vehicle. The "front side member" refers to a longitudinal beam that extends rearward from a front bumper crossmember of the vehicle. The "rear side member" refers to a longitudinal beam that extends forward from a rear bumper crossmember of the vehicle. The side members are usually two beams and are symmetrically arranged along a front-rear centerline of the vehicle. For example, the "front side member" usually includes a "left front side member" and a "right front side member" spaced apart in the left-right direction.

In addition, unless otherwise specified, the meanings of terms such as "seat crossmember", "rear middle floor crossmember", "rear floor crossmember", "front panel", "rear panel", "side panel", "A-pillar", "C-pillar", "sill beam", and "rear wheel housing" involved in various embodiments of the present disclosure are their commonly known meanings in the art.

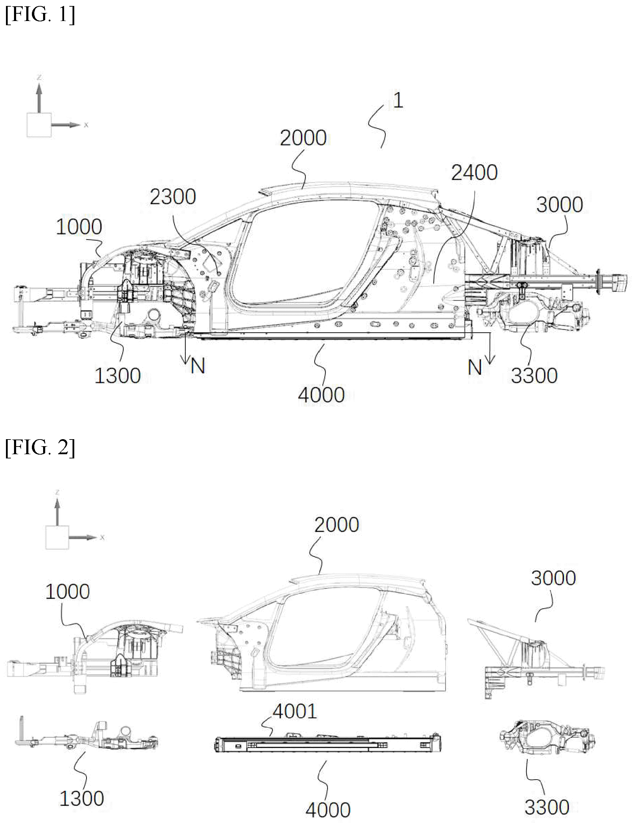

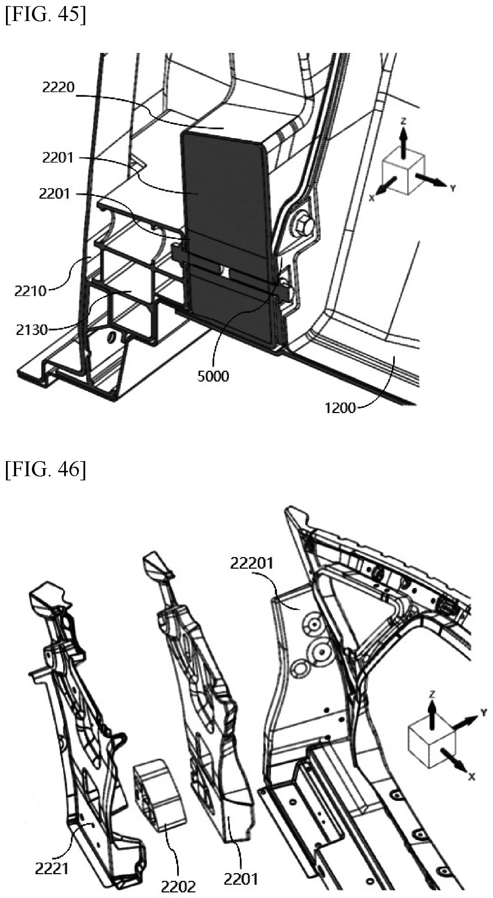

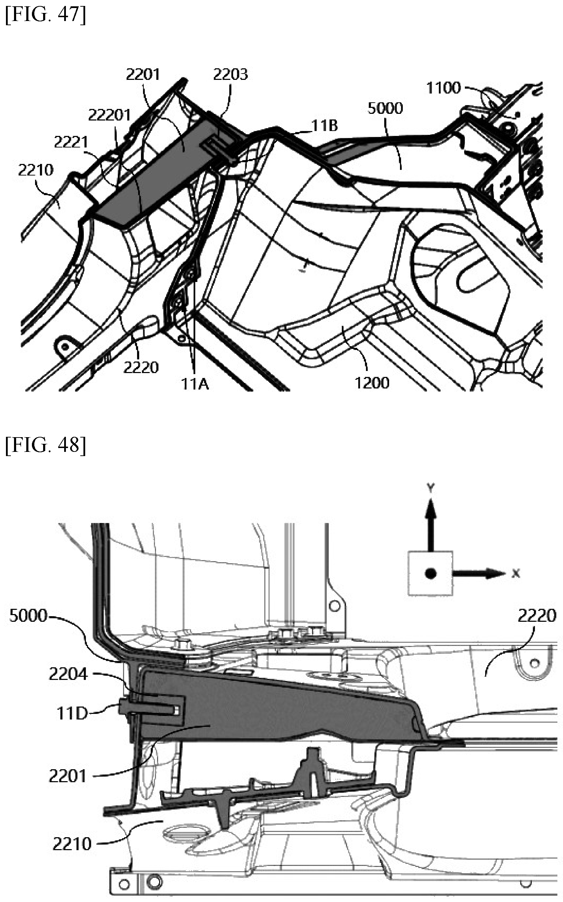

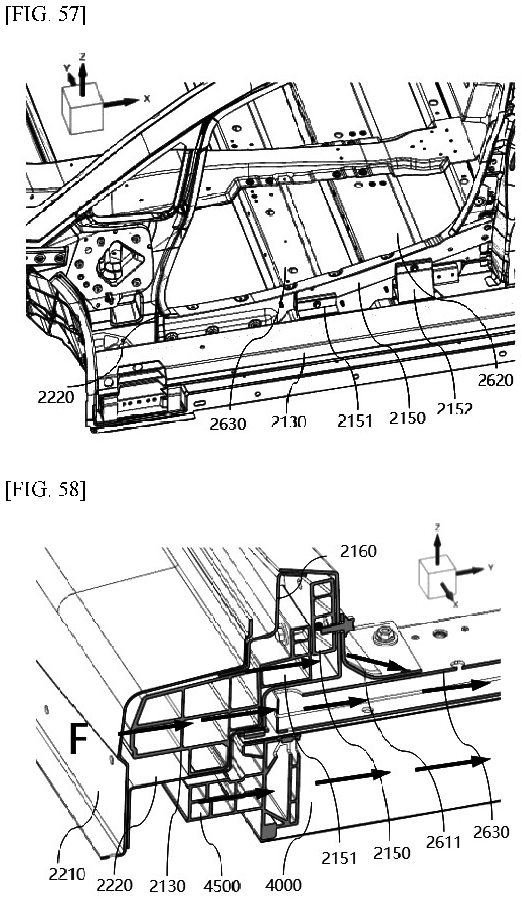

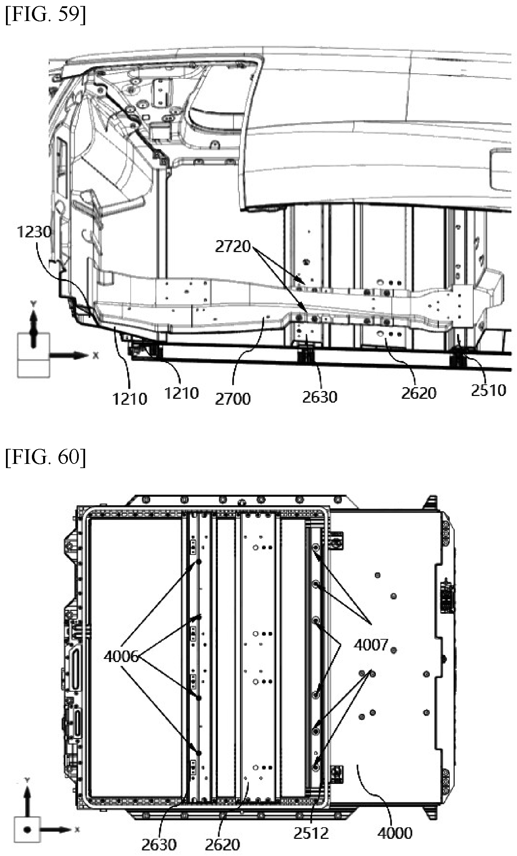

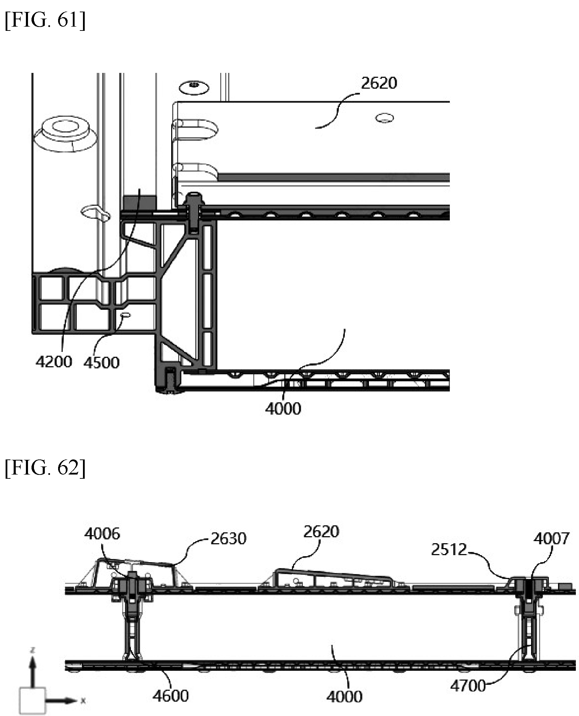

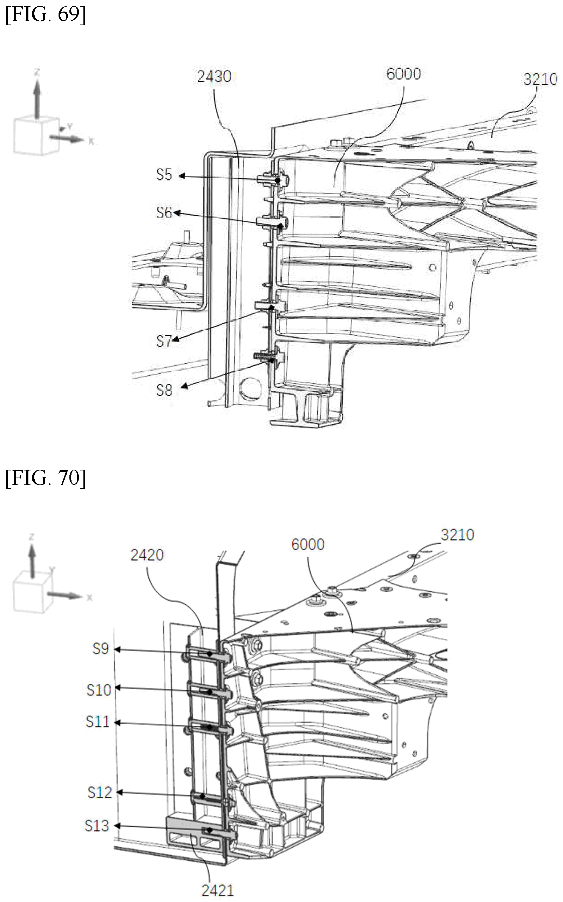

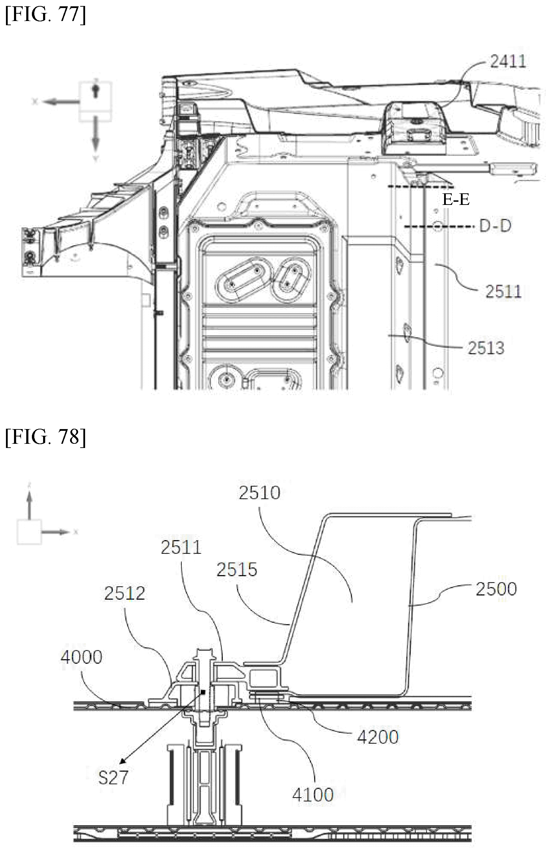

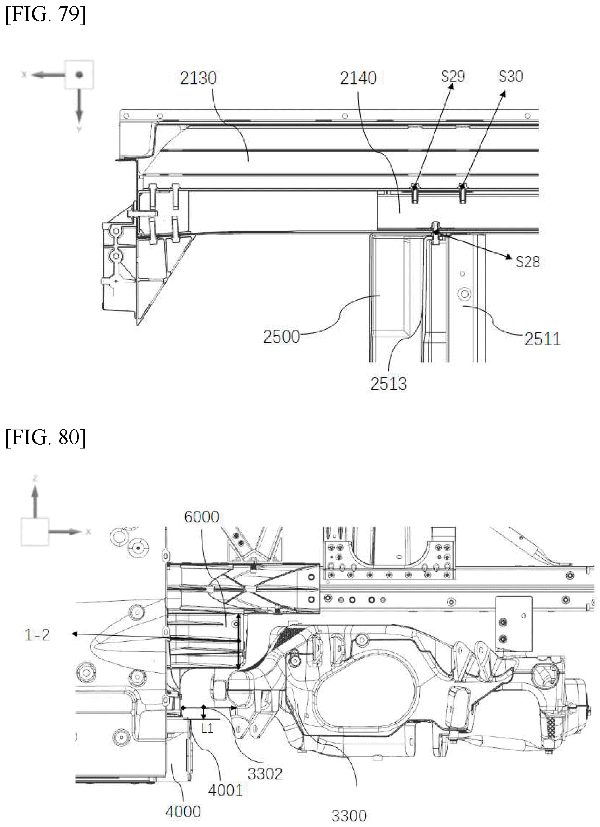

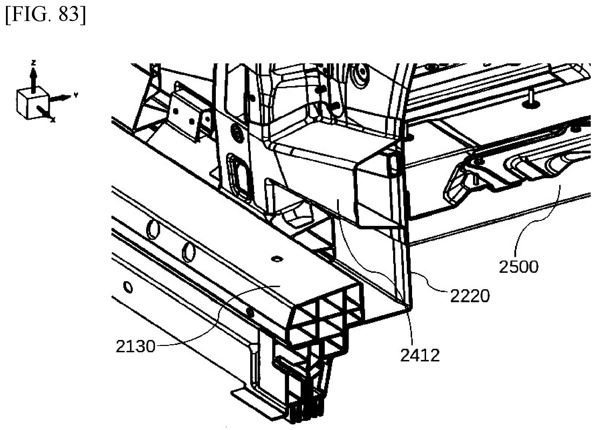

As shown in FIG. 1 to FIG. 83, the present disclosure provides a vehicle 1, where the vehicle 1 may include a vehicle body and a battery pack 4000 disposed at the bottom of the vehicle body.

As shown in FIG. 1 and FIG. 2, the vehicle body may include a front compartment, a passenger compartment, and a rear compartment from front to rear. The front compartment may include a front compartment frame 1000 and a front subframe (also referred to as a front subframe assembly 1300) mounted below the front compartment frame 1000; and the rear compartment may include a rear compartment frame and a rear subframe (also referred to as a rear subframe assembly 3300) mounted below the rear compartment frame 3000. The battery pack 4000 may be mounted below the passenger compartment and located between the front subframe and the rear subframe along a length direction of the vehicle.

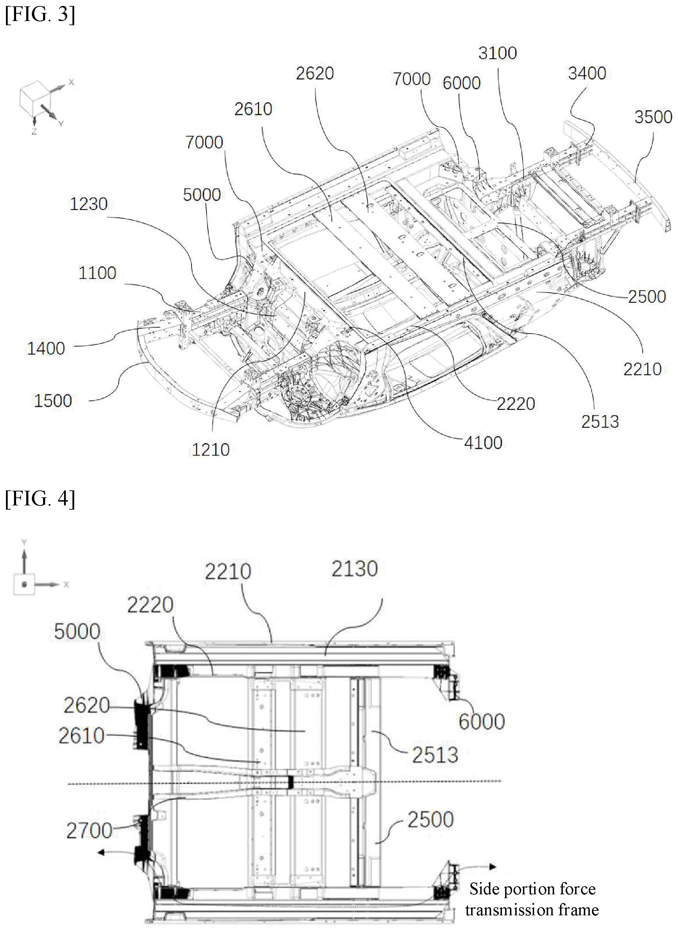

As shown in FIG. 3, the front compartment frame 1000 may include two front side members 1100 spaced apart along a width direction of the vehicle, the passenger compartment may include two sill beams 2100 spaced apart along the width direction of the vehicle, and the rear compartment frame 3000 may include two rear side members 3100 spaced apart along the width direction of the vehicle.

A rear end of a front side member 1100 may be connected to a front end of a corresponding sill beam 2100, and a front end of a rear side member 3100 may be connected to a rear end of a corresponding sill beam 2100. To be specific, the front side member 1100 located on the left side of the vehicle is connected to the sill beam 2100 located on the left side of the vehicle, and the front side member 1100 located on the right side of the vehicle is connected to the sill beam 2100 located on the right side of the vehicle. The rear side member 3100 located on the left side of the vehicle is connected to the sill beam 2100 located on the left side of the vehicle, and the rear side member 3100 located on the right side of the vehicle is connected to the sill beam 2100 located on the right side of the vehicle.

As shown in FIG. 3, the rear end of the front side member 1100 may be connected to the front end of the sill beam 2100 via a front compartment battery pack mounting member 5000 described below. The front end of the rear side member 3100 may be connected to the rear end of the sill beam 2100 via a rear compartment battery pack mounting member 6000 (hereinafter also referred to as a connecting assembly 6000). For details, refer to the following descriptions.

As shown in FIG. 3, the front compartment frame 1000 may further include a front bumper beam 1500 arranged along the width direction of the vehicle. Left and right ends of the front bumper beam 1500 are respectively connected to front ends of corresponding front side members 1100 of a pair of front side members 1100 via a front bumper box 1400. The rear compartment frame 3000 may further include a rear bumper beam 3500 arranged along the width direction of the vehicle. Left and right ends of the rear bumper beam 3500 are respectively connected to front ends of corresponding rear side members 3100 of a pair of front side members 1100 via a rear bumper box 3400.

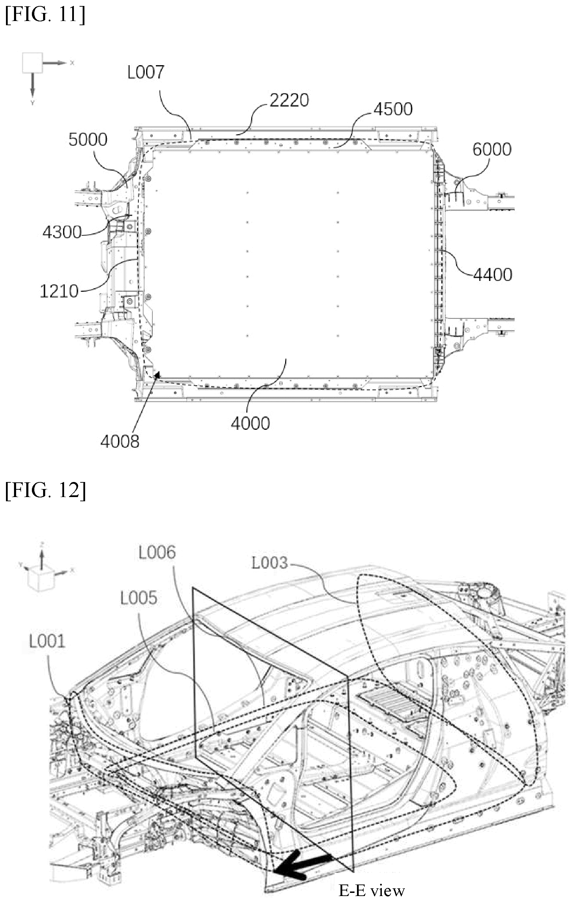

As shown in FIG. 11, the battery pack 4000 may include a battery tray. The battery tray includes a tray bottom plate, and a front battery pack crossmember 4300, a rear battery pack crossmember 4400, and two battery pack side members 4500 (a left battery pack side member and a right battery pack side member) are all disposed on the tray bottom plate. The front battery pack crossmember 4300, the rear battery pack crossmember 4400, and the two battery pack side members 4500 are connected to form an annular structure (that is, a seventh annular structure L007).

As mentioned above, in the related art, a structure connecting the front side member 1100 or the rear side member 3100 to the front end of the sill beam 2100 is formed by joining a plurality of sheet metal parts through splicing. This results in complex assembly and low connection rigidity, and is detrimental to impact force transmission.

In view of this, as shown in FIG. 1 to FIG. 28, the vehicle according to the present disclosure further includes a plurality of battery pack mounting members 5000 and 6000. The battery pack mounting members 5000 and 6000 are connected to at least one end portion of the sill beam 2100 in a front-rear direction. Two battery pack mounting members 5000 and 6000 (for example, a front compartment battery pack mounting member 5000 and a rear compartment battery pack mounting member 6000 described below) are spaced apart in a width direction of the vehicle, and two sill beams 2100 are spaced apart in the width direction of the vehicle. In the width direction of the vehicle, a minimum distance between the two battery pack mounting members 5000 and 6000 is less than a minimum distance between the two sill beams 2100. The battery pack mounting members 5000 and 6000 are formed with a battery pack mounting portion 7000 (or may be referred to as a first battery pack mounting portion), and the battery pack mounting portion 7000 is adapted to be connected to the battery pack 4000. The battery pack mounting members 5000 and 6000 are an integral part.

In the present disclosure, the battery pack mounting members 5000 and 6000 are the integral part with good rigidity. Compared to a solution in the prior art in which a connecting member between the front side member 1100 or the rear side member 3100 and the sill beam 2100 is formed by joining the plurality of sheet metal parts through splicing, in the solutions of the present disclosure, the integration of the battery pack mounting members 5000 and 6000 can be improved, and the assembly process can be simplified, contributing to vehicle lightweighting. In addition, because the battery pack mounting members 5000 and 6000 have good rigidity, the strength of mounting points for the battery pack 4000 can be better improved. By connecting the battery pack mounting members 5000 and 6000 integrally with the battery pack 4000, the rigidity of the entire vehicle body can also be improved.

In addition, because the battery pack mounting members 5000 and 6000 are the integral part and are connected integrally with the battery pack 4000, the vehicle body-battery integration of the vehicle 1 is improved. When the vehicle 1 is subjected to collision, under the combined action of the battery pack mounting members 5000 and 6000, the battery pack 4000, and the sill beam 2100, it facilitates the formation of a path with better front-rear force transmission effect, contributing to impact force transmission and dispersion in the front-rear direction. This design allows for better improvement in the force transmission and rigidity of the vehicle, thereby improving the anti-collision performance of the vehicle 1.

Because the minimum distance between the two battery pack mounting members 5000 and 6000 is less than the minimum distance between the two sills (that is, the sill beams 2100), the battery pack mounting members 5000 and 6000 are located on inner sides of the sill beams 2100. In this way, the sill may first be utilized for crushing and absorbing energy, and then the battery pack mounting members 5000 and 6000 may assist in resisting forces.

It may be understood that, that the battery pack mounting members 5000 and 6000 are the integral part means that the battery pack mounting members are a single component. The battery pack mounting members may be a component obtained by integral forming, or may be a component formed by separately processing a plurality of components and then connecting the components together to form an integral part. This is not limited in the present disclosure.

Optionally, in an embodiment of the present disclosure, the battery pack mounting members 5000 and 6000 may be integrally formed, to simplify processing and assembly processes. In addition, this allows the battery pack mounting member to have good rigidity, further improving the integration of the battery pack mounting members 5000 and 6000 with the vehicle body and the battery pack 4000.

For example, in the present disclosure, the battery pack mounting members 5000 and 6000 may be castings. Specifically, the battery pack mounting members may be castings manufactured using an aluminum alloy die-casting process. It may be understood that, in addition to the aluminum alloy, the battery pack mounting members may be made of another material, for example, steel.

In the present disclosure, a quantity and relative position of the battery pack mounting members 5000 and 6000 are not limited. As shown in FIG. 1 to FIG. 3, there may be two, three, four, or more. When arranged, two battery pack mounting members 5000 may be respectively connected to front end portions of the corresponding sill beam 2100, or two battery pack mounting members 6000 may be respectively connected to rear end portions of the corresponding sill beam 2100. Alternatively, one of the two battery pack mounting members 5000 and 6000 may be arranged and connected to the front end portions of the sill beam 2100, and the other of the two battery pack mounting members 5000 and 6000 may be arranged and connected to the rear end portions of the corresponding sill beam 2100 (or the sill beam 2100 on the other side of the vehicle).

As shown in FIG. 3, in an embodiment of the present disclosure, the plurality of battery pack mounting members 5000 and 6000 may include at least two battery pack mounting members 5000 (that is, two front compartment battery pack mounting members 5000) respectively connected to front side end portions of the corresponding sill beam 2100 and two battery pack mounting members 6000 (that is, two rear compartment battery pack mounting members 6000) respectively connected to rear side end portions of the corresponding sill beam 2100. In the present disclosure, the front compartment battery pack mounting member 5000 and the rear compartment battery pack mounting member 6000 located on the left side of the vehicle may be respectively connected to two end portions of the sill beam 2100 on the left side of the vehicle body, and the front compartment battery pack mounting member 5000 and the rear compartment battery pack mounting member 6000 located on the right side of the vehicle may be respectively connected to two end portions of the sill beam 2100 on the right side of the vehicle body.

Therefore, by setting at least four battery pack mounting members on the battery pack 4000, the mounting strength and rigidity of the battery pack 4000 can be improved, thereby effectively improving the reliability of mounting the battery pack 4000.

In addition, the front compartment battery pack mounting member 5000 and the rear compartment battery pack mounting member 6000 correspond to each other in the front-rear direction of the vehicle. The front compartment battery pack mounting member 5000 and the rear compartment battery pack mounting member 6000 are respectively connected to the front and rear end portions of the sill beam 2100. A side force transmission frame from the front compartment battery pack mounting member 5000, the sill beam 2100, and finally to the rear compartment battery pack mounting member 6000 is provided, to enable better impact force transmission and dispersion.

Once the battery pack 4000 is mounted, a relatively large load-bearing surface is formed. The front compartment battery pack mounting member 5000 and the rear compartment battery pack mounting member 6000 can form a frame with the sill beam 2100, thereby increasing the rigidity of the vehicle body, improving torsional rigidity, resisting vehicle deformation, and improving the riding experience.

Optionally, the two front battery pack mounting members 5000 may be respectively located at left and right corners on the front side of the battery pack 4000, and the two rear battery pack mounting members 6000 may be respectively located at left and right corners on the rear side of the battery pack 4000, to further improve the reliability of mounting the battery pack 4000.

As shown in FIG. 3, in a length direction of the vehicle, a maximum distance between the battery pack mounting member 5000 (that is, the front compartment battery pack mounting member 5000) connected to a front side end portion of the sill beam 2100 and the battery pack mounting member 6000 (that is, the rear compartment battery pack mounting member 6000) connected to a rear side end portion of the sill beam 2100 is greater than a length of the sill beam 2100.

This design ensures that the battery pack mounting members 5000 and 6000 are separate components from the sill beam 2100. During force transmission, the impact force may first be transmitted through a more rigid battery pack mounting member (in front-end collision, the impact force is first transmitted through the front compartment battery pack mounting member 5000, and in rear-end collision, the impact force is first transmitted through the rear compartment battery pack mounting member 6000) and then through the sill beam 2100, thereby improving the anti-collision performance of the vehicle.

Optionally, in the present disclosure, projections of the battery pack mounting members 5000 and 6000 in the front-rear direction of the vehicle (that is, the length direction of the vehicle) at least partially overlap projections of the corresponding sill beams 2100 in the front-rear direction of the vehicle. To be specific, the projections of the battery pack mounting members 5000 and 6000 located on the left side of the vehicle in the front-rear direction of the vehicle may at least partially overlap the projection of the sill beam 2100 located on the left side of the vehicle in the front-rear direction of the vehicle, and the projections of the battery pack mounting members 5000 and 6000 located on the right side of the vehicle in the front-rear direction of the vehicle may at least partially overlap the projection of the sill beam 2100 located on the right side of the vehicle in the front-rear direction of the vehicle. This design facilitates the connection between the battery pack mounting members and the sill beam 2100, thereby forming a reliable force transmission path and achieving better and more effective force transmission effect.

Optionally, in the present disclosure, the projections of the battery pack mounting members 5000 and 6000 in a left-right direction of the vehicle (that is, the width direction of the vehicle) at least partially overlap the projections of the corresponding sill beams 2100 in the left-right direction of the vehicle. That is, the projections of the battery pack mounting members 5000 and 6000 located on the left side of the vehicle in the left-right direction may at least partially overlap the projection of the sill beam 2100 located on the left side of the vehicle in the left-right direction, and the projections of the battery pack mounting members 5000 and 6000 located on the right side of the vehicle in the left-right direction may at least partially overlap the projection of the sill beam 2100 located on the right side of the vehicle in the left-right direction. This design facilitates the forming of a force transmission path extending along the front-rear direction of the vehicle by the battery pack mounting members 5000 and 6000 and the corresponding sill beams 2100, thereby ensuring better force transmission in the left-right direction of the vehicle. In addition, the battery pack mounting members may be limited in the front-rear direction and the left-right direction with the sill beam 2100, thereby ensuring a more stable connection and better improve the rigidity.

Optionally, in the present disclosure, projections of the battery pack mounting members 5000 and 6000 located on a same side in the width direction of the vehicle at least partially overlap with each other in the front-rear direction of the vehicle. For example, the projection of the front battery pack mounting member 5000 located on the left side in the width direction of the vehicle at least partially overlaps the projection of the rear battery pack mounting member 6000 in the front-rear direction of the vehicle, and the projection of the front battery pack mounting member 5000 located on the right side in the width direction of the vehicle at least partially overlaps the projection of the rear battery pack mounting member 6000 in the front-rear direction of the vehicle. This design allows the front compartment battery pack mounting member 5000 and the rear compartment battery pack mounting member 6000 to be aligned on the front and rear sides for smoother force transmission, preventing the generation of the deflection torque and facilitating the front-rear transmission and dispersion of the impact force, thereby improving the anti-collision performance of the vehicle.

In the present disclosure, refer to FIG. 3, FIG. 11, FIG. 24 and FIG. 25. In an embodiment of the present disclosure, battery pack mounting surfaces 7300 (or may be referred to as first battery pack mounting surfaces) of four battery pack mounting members 5000 and 6000 are located on a same horizontal plane. To be specific, the battery pack mounting surfaces 7300 of the two front compartment battery pack mounting members 5000 and the two rear compartment battery pack mounting members 6000 are at a same height in the height direction of the vehicle 1.

This design allows for a tighter connection between the four battery pack mounting members 5000 and 6000 and the battery pack 4000; facilitates better sealing of the battery pack 4000 and the vehicle body; and ensures smoother impact force transmission between the front compartment battery pack mounting member 5000, the battery pack 4000, and the rear compartment battery pack mounting member 6000, thereby eliminating the deflection torque, preventing additional burden on the battery pack 4000, and preventing damage to the battery pack 4000 due to the deflection torque. In addition, gaps between the battery pack 4000 and other components may be reduced, to ensure better integration with the vehicle body, that is, ensure better integration of the battery pack 4000 with the vehicle body.

It may be understood that, in another embodiment of the present disclosure, any two, three, or four of the battery pack mounting surfaces 7300 of the four battery pack mounting members 5000 and 6000 may not be located on a same horizontal plane.

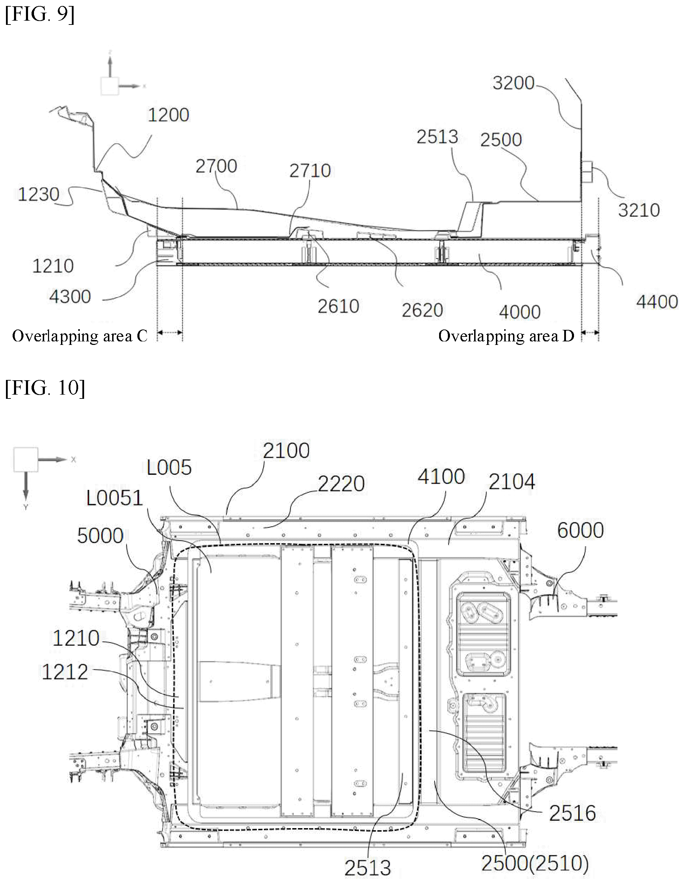

In the present disclosure, as shown in FIG. 10, the sill beam 2100 is provided with a sill beam battery pack mounting surface 2104, and the sill beam battery pack mounting surface 2104 is adapted to be connected to the battery pack 4000. In other words, in the present disclosure, in addition to setting battery pack mounting points on the battery pack mounting members 5000 and 6000, mounting points (that is, the sill beam battery pack mounting surface 2104) may also be arranged on the sill beam 2100 for mounting the battery pack 4000. This can further improve the reliability of mounting the battery pack 4000, and improve the integration of the battery pack 4000, the battery pack mounting members 5000 and 6000, and the sill beam 2100, thereby improving the rigidity of the sill beam 2100 and further improving the rigidity of the vehicle body and the force transmission effect.

In addition, the sill beam 2100 may form an integral and large force transmission plane with the four battery pack mounting members 5000 and 6000. The battery pack 4000, the battery pack mounting members 5000 and 6000, and the sill beam 2100 form an integral part. This not only improves the force transmission effect but also effectively suppresses the deflection torque in a vertical direction when forces in the front-rear direction are applied.

Optionally, the sill beam battery pack mounting surface 2104 and the battery pack mounting surface 7300 on the battery pack mounting portion 7000 may be located on a same horizontal plane. This design allows for a tighter connection between the sill beams 2100 and the battery pack 4000; facilitates better sealing of the battery pack 4000 and the vehicle body; and ensures smoother impact force transmission between the front compartment battery pack mounting member 5000, the battery pack 4000, and the rear compartment battery pack mounting member 6000, thereby eliminating the deflection torque, preventing additional burden on the battery pack 4000, and preventing damage to the battery pack 4000 due to the deflection torque. In addition, gaps between the battery pack 4000 and other components may be reduced, to ensure better integration with the vehicle body, that is, ensure better integration of the battery pack 4000 with the vehicle body.

In the present disclosure, as shown in FIG. 3, the vehicle 1 may further include a front lower crossmember 1210, and two ends of the front lower crossmember 1210 (or may be referred to as a second crossmember or No. 2 crossmember) are respectively connected to the two front compartment battery pack mounting members 5000. The front lower crossmember 1210 is a crossmember connected to a lower end of a front panel 1200 on the vehicle. The two front compartment battery pack mounting members 5000 are connected to the front lower crossmember 1210 as an integral part. Therefore, a force transmission path extending along the left-right direction of the vehicle body is formed between the two front compartment battery pack mounting members 5000 and the front lower crossmember 1210, thereby increasing a force transmission area and effectively transmitting the impact force during a side impact. In addition, the reliability of mounting the battery pack 4000 and the overall rigidity of the vehicle body is improved, thereby facilitating the impact force transmission and dispersion in the front-rear direction. By increasing the front rigidity of the force transmission plane, a front impact may be effectively withstood, thereby improving the anti-collision performance of the vehicle.

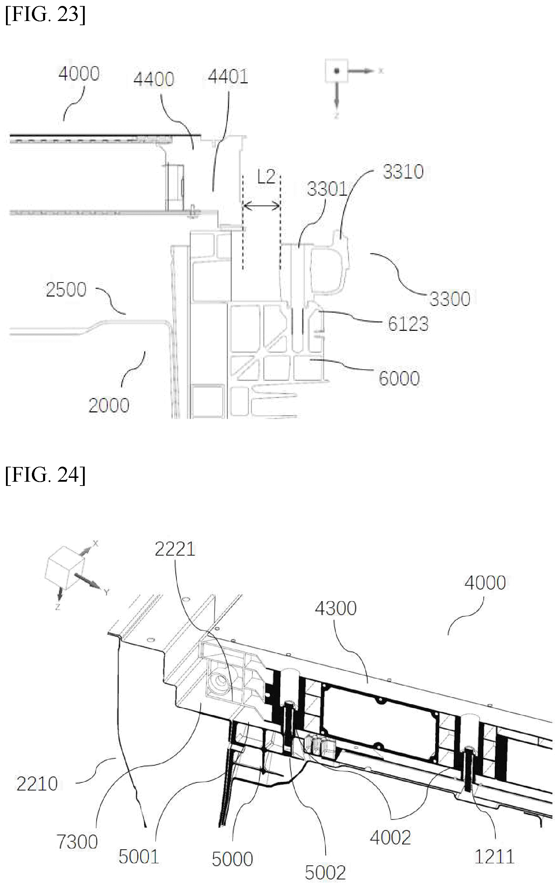

As shown in FIG. 3, FIG. 10 and FIG. 24, the front lower crossmember 1210 is provided with a lower crossmember battery pack mounting surface 1212 (that is, a crossmember mounting surface 1212), and the lower crossmember battery pack mounting surface 1212 is adapted to be connected to the battery pack 4000. In other words, in the present disclosure, in addition to setting mounting points of the battery pack 4000 on the battery pack mounting members 5000 and 6000 and/or the sill beams 2100, mounting points (that is, battery pack mounting points 211 on the lower crossmember of the front panel shown in FIG. 24) on the lower crossmember (that is, the front lower crossmember 1210) may also be arranged for mounting the battery pack 4000. This can further improve the reliability of mounting the battery pack 4000, and improve the integration of the battery pack 4000, the battery pack mounting members 5000 and 6000, the sill beam 2100, and the front lower crossmember 1210, thereby further improving the rigidity of the vehicle body and the force transmission effect.

In addition, this design allows for a tighter connection between the front lower crossmember 1210 and the battery pack 4000, and the force on the front side of the vehicle may be transmitted to the battery pack 4000 via the front lower crossmember 1210, thereby extending the force transmission path.

Optionally, the lower crossmember battery pack mounting surface 1212 and the battery pack mounting surface 7300 on the battery pack mounting portion 7000 may be located on a same horizontal plane. Refer to FIG. 3 to FIG. 28. The lower crossmember battery pack mounting surface 1212 and the battery pack mounting surface 7300 may all be located on a same horizontal plane.

This design allows for a tighter connection between the lower crossmember (the front lower crossmember 1210) and the battery pack 4000; facilitates better sealing of the battery pack 4000 and the vehicle body; and ensures smoother impact force transmission between the front compartment battery pack mounting member 5000, the battery pack 4000, and the rear compartment battery pack mounting member 6000, thereby eliminating the deflection torque, preventing additional burden on the battery pack 4000, and preventing damage to the battery pack 4000 due to the deflection torque. In addition, gaps between the battery pack 4000 and other components may be reduced, to ensure better integration with the vehicle body, that is, ensure better integration of the battery pack 4000 with the vehicle body.

In the present disclosure, as shown in FIG. 1 to FIG. 3, the vehicle 1 includes two A-pillars 2300 spaced apart in the width direction of the vehicle, and the front compartment battery pack mounting members 5000 are connected to the corresponding A-pillars 2300. In other words, the front compartment battery pack mounting member 5000 located on the left side of the vehicle may be connected to the A-pillar 2300 located on the left side of the vehicle, and the front compartment battery pack mounting member 5000 located on the right side of the vehicle may be connected to the A-pillar 2300 located on the right side of the vehicle. By connecting to the A-pillars 2300, the force transmission path of the vehicle may be extended. In addition, the battery pack 4000, the A-pillar 2300, the sill beam 2100, and the front compartment battery pack mounting member 5000 may be better integrated together, thereby improving the reliability of mounting the battery pack 4000 and the overall rigidity of the vehicle.

When the front compartment battery pack mounting member 5000 is directly connected to the sill beam 2100, the front side member 1100, the A-pillar 2300, and the battery pack 4000, and the front compartment battery pack mounting member 5000 is an integral part, the force may be better transmitted among the foregoing components, and the strength of connection points is also high, resulting in better integrity and rigidity of the battery pack 4000, the A-pillar 2300, the sill beam 2100, and the front compartment battery pack mounting member 5000 as a whole.

In addition, the battery pack 4000 is a large component located under the vehicle body, and the A-pillars 2300 and the sill beams 2100 are located on both sides of the front part of the vehicle. This connection method allows the entire battery pack 4000 to strengthen the rigidity of this part of the structure, thereby integrating the front side of the vehicle into a whole. This can improve the rigidity of the front side of the vehicle, suppress vehicle deformation during driving, improve the driving and riding experience, and improve the safety of the vehicle.

In addition, in an event of collision, the battery pack 4000, the A-pillar 2300, the sill beam 2100, and the front compartment battery pack mounting member 5000 are connected together to form a vertical annular structure. This not only increases the torsional rigidity of the vehicle body, but also through this vertical annular structure, suppresses the torsional torque generated between the front side member 1100 and the battery pack 4000 in the vertical direction during front-end collision (as the vertical deflection torque is generated due to a vertical gap between the front side member 1100 and the battery pack 4000). Therefore, this design effectively suppresses the overturning torque of the front side member 1100 in the vertical direction during collision, prevents damage to the passenger compartment, and protects the battery pack 4000 from being damaged by component deflection.

The projection of the front battery pack mounting member 5000 in the width direction of the vehicle at least partially overlaps the projection of the A-pillar 2300 in the width direction of the vehicle, thereby increasing the reliability of the connection and impact force transmission between the front battery pack mounting member 5000 and the A-pillar 2300.

The front compartment battery pack mounting member 5000 may be directly connected or indirectly connected to the corresponding A-pillar 2300. This is not limited in the present disclosure.

In the present disclosure, the front lower crossmember 1210 may be integrally formed, so that the battery pack mounting member and the front lower crossmember 1210 are both integral parts, thereby narrowing connection gaps, preventing the connection from breaking under force, and better improving the rigidity after the integral parts are connected to the battery pack 4000.

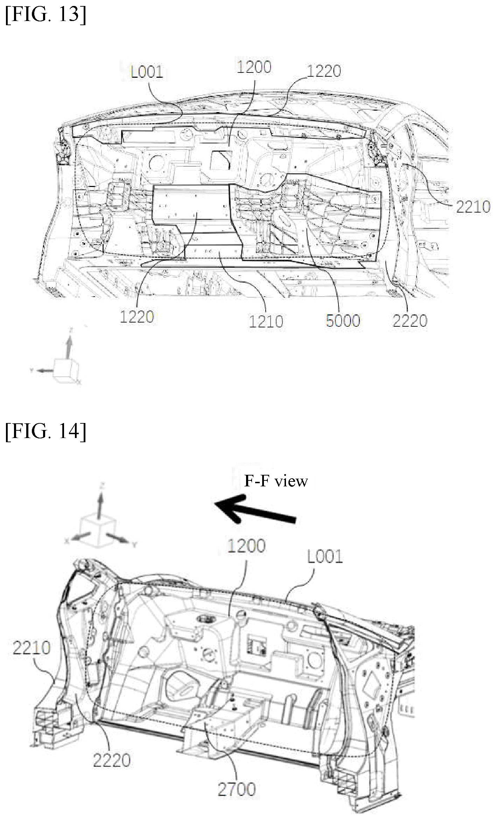

In the present disclosure, as shown in FIG. 1 and FIG. 13, the vehicle 1 further includes a front upper crossmember 1220 (that is, the first crossmember 1220). Two ends of the front upper crossmember 1220 are connected to the two A-pillars 2300, that is, a left end of the front upper crossmember 1220 is connected to the A-pillar 2300 located on the left side of the vehicle, and a right end of the front upper crossmember 1220 is connected to the A-pillar 2300 located on the right side of the vehicle. By integrating the front upper crossmember 1220 with the two A-pillars 2300 into a whole, the rigidity of the vehicle body in the front side can be improved, especially the rigidity of the vehicle body on a front upper side. In addition, the torsional torque of the front side member 1100 and the battery pack 4000 in the vertical direction is suppressed during the front-end collision.

As shown in FIG. 1 and FIG. 12 to FIG. 15, in the present disclosure, in the height direction of the vehicle, the front upper crossmember 1220 is spaced apart from the front lower crossmember 1210, and the two front battery pack mounting members 5000, the front lower crossmember 1210, the front upper crossmember 1220, and the two A-pillars 2300 are connected to form a first annular structure L001. In this way, by forming the first annular structure L001, the rigidity of the vehicle on the front side can be effectively improved, and especially the deformation of the vehicle body on the front side in the height direction can be suppressed. The vertical annular structure can also suppress the torsional torque of the front side member 1100 and the battery pack 4000 in the vertical direction during the front-end collision.

As shown in FIG. 1, FIG. 13 and FIG. 14, the vehicle 1 further includes a front panel 1200. Two ends of the front panel 1200 may be connected to the two A-pillars 2300. To be specific, left and right ends of the front panel 1200 may be respectively connected to the corresponding A-pillars 2300, and upper and lower ends of the front panel 1200 may be respectively connected to the upper crossmember of the front panel 1200 and the lower crossmember of the front panel 1200. In other words, the front panel 1200 may be arranged within a space defined by the first annular structure L001 (that is, within a hollow area of the first annular structure). By combining the front panel 1200 with the first annular structure, a surface is formed, to greatly improve the rigidity of the vehicle body.

In the present disclosure, the front panel 1200 may be integrally formed, to simplify processing and improve the rigidity.

In the present disclosure, the front panel 1200 and the front upper crossmember 1220 may be integrally formed, thereby facilitating processing and simplifying assembly. In addition, the integrally formed structure can better improve the rigidity.

Optionally, a cavity may be formed at a connecting portion between the front panel 1200 and the front upper crossmember 1220, and left and right ends of the cavity may be respectively connected to spaces between an inner side panel 2220 and an outer side panel 2210 of the vehicle.

In the present disclosure, as shown in FIG. 1, FIG. 4, FIG. 9, FIG. 14 and FIG. 15, the vehicle 1 may further include a center console 2700. The center console 2700 extends along the front-rear direction of the vehicle and the center console 2700 is connected to the front lower crossmember 1210. By connecting the center console 2700 to the front lower crossmember 1210, the force transmission path of the vehicle in the front-rear direction can be extended, and the rigidity of the vehicle body can be improved. In addition, by setting the center console 2700, the deflection of the front lower crossmember 1210 in the vertical direction can be suppressed. Due to the long center console 2700 in the front-rear direction, the effect can be achieved.

In the present disclosure, as shown in FIG. 12, FIG. 17 and FIG. 18, the vehicle 1 further includes a rear lower crossmember 3210 (that is, the rear crossmember 3210), and two ends of the rear lower crossmember 3210 are respectively connected to the corresponding rear compartment battery pack mounting members 6000. In this design, the front lower crossmember 1210, the two front compartment battery pack mounting members 5000, the two sill beams 2100, the two rear compartment battery pack mounting members 6000, and the rear lower crossmember 3210 are connected to form an annular structure, that is, a bottom annular structure (or may be referred to as a sixth annular structure L006, as shown in FIG. 12).

The rear lower crossmember 3210 is a crossmember connected to a lower end of a rear panel 3200 on the vehicle. The rear lower crossmember 3210 is connected to the two rear battery pack mounting members 6000 as an integral part. Therefore, a force transmission path may be extended, a force transmission path extending along the left-right direction of the vehicle body is formed between the two rear compartment battery pack mounting members 6000 and the rear lower crossmember 3210, thereby effectively transmitting the impact force during a side impact. In addition, the reliability of mounting the battery pack 4000 and the overall rigidity of the vehicle body is improved.

In addition, by forming the foregoing bottom annular structure and mounting the battery pack 4000, the rigidity of the vehicle can be effectively improved, especially the rigidity of the vehicle body on the rear side, thereby suppressing the deformation of the vehicle body on the rear side in the height direction.

Optionally, the rear lower crossmember 3210 may be integrally formed with good rigidity, to improve the overall rigidity of the vehicle body. When components on the annular structure are mostly integrally formed, the effect on improving the rigidity of the vehicle is more significant.

In the present disclosure, in the height direction of the vehicle, the rear lower crossmember 3210 may be spaced apart from the battery pack 4000. In this way, the two rear battery pack mounting members 6000, the battery pack 4000, the rear upper crossmember 3220, and the rear lower crossmember 3210 may form an annular structure in the vertical direction, thereby improving the rigidity of the vehicle and suppressing vehicle deformation.

The rear compartment battery pack mounting members 6000, the rear upper crossmember 3220, and the rear lower crossmember 3210 may all be integral parts, and together with the battery pack 4000, form the foregoing annular structure, thereby ensuring high strength and rigidity of the annular structure, and exerting a significant effect on improving the rigidity of the vehicle.

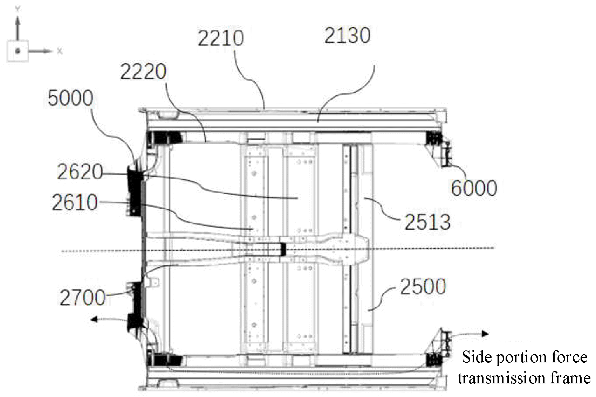

As shown in FIG. 4, FIG. 5, FIG. 9 and FIG. 10, in the present disclosure, the vehicle 1 may further include a rear floor crossmember 2510 (or may be referred to as a rear floor 2500 or a second connecting plate 2500), the rear floor crossmember 2510 is provided with a rear floor battery pack mounting surface 2516, and the rear floor battery pack mounting surface 2516 and the sill beam battery pack mounting surface 2104 on the sill beam 2100 are at a same horizontal plane. By connecting the rear floor crossmember 2510 to the battery pack 4000, a quantity of mounting points for the battery pack 4000 may be increased, thereby improving the reliability of mounting the battery pack 4000, and improving the overall rigidity of the entire vehicle.

This design allows for a tighter connection between the rear floor crossmember 2510 and the battery pack 4000; facilitates better sealing of the battery pack 4000 and the vehicle body; and ensures smoother impact force transmission between the front compartment battery pack mounting member 5000, the battery pack 4000, and the rear compartment battery pack mounting member 6000, thereby eliminating the deflection torque, preventing additional burden on the battery pack 4000, and preventing damage to the battery pack 4000 due to the deflection torque. In addition, gaps between the battery pack 4000 and other components may be reduced, to ensure better integration with the vehicle body, that is, ensure better integration of the battery pack 4000 with the vehicle body.

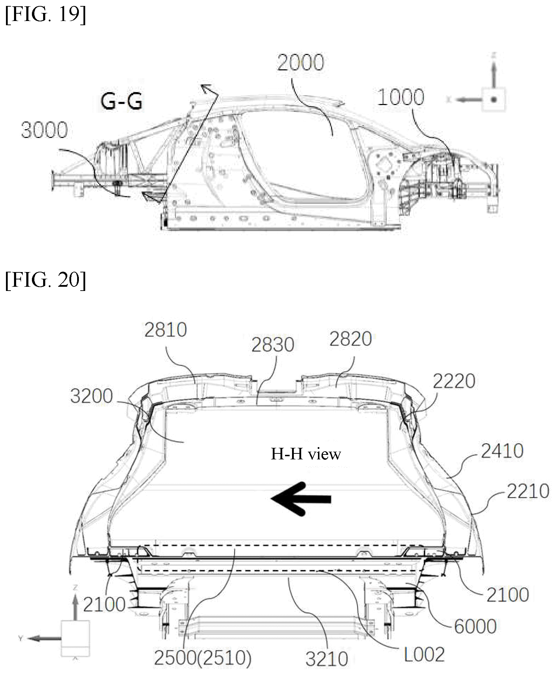

In the present disclosure, as shown in FIG. 20, two ends of the rear floor crossmember 2510 are respectively connected to the corresponding sill beams 2100. The rear floor crossmember 2510, the two sill beams 2100, and the rear lower crossmember 3210 are connected to form a second annular structure L002. To be specific, a left end of the rear floor crossmember 2510 may be connected to the sill beam 2100 located on the left side of the vehicle, and a right end of the rear floor crossmember 2510 may be connected to the sill beam 2100 located on the right side of the vehicle. By forming the second annular structure L002, the rigidity of the vehicle at the bottom can be effectively improved, especially the deformation of the vehicle at the bottom can be suppressed, thereby protecting the battery pack 4000, and improving the reliability and safety of mounting the battery pack 4000.

As shown in FIG. 10 and FIG. 20, in the present disclosure, the vehicle 1 may further include a rear middle floor crossmember 2513, two ends of the rear middle floor crossmember 2513 are respectively connected to the corresponding sill beams 2100. By setting the middle crossmember to connect to the sill beams 2100, a lateral force transmission path can be extended, and the rigidity of the vehicle can be improved, especially the rigidity of the vehicle at the bottom.

In the present disclosure, as shown in FIG. 2 and FIG. 11, the rear middle floor crossmember 2513 may be connected to the battery pack 4000, thereby increasing the mounting points for the battery pack 4000 and connecting the battery pack 4000 to the rear middle floor crossmember 2513, to further improve the rigidity of the vehicle.

Optionally, in the front-rear direction of the vehicle, the rear middle floor crossmember 2513 is disposed between the front lower crossmember 1210 and the rear lower crossmember 3210 of the vehicle. By using the rear middle floor crossmember 2513 between the front lower crossmember 1210 and the rear lower crossmember 3210, the annular structure between the front lower crossmember 1210 and the rear lower crossmember 3210 can be further strengthened.

In the present disclosure, in the front-rear direction of the vehicle, the rear middle floor crossmember 2513 is connected to the rear floor crossmember 2510. The two crossmembers reinforce each other. When the rear floor crossmember 2510 and the battery pack 4000 are sealed, the battery pack 4000 is connected to the rear middle floor crossmember 2513. The closer two crossmembers indicate a tighter connection.

As shown in FIG. 1, FIG. 7, FIG. 17, FIG. 18 and FIG. 20, in the present disclosure, the vehicle 1 further includes two C-pillars 2400 spaced apart in the width direction of the vehicle, and the two C-pillars 2400 are respectively connected to the corresponding rear compartment battery pack mounting members 6000. That is, the rear battery pack mounting member 6000 located on the left side of the vehicle may be connected to the C-pillar 2400 located on the left side of the vehicle, and the rear battery pack mounting member 6000 located on the right side of the vehicle may be connected to the C-pillar 2400 located on the right side of the vehicle. By connecting to the C-pillar 2400, the force transmission path of the vehicle can be extended. In addition, the C-pillar 2400, the sill beam 2100, and the rear battery pack mounting member 6000 can be better integrated together, to improve the reliability of mounting the battery pack 4000 and the overall rigidity of the vehicle, especially the rigidity of the vehicle on the rear side.

When the rear compartment battery pack mounting member 6000 is directly connected to the sill beam 2100, the rear side member 3100, the C-pillar 2400, and the battery pack 4000, and the rear compartment battery pack mounting member 6000 is an integral part, the force may be better transmitted among the foregoing components, and the strength of connection points is also high, resulting in better integrity and rigidity of the battery pack 4000, the C-pillar 2400, the sill beam 2100, and the rear compartment battery pack mounting member 6000 as a whole.

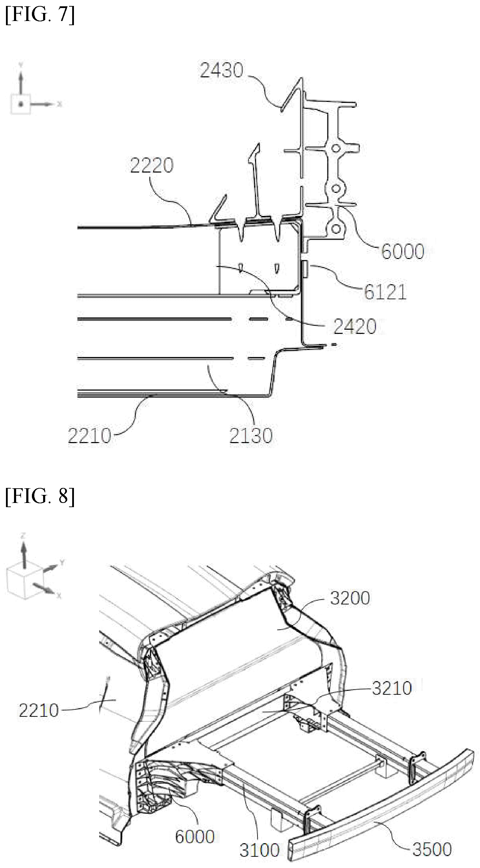

As shown in FIG. 7, a projection of the C-pillar 2400 in the front-rear direction of the vehicle at least partially overlaps a projection of the corresponding rear battery pack mounting member 6000 in the front-rear direction of the vehicle, contributing to impact force transmission and dispersion in the front-rear direction, thereby ensuring smoother force transmission.

The rear compartment battery pack mounting member 6000 may be directly connected or indirectly connected to the corresponding C-pillar 2400. This is not limited in the present disclosure.

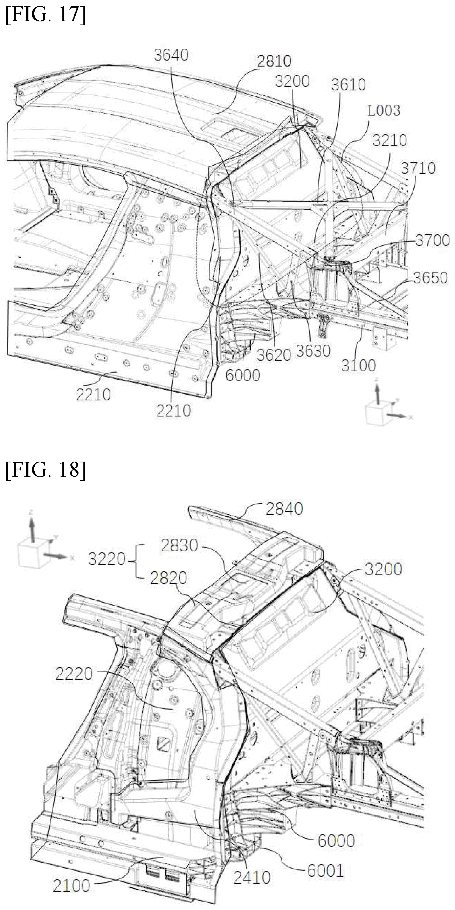

As shown in FIG. 17 and FIG. 18, the vehicle 1 further includes a rear upper crossmember 3220, two ends of the rear upper crossmember 3220 are respectively connected to the corresponding C-pillars 2400, and the rear upper crossmember 3220, the two C-pillars 2400, the rear lower crossmember 3210, and the two rear compartment battery pack mounting members 6000 are connected to form a third annular structure L003. To be specific, a left end of the rear upper crossmember 3220 is connected to the C-pillar 2400 located on the left side of the vehicle, and a right end of the rear upper crossmember 3220 is connected to the C-pillar 2400 located on the right side of the vehicle. By integrating the rear upper crossmember 3220 with the two C-pillars 2400 into a whole, the rigidity of the vehicle on the rear side can be improved, especially the rigidity of the vehicle on the rear upper side.

In addition, by forming the third annular structure L003, the rigidity of the vehicle on the rear side can be effectively improved, especially the deformation of the vehicle body on the rear side in the height direction can be suppressed.

In the present disclosure, refer to FIG. 12. In the vertical direction, the vehicle body has two annular structures spaced apart in the vertical direction of the vehicle, namely, the first annular structure L001 and the third annular structure L003. The upper sides of the first annular structure and the third annular structure may be connected via a roof 2810 of the vehicle body, and the lower sides may be connected via the battery pack 4000 and the sill beam 2100 (with an extra bottom annular structure at the bottom of the vehicle body), thereby forming a frame with extremely high strength, to greatly improve the rigidity of the vehicle.

In addition, the roof is provided with a roof side member, and the roof may be integrally formed, resulting in extremely high structural strength. Therefore, the components on the upper side of the vehicle body have high strength, and the battery pack 4000 also has high strength. When the rear lower crossmember 3210, the front lower crossmember 1210, the front panel 1200, and the battery pack mounting members 5000 and 6000 are all integrally formed, the overall strength of the vehicle is extremely high. In addition, the frame formed subsequently also has high strength, and the rigidity can meet the requirements.

In addition, in the present disclosure, two ends of the rear panel 3200 are connected to side panels and the C-pillars 2400. In this way, the annular structure between the rear lower crossmember 3210, the C-pillars 2400, and the rear upper crossmember 3220 is filled by the rear panel 3200, forming a surface structure with good rigidity.

In the present disclosure, a cavity may be provided between the rear lower crossmember 3210 and the battery pack 4000, where the cavity may be used for ventilation and heat dissipation of an on-board charger.

In the present disclosure, to ensure the strength and reliability of mounting the battery pack 4000, in an optional embodiment, the battery pack 4000 may be directly connected to a plurality of battery pack mounting members 5000 and 6000 (that is, the front compartment battery pack mounting member 5000 and the rear compartment battery pack mounting member 6000), thereby improving the connection strength of the connection points and improving the effect of the battery pack 4000 combined with the battery pack mounting members 5000 and 6000. In addition, the quantity of components may be further reduced and the structure may be simplified.

As shown in FIG. 3, in an embodiment in which a front end of the battery pack 4000 is connected to the two front compartment battery pack mounting members 5000 arranged in the width direction of the vehicle, and a rear end of the battery pack 4000 is connected to the two rear compartment battery pack mounting members 6000 arranged in the width direction of the vehicle, the front end of the battery pack 4000 may be directly connected to the two front compartment battery pack mounting members 5000, and the rear end of the battery pack 4000 may be directly connected to the two rear compartment battery pack mounting members 6000.

Similarly, the battery pack 4000 may be directly connected to the front lower crossmember 1210, the sill beam 2100, and the rear middle floor crossmember 2513 of the vehicle, to improve the connection strength between the battery pack 4000 and the foregoing three components, thereby improving the effect of the battery pack 4000 combined with the foregoing components.

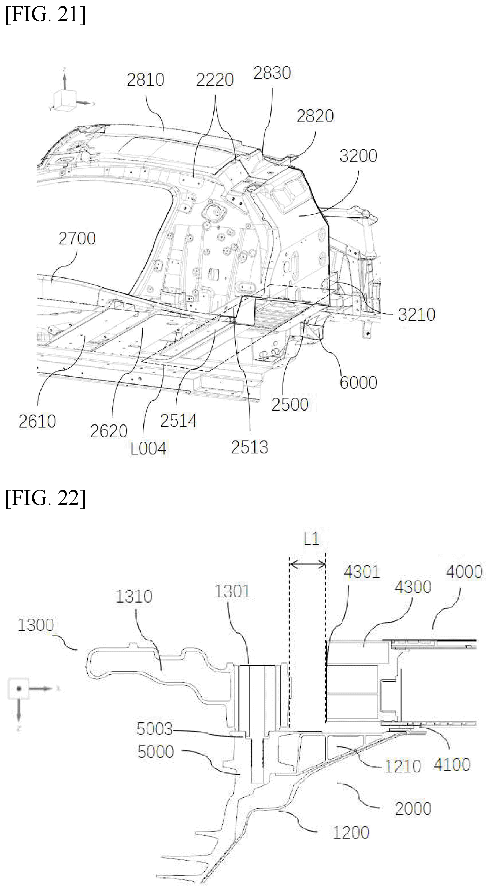

As shown in FIG. 21, in the present disclosure, the rear middle floor crossmember 2513, the two sill beams 2100, and the rear lower crossmember 3210 are connected to form a fourth annular structure L004. The annular structure is formed, to improve the strength of the vehicle, especially the structural strength of the vehicle body at the bottom.

As shown in FIG. 4, FIG. 5 and FIG. 21, in the present disclosure, the rear middle floor crossmember 2513 is located on a front side of the rear compartment battery pack mounting member 6000. In this way, in the front-rear direction of the vehicle, the rear middle floor crossmember 2513 and the rear compartment battery pack mounting member 6000 can provide mounting points for the battery pack 4000 in the front-rear direction of the vehicle, thereby improving the reliability of mounting the battery pack 4000.

As mentioned above, refer to FIG. 10. At the bottom of the vehicle, the battery pack 4000, the two sill beams 2100, the rear middle floor crossmember 2513, and the two rear compartment battery pack mounting members 6000 are defined to form an annular structure.

In the present disclosure, as shown in FIG. 2, at least a part of an upper surface 4001 of the battery pack 4000 (for example, a part of an upper surface of a cover of the battery pack 4000 may be the upper surface 4001 of the battery pack) is formed as a vehicle floor. This design helps to save a Z-direction space at the bottom of the vehicle and increases the receiving space for the battery pack 4000 at the bottom of the vehicle, thereby increasing the capacity of the battery pack 4000 and the endurance capacity of the vehicle, simplifying the vehicle body structure, and contributing to vehicle lightweighting.

To achieve sealed mounting of the battery pack 4000 on the vehicle, especially when the part of the upper surface of the battery pack 4000 is formed as the vehicle floor, as shown in FIG. 10, the vehicle further includes a sealing member 4100. The battery pack 4000 is connected to the battery pack mounting surfaces 7300, 2104, 1212, and 2516 on the vehicle through sealing via the sealing member 4100. The battery pack mounting surfaces on the vehicle may include any one or more of the following: the battery pack mounting surface 7300 on the battery pack mounting member 5000 or 6000, the sill beam battery mounting surface 2104 on the sill beam 2100, the lower crossmember battery pack mounting surface 1212 on the front lower crossmember 1210, and the rear floor battery pack mounting surface 2516 on the rear floor crossmember 2510. In this way, the sealing member 4100 can prevent substances such as air or water outside the vehicle from entering the interior of the vehicle (the passenger compartment).

As shown in FIG. 10, in the present disclosure, the vehicle 1 further includes a rear floor crossmember 2510. The two sill beams 2100, the two front compartment battery pack mounting members 5000, the front lower crossmember 1210, and the rear floor crossmember 2510 are connected to form a fifth annular structure L005. The fifth annular structure L005 has a hollow area L0051, and an upper surface of the battery pack 4000 covers a part of the hollow area L0051 to form the vehicle floor. By forming the fifth annular structure L005, the rigidity of the vehicle at the bottom can be improved. The fifth annular structure is connected to an annular structure of a frame of the battery pack 4000, to greatly improve the connection strength of the battery pack 4000 and the integration of the vehicle body and the battery pack 4000.

In the present disclosure, as shown in FIG. 17 and FIG. 18, the vehicle may further include a front support beam 3640, one end of the front support beam 3640 is connected to the rear upper crossmember 3220, and the other end of the front support beam 3640 is connected to the rear side member 3100. By setting the front support beam 3640, a force transmission path along the front-rear direction may be added to the rear of the vehicle, except the rear side member 3100, thereby contributing to impact force transmission and dispersion in the front-rear direction.

As shown in FIG. 17 and FIG. 18, the vehicle may further include a rear wheel housing 3700, and the rear wheel housing 3700 is connected to the rear side member 3100. The other end of the front support beam 3640 is also connected to the rear wheel housing 3700. That is, the front support beam 3640 may transmit the force through the wheel housing (that is, the rear wheel housing 3700), thereby improving the force dispersion effect.

As shown in FIG. 17, the front support beam 3640 may be spaced apart from the rear side member 3100 in the height direction of the vehicle. In this way, in the up-down direction of the vehicle, the vehicle has two force transmission paths spaced apart from each other, thereby facilitating impact force transmission at different positions of the vehicle.

As shown in FIG. 17, the vehicle may further include a rear support beam 3650, one end of the rear support beam 3650 is connected to the rear wheel housing 3700, and the other end of the rear support beam 3650 is connected to the rear side member 3100. In this design, the rear support beam 3650 is utilized and the force is transmitted on an upward force transmission path via the side member, thereby achieving better effect.

As shown in FIG. 17, in the height direction of the vehicle, one end of the rear support beam 3650 is spaced apart from the rear side member 3100. In this way, in the up-down direction of the vehicle, the vehicle has two force transmission paths spaced apart from each other, thereby facilitating impact force transmission at different positions of the vehicle.

As shown in FIG. 17, the vehicle 1 further includes a rear wheel housing crossmember 3710, and two ends of the rear wheel housing crossmember 3710 are respectively connected to the two rear wheel housings 3700 that are spaced apart in the width direction of the vehicle. In this way, the two rear wheel housings 3700 may be integrated as a whole, thereby improving the rigidity of the wheel housings. In addition, the rear wheel housings 3700, the two rear side members 3100, the rear wheel housing crossmember 3710, and the rear lower crossmember 3210 may be connected to form a frame (that is, an annular structure), to improve the rigidity of the vehicle body, and especially the rigidity of the rear of the vehicle body. In addition, the rear wheel housings 3700, the two rear side members 3100, the rear wheel housing crossmember 3710, the two front support beams 3640, and the rear upper crossmember 3220 may also be connected to form the frame, to further improve the rigidity of the vehicle body.

As shown in FIG. 17, the vehicle 1 may further include a first reinforcement beam 3610, and the first reinforcement beam 3610 is connected to the front support beam 3640 and the wheel housing. In this way, the front support beam 3640, the rear wheel housing 3700, the rear wheel housing crossmember 3710, and the first reinforcement beam 3610 may be connected to form a frame structure, to strengthen the annular structure formed by the rear of the vehicle, improve the rigidity of the rear annular structure, and improve the rigidity of the entire vehicle body.

As shown in FIG. 17, in the present disclosure, the vehicle 1 may further include a second reinforcement beam 3620 and a third reinforcement beam 3630. Upper ends of the second reinforcement beam 3620 and the third reinforcement beam 3630 may be connected to the front support beam 3640, and lower ends of the second reinforcement beam 3620 and the third reinforcement beam 3630 may be connected to the rear compartment battery pack mounting member 6000, thereby extending the force transmission path and improving the rigidity of the vehicle.

Optionally, as shown in FIG. 17, the second reinforcement beam 3620, the third reinforcement beam 3630, and the front support beam 3640 may form a triangular structure, to improve the rigidity.

As shown in FIG. 3, in the present disclosure, the vehicle body structure further includes a No. 1 crossmember 1230, two ends (left and right ends) of the No. 1 crossmember 1230 are respectively connected to two front compartment battery pack mounting members 5000. In this way, the two front compartment battery pack mounting members 5000 may further be integrally formed, thereby improving the rigidity of the vehicle on the front side and extending the force transmission path. As shown in FIG. 3, the No. 1 crossmember 1230, the two front compartment battery pack mounting members 5000, and the front lower crossmember 1210 may be connected to form an annular structure.

Optionally, the No. 1 crossmember 1230 may have a profile structure.

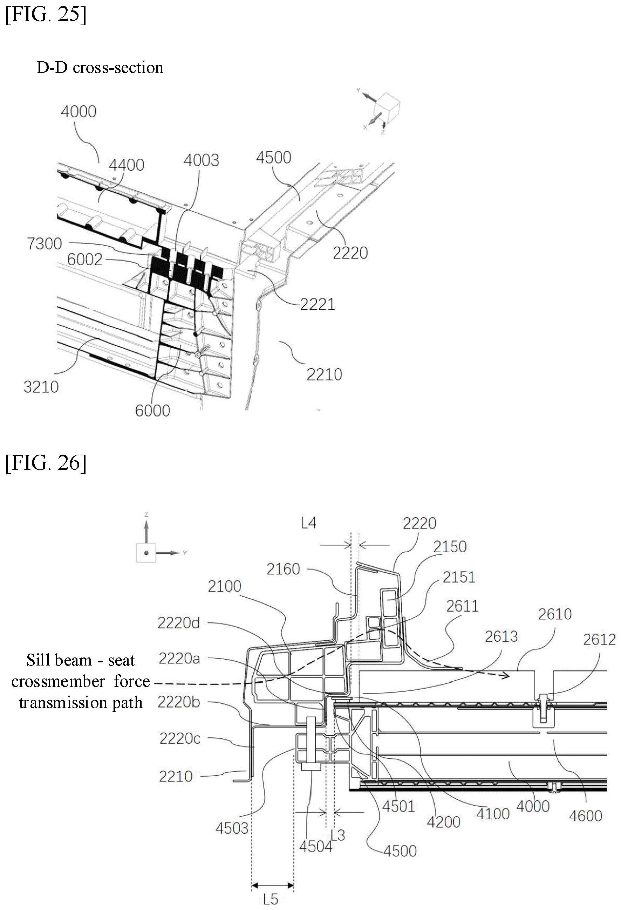

As shown in FIG. 24 and FIG. 25, in the present disclosure, the front compartment battery pack mounting member 5000 is provided with a first mounting portion (or may be referred to as a lower end face 5001 of a rear section of the front side member, as shown in FIG. 24), and the first mounting portion is adapted to be connected to the front part of the battery pack 4000 (for example, a front mounting point 4002 of the battery pack, as shown in FIG. 24). The rear compartment battery pack mounting member 6000 is provided with a second mounting portion 6002, and the second mounting portion 6002 is adapted to be connected to the rear part of the battery pack 4000 (for example, a rear battery pack mounting point 4003, as shown in FIG. 24).

Optionally, the first mounting portion may be configured as a first mounting surface, and the second mounting portion may be configured as a second mounting surface. A first mounting hole (or may be referred to as a front side member battery pack mounting point 5002) is provided on the first mounting surface. The first mounting hole is adapted to cooperate with fasteners (such as bolts) for mounting a front battery pack crossmember 4300 of the battery pack 4000. A second mounting hole is provided on the second mounting surface. The second mounting hole is adapted to cooperate with fasteners (such as bolts) for mounting a rear battery pack crossmember 4400 of the battery pack 4000.

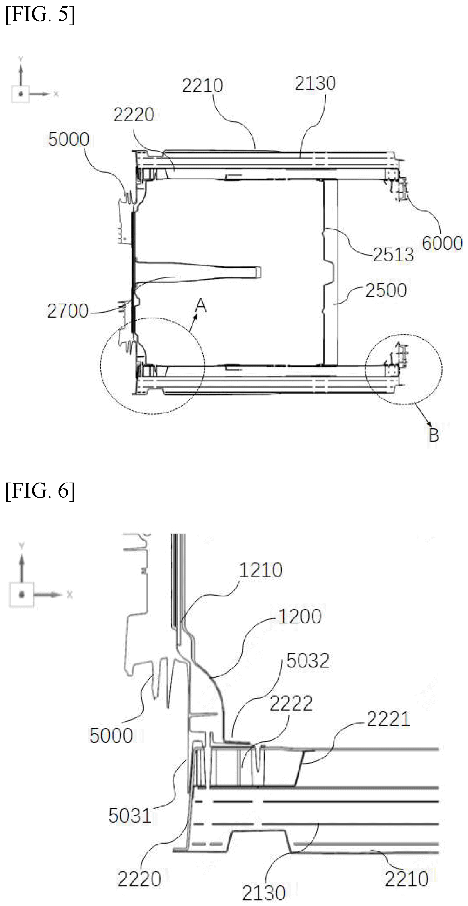

In the present disclosure, as shown in FIG. 6 and FIG. 7, the sill beam 2100 (or referred to as a sill) includes a main body beam and a sill reinforcement beam 2130 located within the main body beam. The sill beam 2100 further includes an inner sill plate and an outer sill plate, and the inner sill plate and the outer sill plate form the main body beam.

The inner side panel 2220 of the vehicle is integrally formed with the inner sill plate, indicating that the lower part of the inner side panel 2220 and the part corresponding to the sill reinforcement beam 2130 are formed as the inner sill plate 2110. The outer side panel 2210 of the vehicle is integrally formed with the outer sill plate, indicating that the lower part of the outer side panel 2210 and the part corresponding to the sill reinforcement beam 2130 are formed as the outer sill plate.

As shown in FIG. 6, the front compartment battery pack mounting member 5000 is further provided with a third mounting portion 5031 and a fourth mounting portion 5032. The third mounting portion 5031 abuts against a side of the inner side panel 2220 (the inner sill plate) facing the passenger compartment. The fourth mounting portion 5032 is connected to the inner side panel 2220 and the sill reinforcement beam 2130 through a first fastener. The sill reinforcement beam 2130 is located in a cavity enclosed by the inner side panel 2220 and the outer side panel 2210.

As shown in FIG. 6, the vehicle further includes an inner side panel reinforcement block 2222 (that is, an inner sill reinforcement profile 2140) located in the cavity. One end of the first fastener passes through the fourth mounting portion 5032, the inner side panel 2220, and the inner side panel reinforcement block 2222 in sequence, and is fastened to the sill reinforcement beam 2130.

As shown in FIG. 6, the third mounting portion 5031 extends along the width direction of the vehicle body frame, and the fourth mounting portion 5032 extends along the length direction of the vehicle body frame.

As shown in FIG. 7, the C-pillars 2400 of the vehicle may include an inner C-pillar 2420 (that is, a side reinforcement member 2420 below) and an outer C-pillar 2430 (that is, an intermediate connecting member 2430 below). The inner C-pillar 2420 is connected to the sill reinforcement beam 2130 and is located in the cavity enclosed by the inner side panel 2220 and the outer side panel 2210. The rear compartment battery pack mounting member 6000 is also provided with a fifth mounting portion 6121. The fifth mounting portion 6121 abuts against a rear end of the inner side panel 2220 and the fifth mounting portion 6121 is connected to the inner C-pillar 2420 via a second fastener, and the outer C-pillar 2430 is connected to the inner side panel 2220 and the inner C-pillar 2420 via a third fastener.

As shown in FIG. 7, the fifth mounting portion 6121 may extend along the width direction of the vehicle.

As shown in FIG. 9, the front lower crossmember 1210 is adapted to be connected to the front battery pack crossmember 4300.

In the length direction of the vehicle, the front lower crossmember 1210 is configured to have a first overlapping area with the front battery pack crossmember 4300 (that is, an overlapping area C in FIG. 9), and the rear lower crossmember 3210 is adapted to be connected to the rear battery pack crossmember 4400. In the length direction of the vehicle, the front lower crossmember 3210 is configured to have a second overlapping area with the rear battery pack crossmember 4400 (that is, an overlapping area D in FIG. 9). Optionally, a length of the first overlapping area in the length direction of the vehicle body frame is 80 mm to 120 mm, and a length of the second overlapping area in the length direction of the vehicle body frame is 80 mm to 120 mm. By setting the first overlapping area and second overlapping area, the battery pack 4000 is provided with side protection.

In the present disclosure, as shown in the figure, the vehicle may further include a front seat crossmember 2630, a rear seat crossmember 2620, a middle floor crossmember 2513, and a middle floor crossmember reinforcement beam 2514.

The middle floor crossmember 2513 is located behind the rear seat crossmember 2620, and two ends of the middle floor crossmember 2513 are respectively connected to two inner side panels 2220 of the vehicle body frame (connected to the two sill beams 2100). The center console 2700 is connected from front to rear to the No. 1 crossmember 1230, the front lower crossmember 1210, the front seat crossmember 2630, the rear seat crossmember 2620, the middle floor crossmember 2513, and the middle floor crossmember reinforcement beam 2514.

In this way, the center console 2700 covers the plurality of crossmembers from front to rear, and the center console 2700 reinforces the first annular structure L001 at the front of the vehicle and the sixth annular structure L006 at the bottom from front to rear, forming a "through" structure of the center console 2700. As shown in FIG. 9, the center console 213 and a center console sealing plate form a closed cavity structure at the front.

When the seat assembly of the vehicle (not shown in the figure, which may be mounted on the front seat crossmember 2630 and the rear seat crossmember 2620) is subjected to Z-direction load (such as high-speed rapid acceleration and deceleration), the covering structure of the center console 2700 minimizes the risk of the seats being pulled up. In addition, the "through" structure of the center console 2700 facilitates front and side impact force transmission and dispersion.

As shown in FIG. 9, the interior of the No. 1 crossmember 1230 is hollow and provided with reinforcement ribs, and the reinforcement ribs may be flush with a front upper surface of the center console 2700.

As shown in FIG. 9, the front end of the No. 1 crossmember 1230 has an inclined surface, and an upper end of the inclined surface is located in front of a lower end of the inclined surface. This arrangement facilitates avoiding the routing of the vehicle, for example, avoiding the routing of motors.

In the present disclosure, a solution is adopted in which the battery pack 4000 has no vehicle body parts obstructing the front and rear, and can extend forward toward a front subframe and backward toward a rear subframe for increasing the capacity of the battery pack 4000.

Optionally, as shown in FIG. 22, the front battery pack mounting member 5000 may be provided with mounting points for mounting the front subframe, that is, a sixth mounting portion 5003, and the rear battery pack mounting member 6000 may be provided with mounting points for mounting the rear subframe, that is, a seventh mounting portion 6123.

For example, refer to FIG. 22. The front battery pack mounting member 5000 is provided with the sixth mounting portion 5003, and the sixth mounting portion 5003 is used for mounting the front subframe (that is, a front subframe assembly 1300). The rear battery pack mounting member 6000 is also provided with the seventh mounting portion 6123, and the seventh mounting portion 6123 is used for mounting the rear subframe (that is, a rear subframe assembly 3300).

In the present disclosure, the battery pack mounting members 5000 and 6000 are located above and in front of a front end face of battery pack 4000, and the front lower crossmember 1210 of the vehicle frame is located above the front end face of battery pack 4000, so that the front end of battery pack 4000 may extend toward the front subframe of the vehicle body frame; and the rear compartment battery pack mounting member 6000 is located above and behind a rear end face of battery pack 4000, so that the rear end of battery pack 4000 may extend toward the rear subframe of the vehicle body frame. This design allows for greater mounting space for the battery pack 4000 in the front-rear direction of the vehicle, increases the capacity of the battery pack 4000, and improves the endurance capacity of the vehicle.

Optionally, as shown in FIG. 22, the front crossmember of the battery pack 4000 is mounted below the front lower crossmember 1210, and the front end face of the battery pack 4000 is the foremost front end of the battery pack 4000. A front subframe rear crossmember 1310 is mounted below the front compartment battery pack mounting member 5000, and a front subframe rear mounting point 1301 is the rearmost rear end of the front subframe assembly 1300. A gap L1 may be provided between the front end face 4301 of the front battery pack crossmember and the front subframe rear mounting point 1301, and a width of L1 may be 30 mm to 50 mm.

As shown in FIG. 22, the lower end face of the front lower crossmember 1210 is the lowest end profile of the front lower crossmember 1210, and all other profiles of this part are higher than the profile (in the Z direction). The lower end face of the front compartment battery pack mounting member 5000 is the lowest end profile of the front compartment battery pack mounting member 5000, and all other profiles of this part are higher than the profile (in the Z direction). That is, the front battery pack crossmember 4300 may be extended forward without being obstructed by the front mounting point of the battery pack 4000.

The rear battery pack crossmember 4400 is mounted below the rear compartment battery pack mounting member 6000, and the rear end face of the rear battery pack crossmember 4400 is the rearmost end of the battery pack 4000 assembly. The rear subframe front crossmember 3310 is mounted below the rear compartment battery pack mounting member 6000, and the rear subframe front mounting point 3301 (or referred to as the rear subframe mounting point 3301) is the frontmost end of the rear subframe assembly 3300. A gap L2 may be provided between the rear end face 4401 of the rear battery pack crossmember and the rear subframe front mounting point 3301, and a width of L2 may be 30 mm to 50 mm.

Specifically, the rear compartment battery pack mounting member 6000 has a rear subframe front mounting point 3301 in the middle and a battery pack rear mounting point in the front. The mounting point is located at the lowest end surface of the rear compartment battery pack mounting member 6000, and other surfaces of this part are higher than the mounting point (in the Z direction). That is, the rear battery pack crossmember 4400 may be extended rearward without being obstructed by the mounting point.

In conclusion, the battery pack 4000 may be extended in the front-rear direction of the vehicle body without being obstructed, or may be positioned upward to abut against a sealing plate of the battery pack 4000. The left and right sides may abut against a middle vertical surface of the inner side panel 2220. To be specific, the battery pack 4000 may maximize space utilization below the vehicle body, and further increase an actual quantity of batteries that the battery pack 4000 can carry by increasing the physical volume, ultimately achieving the goal of longer enduring capacity.

A "collapsable" lateral force transmission frame is employed in the present disclosure to achieve lateral load dispersion.

As shown in FIG. 26, the vehicle 1 further includes a connecting member. The front seat crossmember 2630 (that is, the seat crossmember 2610) and the rear seat crossmember 2620 (that is, the seat crossmember 2610) may be connected to the inner side panel 2220 via the connecting member. In addition, there are gaps between end portions of the front seat crossmember 2630 and the rear seat crossmember 2620 in the width direction of the vehicle body frame and the corresponding inner side panels 2220. The connecting member is a collapsable member.

The foregoing gap is provided to prevent the side panel of the vehicle from directly pressing against the front seat crossmember 2630 (and the sealing plate thereof) and the rear seat crossmember 2620 in the Y direction. Instead, a "collapsable" lateral force transmission frame is formed, thereby achieving lateral load dispersion and absorption. The "collapsable" lateral force transmission frame meets load requirements in the Y direction.

During mounting, the battery pack 4000 may be assembled with the front seat crossmember 2630 and the rear seat crossmember 2620 as a whole. Then, the assembled whole may be mounted onto the vehicle body from the bottom of the vehicle along the Z direction. This helps to minimize the gap between the battery pack 4000 and the vehicle body, and maximize the utilization of the space below the vehicle body for the arrangement of the battery pack 4000, thereby improving the enduring capacity.

As shown in FIG. 26, FIG. 56, and FIG. 57, the outer side panel 2210 and the inner side panel 2220 form a closed cavity, and a sill beam 2100 extends from front to rear is provided in the lower part of the cavity. A front connecting block 2151 with an X-direction position being close to that of the front seat crossmember 2630 is provided at the position of the front seat crossmember 2630, and a rear connecting block 2152 with an X-direction position being close to the rear seat crossmember 2620 is provided at the position of the rear seat crossmember 2620. The two connecting blocks are fastened to the sill beam 2100 via a front diagonal sill support beam.

Above the sealing plate of the battery pack 4000, there are two states of the force transmission between the side panel of the vehicle 11 and the seat crossmember 2610. Upper part: The force is transmitted from the sill beam 2100 via the connecting block and the front diagonal sill support beam, and then via a seat crossmember connecting plate 2611 to the seat crossmember 2610 (upper surface). Lower part: A Y-direction gap L4 is provided between the sill beam 2100 (specifically the inner side panel 2220) and the seat crossmember 2610 (specifically a side end panel 2613 of the seat crossmember), and a width of L4 may be 5 mm to 10 mm.

In conclusion, the upper part of the side panel and the seat crossmember 2610 of the vehicle are directly fixed by the connecting block, while the lower part is connected by using the gap L4. Therefore, when the side panel is subjected to the lateral load, the load is first transmitted through the upper half of the path, and after the load is damaged in the upper part, the energy is absorbed through the lower half of the path.

The present disclosure adopts a structure in which the seat crossmember 2610 and the inner side panel 2220 overlap in the Y direction, and the sill is fixed by both the seat crossmember 2610 and a frame of the battery pack 4000, to form a stable frame.

As shown in FIG. 26, in the present disclosure, optionally, in the width direction of the vehicle, the end portions of the front seat crossmember 2630 and the rear seat crossmember 2620 have an overlapping area with the corresponding inner side panel 2220 (the inner sill plate).

As shown in FIG. 26, two ends of the seat crossmember 2610 are closed with sealing plates, and the end portions of the crossmember have an overlapping area with the inner sill plate 2110 in the Y direction. Above the overlapping area, the inner side panel 2220 is internally provided with reinforcement components of the side panel assembly 2200, for example, a connecting block and a diagonal support beam (that is, the diagonal sill support beam 2150). When the seat crossmember is subjected to the upward load in the Z direction, the side panel protects the seat crossmember from being pulled up excessively and causing injury to the passengers.

As shown in FIG. 26 to FIG. 28, there are a plurality of Z-direction fixed connections between the assembly formed by the battery pack 4000, the front seat crossmember 2630, and the rear seat crossmember 2620 and the vehicle body, including between the seat crossmember connecting plate 2611 and the seat crossmember 2610, and between the battery pack side member 4500 and the inner side panel 2220 (the sill beam 2100). The foregoing plurality of fixed connections further improve the integrity of the battery pack 4000 and the vehicle body, thus forming a stable and integrated vehicle body-battery frame.

As shown in FIG. 11, FIG. 26 and FIG. 27, the front battery pack crossmember 4300 may be connected to the front compartment battery pack mounting member 5000 and/or the front lower crossmember 1210, and the rear battery pack crossmember 4400 may be connected to the rear compartment battery pack mounting member 6000. The left battery pack side member and the right battery pack side member may be respectively connected to the corresponding sill reinforcement beams 2130.

As shown in FIG. 26 to FIG. 28, in the present disclosure, the front seat crossmember 2630 and the rear seat crossmember 2620 are disposed above the upper cover of the battery pack and are arranged in parallel.

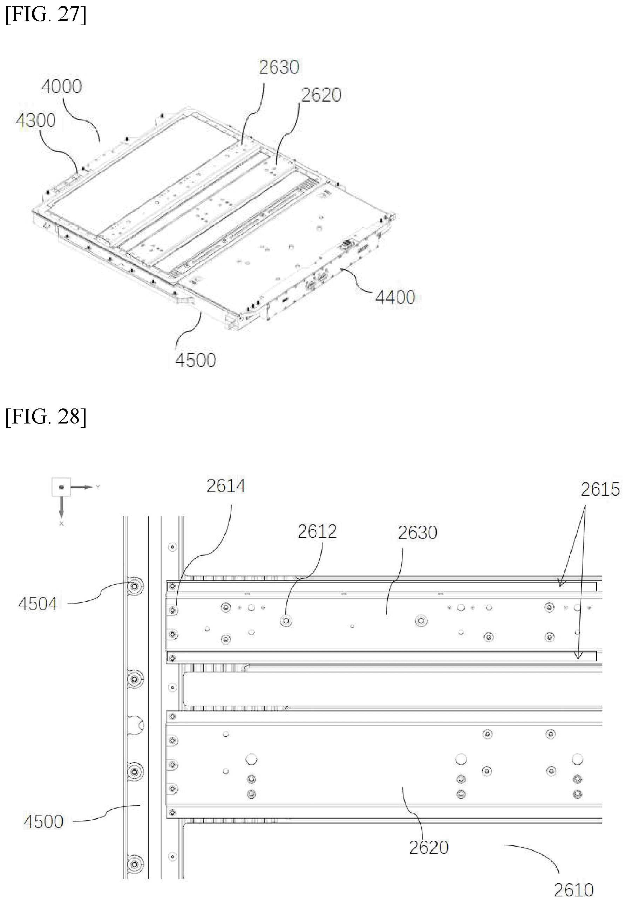

The front seat crossmember 2630 is used as an example. Left and right ends of the front seat crossmember 2630 are designed to overlap the battery pack side member 4500 in the Y direction, and are fixedly connected by two or more screws. The connection points (fixed end portion point 2614 of the seat crossmember as shown in FIG. 28) are located on the inner side of the battery pack side member 4500 (close to the interior of the vehicle) and are parallel to the mounting points of the battery pack 4000. In addition, a Y-direction gap between the mounting point of the battery pack 4000 and the screw is set to 50 mm to 100 mm. Optionally, the front seat crossmember 2630 may be made of aluminum alloy extrusion process, for example, a kou-shaped or a mu-shaped extruded profile; or may also be made of high-strength steel, for example, a zigzag or M-shaped profile. However, a shape of the part is designed as a straight line and arranged along the Y direction, to maximize the effect of force transmission in the Y-direction. The two end faces of the front seat crossmember 2630 may be designed with flat sealing plates, to enclose the crossmember into a fully enclosed part.

Bottom connection: As shown in FIG. 28, the front seat crossmember 2630 is provided with flanges 2615 on two sides for connecting to the upper cover of the battery pack 4000, and the flanges may be connected and fixed by laser welding or gluing (where the seat crossmember may be provided with a gluing surface). If the front seat crossmember 2630 is made of extruded aluminum, no flange is provided at the glued welding position. If the front seat crossmember 2630 is made of high-strength steel, flanges are used for welding the crossmember to the upper cover of the battery pack 4000, to ensure the connection strength.

Central connection: The front seat crossmember 2630 is connected to the battery pack 4000 by using screws (for example, as shown in FIG. 26 and FIG. 28, the screws are used at a fixing point 2612 in the middle of the seat crossmember). Optionally, the bolts may be mounted on a front middle crossmember 4600 and a rear middle crossmember 4700 of the battery pack 4000.

In conclusion, the battery pack 4000, the front seat crossmember, and the rear seat crossmember 2620 may be first assembled into an assembly, and then the assembly may be assembled to the vehicle body in the Z-direction.

Y-direction: As shown in FIG. 26, a gap between the side end panel of the battery pack side member 4500 and a middle surface 2220d of the inner side panel is L4; a gap between the side end face of the left battery pack side member (that is, an upper side end face 4501 of the side member) and a middle vertical surface 2220a of the inner side panel is L3; and a gap between the outer end face 4503 of the side member and a lower vertical surface 2220c of the inner side panel is L5.

Z-direction: The front seat crossmember 2630 and the seat crossmember connecting plate 2611 are fixed to the upper surface of the front seat crossmember 2630 by using screws or other methods. The left mounting point on the battery pack side member 4500 is fixed to the bottom of the sill beam 2100 (specifically, the lower end face 2220b of the inner side panel) by using bolts 4504 or other methods. The battery pack 4000 is sealed to the vehicle body by using sealing foam (battery pack sealing foam 4200).

During the assembly, tolerances in both the Y direction and the Z direction may be absorbed by the seat crossmember connecting plate. The sealing foam may be first pasted (assembled) onto the upper cover of the battery pack 4000, and then an assembly 6Z may be assembled from bottom to top in the Z direction.

It can be learned from the Z-direction assembly process that, the gap between the battery pack 4000 and the vehicle body is greatly narrowed, thereby significantly improving the space utilization of the battery pack 4000 below the vehicle body and thus improving the overall enduring capacity of the vehicle.

In the present disclosure, a Z-direction flat battery pack sealing plate structure is adopted to implement sealing between the battery pack 4000 and the vehicle body.

Optionally, as shown in FIG. 26, the vehicle may include a sealing member 4100 (or may be referred to as a battery pack sealing portion 4100), and the sealing member 4100 is disposed at the bottom of the vehicle body frame for sealing contact with the upper cover of the battery pack 4000.

Alternatively, the sealing member 4100 may be constructed as an annular flat plate of uniform thickness.

As shown in FIG. 3, FIG. 10, FIG. 24 and FIG. 25, the battery pack mounting surface 7300 on the front compartment battery pack mounting member 5000, the lower end surface of the front lower crossmember (that is, the battery pack mounting surface 1212 on the front lower crossmember 1210), the middle surface of the inner side panel 2220 (that is, the battery pack mounting surface 2104 on the sill beam 2100), and the lower end surface of the rear floor 2500 (rear floor battery pack mounting surface 2516) are flush with each other in the height direction of the vehicle frame, to jointly form a mounting surface for mounting the sealing member 4100.

As shown in FIG. 26, the inner side panel 2220 has a stepped cross-section and three transverse (flat) planes from the inside to the outside, including the middle surface 2220d of the inner side panel 2220.

The battery pack mounting surface is a fully flat surface on an XY plane, and may be parallel to the XY plane of the entire vehicle. The lower end face of the front lower crossmember 1210, the middle surface 2220d of the inner side panel 2220, and the lower end face of the rear floor 2500 are at a same Z-direction height as the battery pack mounting surface 7300 on the battery pack mounting member, thus forming a Z-direction flat mounting surface. The battery pack sealing member 4100 is provided below the mounting surface and is connected and fixed by structural adhesive.

The sealing member 4100 may be a flat plate part with a thickness of 1 mm to 5 mm (in the Z direction), surrounding the mounting surface, and has a hollow internal structure in the shape of a Chinese character "hui" (back). The sealing plate and the battery pack 4000 are sealed with the sealing foam, to prevent substances such as air or water outside the vehicle from entering the interior of the vehicle (the passenger compartment). The sealing foam may be made of silicone or other sealing materials, but the sealing foam has a planar structure (parallel to the XY plane).

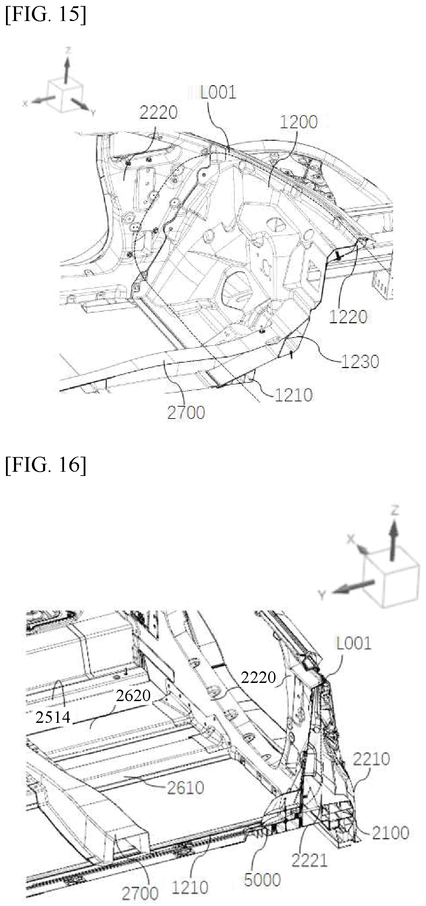

In the present disclosure, refer to FIG. 15 and FIG. 16. The front upper crossmember 1220 forms an enclosed cavity with the front panel 1200, passes through the front panel 1200 from left and right, and is connected to the two inner side panels 2220 from left and right. The inner side panel 2220 and the outer side panel 2210 form an enclosed cavity at a position of the front A-pillar 2300 of the passenger compartment. At the position of the A-pillar 2300, within the cavity formed by the inner side panel 2220 and the outer side panel 2210, there is also an inner side panel sealing plate 2221, and a sill beam 2100 located at the lower part of the cavity. At the lower part of the inner side panel 2220, the front compartment battery pack mounting member 5000 is connected.

As shown in FIG. 17 and FIG. 18, the rear upper crossmember 3220 may include an upper plate 2820 and a lower plate 2830 of the rear roof crossmember. The upper plate 2820 and the lower plate 2830 of the rear roof crossmember are fastened together to form an enclosed cavity, and are connected to the side panels from left to right. The outer side is connected to a rear C-pillar reinforcement panel 2412, and the inner side is connected to the inner side panel 2220. The inner side panel 2220 and the outer side panel 2210 form an enclosed cavity at a position of the rear C-pillar 2400 of the passenger compartment. At the position of the C-pillar 2400, the rear C-pillar reinforcement panel 2412 is also arranged within the cavity, forming an enclosed cavity with the inner side panel 2220. The rear compartment battery pack mounting member 6000 abuts against the inner side panel 2220 and the rear panel 3200. At the lower rear of the rear panel 3200, there is a left-right through rear lower crossmember 3210, and the rear lower crossmember 3210 is connected to the inner side panel 2220 via the rear compartment battery pack mounting member 6000.

In conclusion, in the present disclosure, by setting a plurality of annular structures, such as the first annular structure L001, the second annular structure L002, the third annular structure L003, the fourth annular structure L004, the fifth annular structure L005, the sixth annular structure L006, and the seventh annular structure L007, and connecting the corresponding annular structures, the battery pack 4000 and the vehicle body form an integrated force transmission frame. When the battery pack 4000 is subjected to the external force from front or sides (for example, front collision, side collision, or side pole collision), the force may be transmitted between the directly connected annular structures. Through the combined effect of the plurality of annular structures, the torsional rigidity and modal characteristics of the entire vehicle may be greatly improved, and the anti-collision performance of the entire vehicle may be improved. In addition, by vertically aligning the first annular structure L001 at the front end and the third annular structure L003 at the rear end with the bottom annular structures (such as the second annular structure L002 and the sixth annular structure L006) on the battery pack 4000, and by aligning the second annular structure L002 and the sixth annular structure L006 parallel to the seventh annular structure L007 of the battery pack 4000, the battery pack 4000 is further protected from maximum damage caused by impact.

According to foregoing solution, an integrated vehicle body-battery frame structure that provides good impact force transmission effect of the entire vehicle and maximizes the space utilization of the battery pack 4000 may be achieved.

In the present disclosure, the vehicle may be a hybrid vehicle or an electric vehicle. This is not limited in the present disclosure. In addition, the vehicle type is also not limited in the present disclosure. The vehicle may be a sedan or may be of another type, for example, a sports car.

Optionally, the vehicle in the present disclosure may be a purely electric vehicle without a conventional B-pillar, and in particular, may be a purely electric sports car without a conventional B-pillar.

Automotive lightweighting is a core technology and an important development direction for the automotive industry, and has become a development strategy for national manufacturing. The lightweighting indicates to reduce the overall weight of the vehicle without compromising the safety, reliability, comfort, and costs, thereby improving the cost-effectiveness of the power of the vehicle. With the implementation of national carbon neutrality, energy conservation, and emission reduction policies, the future of automotive development is inevitably oriented to full electrification. However, because the specific energy of batteries is much lower than that of fuel, to achieve a range comparable to that of fuel vehicles, the weight of the battery generally needs to be increased to over 500 kg, accounting for about 20% to 30% of the total weight of the vehicle. Therefore, the demand for lightweighting in new energy vehicles, especially purely electric long-range vehicles, is even more urgent.

The body-in-white is one of five major parts of a vehicle, accounting for approximately one-quarter of the total weight of the vehicle. Reducing the weight of the body-in-white can achieve the goal of automotive lightweighting. Weight reduction of the body-in-white may usually be achieved by using methods such as material substitution, structural optimization, and process optimization, for example, by using ultra-high strength steel, hot-formed steel, aluminum alloys, plastics, and reinforced composite materials. Carbon fiber reinforced polymer (CFRP) offers advantages such as high specific strength (more than five times that of the steel), great design freedom, corrosion resistance, and fatigue resistance. The CFRP that replaces a steel vehicle body can ultimately achieve a weight reduction of about 40% to 50%. However, current domestic research on the CFRP for automotive bodies mainly focuses on the application of individual components, such as covering parts like hoods and roofs. There is little in-depth research on the application of the CFRP to the vehicle body structural assemblies, and mass production still faces significant challenges.

It is well known that there is currently no precedent in the industry for the development of new energy sports cars. First, sports cars require ultra-high performance, necessitating new breakthroughs in the body architecture of the vehicle to ensure higher performance and lighter weight. However, existing vehicle body architectures are generally in conventional metal forms, making it difficult to meet the high-performance requirements of the sports cars. Second, while extreme driving performance is common in the sports cars, integrating driving comfort, such as equipping with air suspension, poses a significant challenge.

Certainly, appearances of the sports cars also need to meet specific aesthetic requirements, for example, a lower vehicle height compared to conventional passenger cars, and a more aggressive and avant-garde front-end design. However, for new energy vehicles, particularly pure electric models, the three electric systems, including a powertrain (the battery pack 4000), an electric motor, and electric control, are essential. In addition, the size and performance of these systems are positively correlated. For example, to achieve ultra-high vehicle horsepower or power, more motors need to be arranged, and to achieve ultra-long range, more battery pack modules 4000 need to be arranged. All of these factors place higher demands on the vehicle body structure of the pure electric sports cars.

Currently, a more straightforward approach for the sports cars is to use components of conventional passenger vehicles. However, this measure brings about numerous issues related to entire vehicle packaging, collision safety strategies, configuration distribution, and the like.

This pure electric sports car features a two-door configuration without the conventional B-pillar structure. The B-pillar structure significantly impacts the side impact and roof pressure tests of the vehicle. To meet stringent side impact and roof pressure requirements, a new side panel reinforcement structure is designed in the absence of a conventional B-pillar. Therefore, the present disclosure enables the entire vehicle to meet the requirements through the design of the vehicle body and the connection with the battery pack 4000.

In the foregoing descriptions, the relative positions and corresponding connection relationships of various components have been broadly introduced, including the front side member 1100 of the vehicle, the battery pack mounting members (the front compartment battery pack mounting member 5000 and the rear compartment battery pack mounting member 6000), the sill beam 2100, the A-pillar 2300, the C-pillar 2400, the No. 1 crossmember 1230, the front lower crossmember 1210, the front upper crossmember 1220, the front panel 1200, the side panel, the rear panel 3200, the rear lower crossmember 3210, the rear side member 3100, the middle floor crossmember, the rear floor crossmember, the center console 2700, the seat crossmember, and the battery pack 4000. The specific connection structures between the relevant components are described in detail below with reference to the accompanying drawings.

Connecting castings may be added between the front compartment and the passenger compartment, and between the rear compartment and the passenger compartment. The connecting castings may be used for mounting the battery pack, transmitting forces, and the like.

For ease of description, the connecting casting between the front compartment and the passenger compartment is defined as a battery pack mounting member, and the connecting casting between the rear compartment frame 3000 and the passenger compartment is defined as a connecting assembly 6000. The battery pack mounting member and the connecting assembly may be respectively connected to a plurality of vehicle body structural members. Details are separately described below.

### I. Connecting assembly

As shown in FIG. 1 to FIG. 5, in a front-rear direction of the vehicle, the connecting assembly 6000 (that is, a rear compartment battery pack mounting member) may be set between a rear compartment frame 3000 and a passenger compartment frame 2000, and the connecting assembly 6000 is connected to the rear compartment frame 3000 and the passenger compartment frame 2000. The connecting assembly may be an integral part. It should be explained that the "integral part" herein indicates that the connecting assembly is a separate part, and the connecting assembly may be specifically a single integral part or a part formed by connecting a plurality of components. Compared to a conventional solution of connecting a front compartment frame 1000 and the passenger compartment frame 2000 by joining a plurality of sheet metal parts through splicing (electro-welding, brazing, screwing, or the like), this design can improve the integration of the connecting assembly and further simplify the assembly process.

In embodiments in which the connecting assembly is integrally formed, splicing the plurality of parts may cause the strength of a connection area to exhibit a discontinuous distribution (there are points prone to failure, resulting in low connection strength), or there may be redundant structures at overlapping edges (affecting lightweighting). The integrated design can effectively avoid the problems and achieve lightweighting and improve the rigidity of the assembly. In addition, a topology optimization design may be incorporated to further improve the lightweight design and the rationality of the force transmission path from a theoretical perspective.

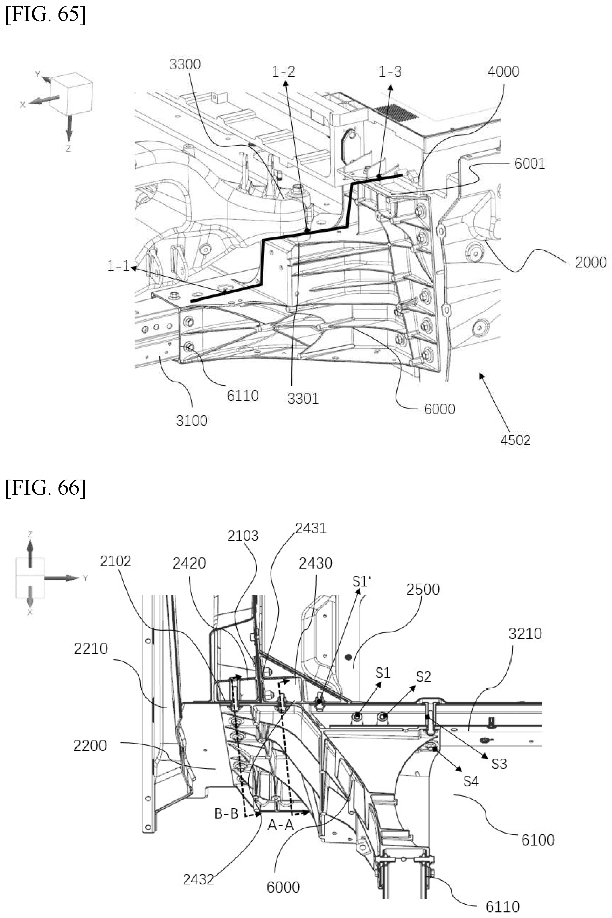

As shown in FIG. 65, in an embodiment of the present disclosure, the connecting assembly may be provided with a first mounting surface 6001, and the first mounting surface may be configured as at least a part of a battery pack mounting surface 4502 (or a second battery pack mounting surface). By fastening the battery pack to the connecting assembly through the first mounting surface, the rigidity of battery pack mounting points may be improved. In addition, when the rear compartment frame 3000 of the vehicle is impacted, the impact force may be transmitted to the battery pack through the connecting assembly, so that the impact force may be dispersed through the battery pack. The large area property of the battery pack may be used for improving the rigidity of the vehicle body and reduce the damage to the passenger compartment frame 2000.

As shown in FIG. 18, FIG. 29, and FIG. 38, in an embodiment of the present disclosure, the passenger compartment frame 2000 may include a sill beam 2100, and at least a part of a bottom surface of the sill beam is configured as at least a part of the battery pack mounting surface 4502. By forming the battery pack mounting surface on the sill beam, the connection strength between the battery pack and the vehicle body may be further improved. In addition, integrating the battery pack and the sill beam into a whole allows for better dispersion of the impact force from the rear, thereby avoiding damage caused by force concentration.

As shown in FIG. 18, in an embodiment of the present disclosure, the first mounting surface 6001 is flush with at least a part of the bottom surface of the sill beam 2100 on a horizontal plane. It should be explained that "flush" herein does not require that the first mounting surface and at least part of the bottom surface of the sill beam be absolutely at the same height in the height direction, but rather that the first mounting surface and at least part of the bottom surface of the sill beam are close to the same height for facilitating the mounting of the battery pack. In this design, when mounting the battery pack onto the vehicle body, because the first mounting surface is flush with at least part of the bottom surface of the sill beam, it is only necessary to fasten an upper connecting surface of the battery pack to the first mounting surface and at least part of the bottom surface of the sill beam. In this way, there is no mounting interference, contributing to reducing the height of the vehicle.

As shown in FIG. 18, in an embodiment of the present disclosure, in a width direction of the vehicle, at least a part of the first mounting surface 6001 may be located inside the sill beam 2100. The "inside" herein refers to a side of the sill beam close to a centerline of the vehicle in the width direction of the vehicle. This design allows the assembly to support the battery pack both in the length direction and in the width direction, thereby increasing a connection area between the battery pack and the vehicle body. This further improves the mounting stability and strength of the battery pack and the sill beam, and improving integration and the overall integrity of the battery pack and the vehicle body. In addition, this also extends the battery pack in the width direction, increasing the size of the battery pack.

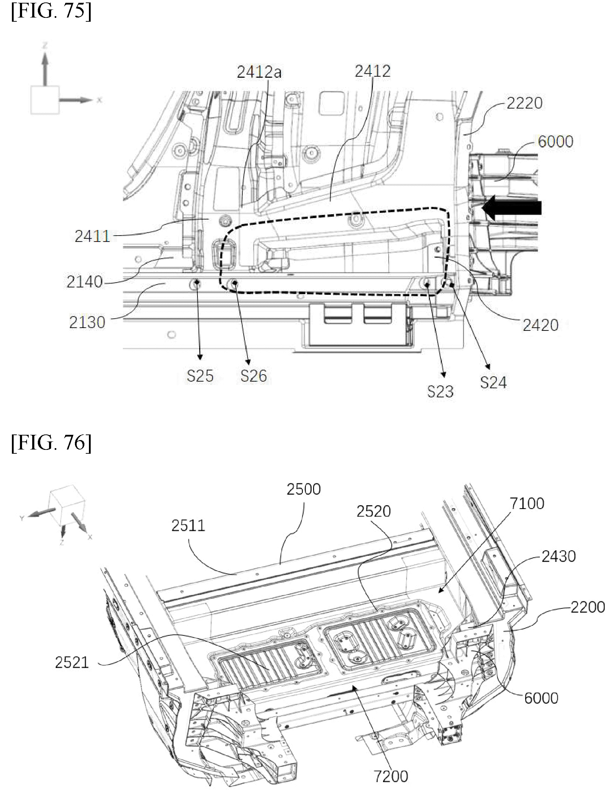

As shown in FIG. 76, in an embodiment of the present disclosure, the passenger compartment frame 2000 may further include a first connecting plate 2520, and the first connecting plate is connected to the sill beam. Two ends of the first connecting plate are connected to the sill beams on both sides, to improve the stability of the vehicle body frame connection and improve the force transmission effect.

As shown in FIG. 76, in an embodiment of the present disclosure, the vehicle may further include a battery pack, and the battery pack and the first connecting plate may be spaced apart in a height direction of the vehicle to form a receiving space. The receiving space may be used for receiving an on-board charger. In this case, the battery pack may serve as a base for the on-board charger. The on-board charger and the battery pack may be detachably connected. In this case, the sill beams on both sides of the first connecting plate may protect the on-board charger within the receiving space.

As shown in FIG. 76, in an embodiment of the present disclosure, the passenger compartment frame 2000 may further include a second connecting plate 2500 (that is, a rear floor); the second connecting plate 2500 is connected to at least one of the first connecting plate and the sill beam 2100; and the battery pack, the first connecting plate, the second connecting plate 2500, and the sill beam may form a receiving space. The receiving space has the sill beams and side panel assemblies 2200 of the vehicle on the left and right sides, the battery pack on the lower side, and the second connecting plate 2500 on the front side. The second connecting plate 2500 may also form a floor beam with other components (where the floor beam is enclosed by the first connecting plate, a rear floor cover, and a front floor beam). These components form a solid receiving space to protect the on-board charger. In addition, it is equivalent to that an energy-absorbing cavity (receiving space) at the rear of the vehicle is formed, to reduce the risk to passengers in the passenger compartment.

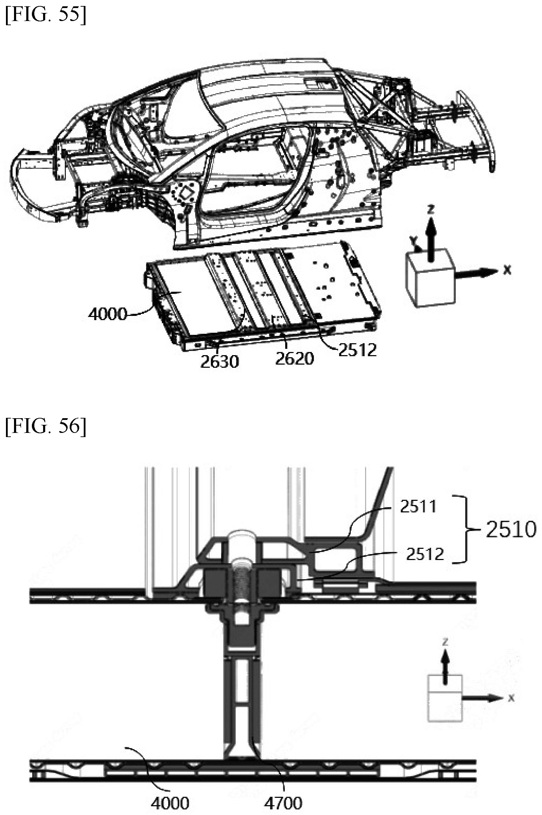

As shown in FIG. 56 and FIG. 76 to FIG. 79, in an embodiment of the present disclosure, the front floor beam may include an upper crossmember and a lower crossmember. The upper crossmember, the lower crossmember, and the battery pack may be connected in the height direction. At least a part of the upper crossmember extends forward to the rear floor cover and the rear floor, and the lower crossmember is connected to the battery pack, so that the battery pack is connected to the vehicle body.

As shown in FIG. 75 and FIG. 76, in an embodiment of the present disclosure, the floor beam, the sill beam 2100, and the battery pack crossmember may form a closed annular structure, to improve the force transmission performance and torsional resistance of the vehicle body.

As shown in FIG. 76, in an embodiment of the present disclosure, the battery pack, the first connecting plate, the second connecting plate 2500, the sill beam 2100, and the connecting assembly 6000 may form a receiving space. In this design, the connecting assembly may also protect the on-board charger within the receiving space at the rear.

A connection form of the first connecting plate and the second connecting plate 2500 is not limited in the present disclosure. For example, in an embodiment of the present disclosure, the first connecting plate and the second connecting plate 2500 may be integrally formed. This design reduces a quantity of assembly steps and the difficulty of the assembly process.

To facilitate the maintenance of equipment within the receiving space, as shown in FIG. 76, in an example of the present disclosure, an inspection port 2521 may be provided on the first connecting plate. When the equipment within the receiving space requires maintenance, the equipment may be inspected simply by opening the inspection port from the bottom.

As shown in FIG. 8, in an embodiment of the present disclosure, two connecting assemblies are spaced apart in a width direction of the vehicle. The vehicle may further include a rear crossmember 3210 (that is, a rear lower crossmember), and two ends of the rear crossmember 3210 may be respectively connected to the two connecting assemblies 600. This design may improve the force transmission capability of the connecting assembly. In other words, in addition to transmitting the force forward and backward, the force may also be transmitted to both sides. In addition, when the battery pack and the connecting assembly are connected, in addition to improving the rigidity of the passenger compartment, the rear crossmember may also suppress rotation of the front side member 1100 in the vertical direction. Specifically, the rear crossmember is connected to the connecting assembly. When the vehicle is impacted from the rear, the connecting assembly may transmit the impact force to the rear crossmember, and then the impact force is dispersed to the rear panel 3200 via the rear crossmember, thereby avoiding force concentration that could damage the passenger compartment frame 2000. In an embodiment of the present disclosure, the rear crossmember may be integrally formed.

As shown in FIG. 66, in an embodiment of the present disclosure, the connecting assembly 6000 may further include a connecting portion 6100, one end of the connecting portion may be connected to the rear crossmember, and the other end of the connecting portion 6100 may be formed as a rear side member connecting portion 6110. By connecting the rear side member 3100 to the rear crossmember via the connecting assembly, when the rear of the vehicle is impacted from the rear, the forward impact force of the rear side member may be transmitted to the rear crossmember via the connecting assembly, thereby dispersing the impact force to the rear panel 3200, and the like. Specifically, as shown in the figure, the connecting portion has a receiving portion on a side of the sill beam away from the vehicle, and is connected to the rear crossmember through the receiving portion.

To better transmit the force between the rear side member and the rear crossmember in the front-rear direction, as shown in FIG. 65 and FIG. 66, in an embodiment of the present disclosure, a projection of the rear crossmember 3210 in the front-rear direction of the vehicle may at least partially overlap a projection of the side member connecting portion 6110 in the front-rear direction of the vehicle. The overlapping part may allow for better force transmission when the force is transmitted from rear to front. In addition, the force transmission area may be effectively increased, to reduce pressure, and prevent the rear side member from being subjected to force and intruding into the passenger compartment. It should be noted that in some other embodiments, the projection of the rear crossmember in the front-rear direction of the vehicle may completely overlap the projection of the rear side member connecting portion in the front-rear direction of the vehicle, and an area of the overlapping part is not limited in the present disclosure.

As shown in FIG. 25, in an embodiment of the present disclosure, an upper surface of the connecting assembly 6000 may include a protruding plate 6002 extending forward from the front end for overlapping the upper surface of the rear crossmember 3210, and a lower surface of the connecting assembly 6000 is used for aligning with a lower surface of the rear crossmember 3210. The protruding plate 6002 is used for connecting to the upper surface of the rear crossmember, and the front surface of the connecting assembly is used for connecting to the rear surface of the rear crossmember. The cross-section of the rear crossmember may be formed in a shape of a Chinese character "ri" (sun), and the connecting assembly may also be provided with a first reinforcement rib j10 aligned with a first intermediate rib j12 of the rear crossmember. This design improves the force transmission effect between the connecting assembly and the rear crossmember.

Similarly, in an embodiment of the present disclosure, the projection of the rear side member in the front-rear direction of the vehicle may at least partially overlap the projection of the rear crossmember in the front-rear direction of the vehicle, to better transmit the force of the rear side member to the rear crossmember.

As shown in FIG. 65 and FIG. 66, in an embodiment of the present disclosure, the projection of the rear crossmember 3210 in a left-right direction of the vehicle may at least partially overlap the projection of the rear side member connecting portion 6110 in the left-right direction of the vehicle. This design allows for force transmission along the width direction of the vehicle. For example, when the rear side member 3100 is impacted along the width direction of the vehicle, the force may be transmitted to the rear crossmember.

As shown in FIG. 76, to ensure ventilation of the receiving space and avoid heat damage, as shown in the figure, in an embodiment of the present disclosure, the rear crossmember and the battery pack 4000 are spaced apart in the height direction of the vehicle, so that an air vent 7200 in communication with the receiving space 7100 is formed between the battery pack and the rear crossmember 3210. In addition to ventilation, the air vent may also be used for buffering parts arranged within the receiving space. For example, when the front of the vehicle is impacted, the parts within the receiving space may be shifted backward and buffered by the air vent, thereby reducing the impact damage.

To form the receiving space 7100 and the air vent 7200, as shown in FIG. 76, in an embodiment of the present disclosure, in the height direction of the vehicle, the rear crossmember 3210 may be located on a side of the first connecting plate 2520 away from the battery pack.

To form the receiving space and the air vent, as shown in FIG. 76, in an embodiment of the present disclosure, in the height direction of the vehicle, the first connecting plate may be located on an upper side of the first mounting surface.

To connect a rear subframe assembly 3300 to the connecting assembly 6000, as shown in FIG. 23 and FIG. 65, in an embodiment of the present disclosure, the connecting assembly 6000 may be provided with a rear subframe mounting point 3301 (that is, a rear subframe front mounting point). In this design, the rear subframe assembly is mounted to the connecting assembly. When the vehicle is impacted from the rear, the impact force from the rear side member may be significantly dispersed to the entire vehicle floor structure via the rear subframe assembly. The rear subframe assembly participates in the force transmission at the bottom of the entire vehicle, thereby improving performance like collision safety and torsional rigidity.

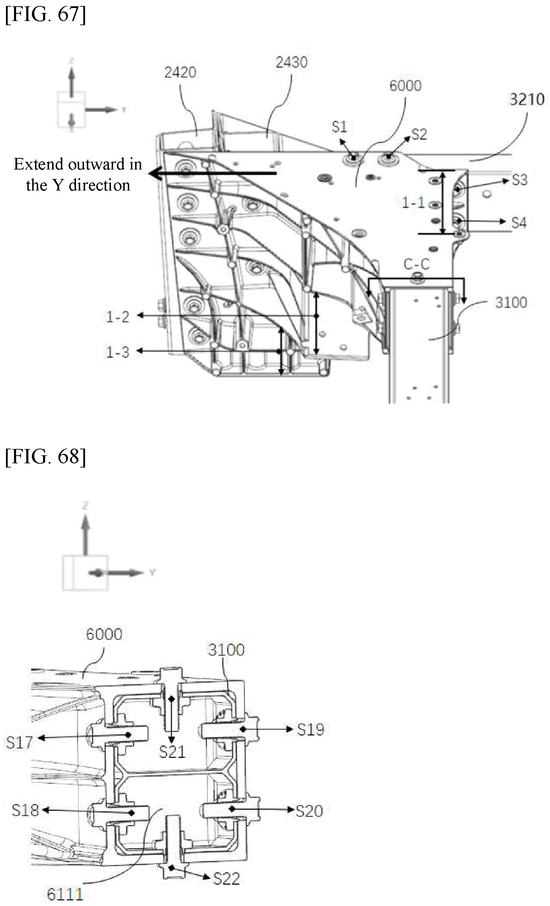

As shown in FIG. 65, in an embodiment of the present disclosure, in the height direction of the vehicle, a plane on which the rear subframe mounting point 3301 is located is located on an upper side of the first mounting surface 6001. In this design, when the rear subframe assembly moves forward under the impact from the rear, the rear subframe assembly is offset from the battery pack 4000 in the height direction, to prevent the rear subframe assembly from directly hitting the battery pack and causing damage to the battery pack. Specifically, when the connecting assembly is constructed in a stepped shape shown in the figure, the force may be directly transmitted to the connecting assembly through the stepped surface on the front side after the rear subframe assembly is subjected to force, and further dispersed through other components that cooperate with the connecting assembly. Specifically, in an embodiment shown in FIG. 65 and FIG. 67, the connecting assembly may be constructed in a stepped shape and includes a first step 1-3 and a second step 1-2 adjacent in the height direction. A rear end of the first step 1-3 is closer to the passenger compartment than a rear end of the second step 1-2. The second step 1-2 is provided with the rear subframe mounting point. The first step 1-3 is located in front of the rear subframe mounting point, to limit the forward displacement of the rear subframe assembly 3300.

In some embodiments, the rear subframe mounting point may be positioned closer in the height direction to the connecting portion used for connecting the rear crossmember. This design allows for better force transmission to the rear crossmember and reduces the torque of the rear crossmember in the vertical direction.

As shown in FIG. 23 and FIG. 65, in an embodiment of the present disclosure, in the front-rear direction of the vehicle, the rear subframe mounting point 3301 may be located on a rear side of a connection between the battery pack 4000 of the vehicle and the connecting assembly 6000. In this design, the rear subframe may serve as a rear limiting surface for the battery pack, allowing the battery pack to extend all the way to the subframe and increase the capacity of the battery pack. In addition, when the rear subframe assembly transmits the force forward, the battery pack is also used as a force transmission path, adding another force transmission path without directly impacting the battery pack, thereby achieving force transmission and dispersion.

As shown in FIG. 65, in an embodiment of the present disclosure, in the height direction of the vehicle, the first mounting surface 6001 may be located on a lower side of the rear subframe mounting point 3301, and the rear side member connecting portion 6110 may be located on an upper side of the rear subframe mounting point 3301. This design allows for a plurality of force transmission paths along the height direction of the vehicle, thereby reducing the damage to the passenger compartment.

As shown in FIG. 65, in an embodiment of the present disclosure, the connecting assembly 6000 may further include the rear side member connecting portion 6110, and in the front-rear direction of the vehicle, the rear side member connecting portion 6110 may be located on the rear side of the rear subframe mounting point 3301. When the vehicle is impacted from the rear, the rear side member is the first to bear the force. By placing the rear side member connecting portion on the rear side, a multi-layer force transmission structure may be formed, and a cross-section of the connecting assembly from rear to front may be gradually increased.

As shown in FIG. 65, in an embodiment of the present disclosure, in the height direction of the vehicle, the rear side member connecting portion 6110 may be located on an upper side of a plane on which the rear subframe mounting point 3301 is located. This design allows the vehicle to form a double-layer force transmission path in the front-rear direction when the vehicle is impacted from the rear, thereby avoiding force concentration and reducing damage to the passenger compartment.

Specifically, as shown in FIG. 67, in an embodiment of the present disclosure, the connecting assembly 6000 may include a third step 1-1 adjacent to the second step 1-2 in the height direction. A rear end of the second step 1-2 is closer to the driving compartment 200 than a rear end of the third step 1-1. The rear side member 3100 and the rear crossmember 3210 are disposed on the third step 1-1, so that the rear crossmember may be flush with the rear side member in the height direction.

Specifically, as shown in FIG. 68, in an embodiment of the present disclosure, the rear end of the connecting assembly may be provided with a first opening 6111, and the rear side member 3100 may extend into and be fixed to the first opening 6111. The rear side member may be constructed with a double-mouth cross-section, and chamfers are formed at the corners, to improve the connection strength and force transmission effect between the cross-section and the chamfers.

As shown in FIG. 10, in an embodiment of the present disclosure, the passenger compartment frame 2000 may include a sill beam 2100, and the connecting assembly is connected to a rear end of the sill beam 2100. By connecting the connecting assembly to the sill beam, the impact force of the rear side member may be transmitted to the sill beam via the connecting assembly when the vehicle is impacted from the rear, thereby dispersing the impact force and improving performance like collision safety or torsional rigidity of the vehicle.

As shown in FIG. 66, in an embodiment of the present disclosure, the sill beam 2100 may have a first connecting surface 2102 and a second connecting surface 2103 that intersect each other, and both the first connecting surface and the second connecting surface may be connected to the connecting assembly. An intersected angle is not limited in the present disclosure, and the angle may be 90 degrees, 80 degrees, or the like. In this design, the force may be transmitted from two different angles, to provide protection for the passenger compartment from various angles. It also enables better connection of the sill beam, the connecting assembly, and the battery pack, thereby reinforcing the assembly from two angles to form a unified structure and further improving the connection rigidity. In addition, the rear crossmember, the two connecting assemblies, and the battery pack may form a closed annular structure, and the annular structure is connected to the sill beam, to improve force transmission performance in the front-rear direction and in the left-right direction.

The first connecting surface and the second connecting surface are not limited in the present disclosure. For example, in the illustrated embodiment, the first connecting surface 2102 may be located on a rear end face of the sill beam 2100, and the connecting assembly may be directly connected to the first connecting surface. By directly connecting the connecting assembly to the rear end face of the sill beam, the connecting assembly may directly transmit the rear impact force to the sill beam, thereby improving the force transmission effect between the connecting assembly and the sill beam.

In an embodiment shown in FIG. 66, the vehicle may further include an intermediate connecting member 2430 (that is, an outer C-pillar), the second connecting surface 2103 may be an inner side surface of the sill beam 2100, and the connecting assembly 6000 may be connected to the second connecting surface 2103 via the intermediate connecting member 2430. This design increases a force transmission area between the connecting assembly and the sill beam, thereby improving the force transmission effect.

A structure of the intermediate connecting member 2430 is not limited in the present disclosure. For example, in an embodiment shown in FIG. 66, the intermediate connecting member 2430 may include a third connecting surface 2431 and a fourth connecting surface 2432. The third connecting surface may be connected to the second connecting surface 2103, and the fourth connecting surface may be connected to the connecting assembly 6000. In this way, the connecting assembly may be connected to the inner side surface of the sill beam via the intermediate connecting member 2430. Specifically, a cross-section of the intermediate connecting member 2430 may be a triangle as shown in the figure. Due to the stability of the triangle, this design has higher strength and may improve space utilization compared to that of a square.

A position relationship between the fourth connecting surface 2432 and the first connecting surface is not limited in the present disclosure. For example, in an embodiment shown in FIG. 66, the fourth connecting surface and the first connecting surface may be parallel to each other or may be located on a same plane. This design increases the force transmission area in the front-rear direction, and enables the connecting assembly to simultaneously transmit the force to both the sill beam 2100 and the intermediate connecting member 2430, thereby avoiding excessive pressure when only one of the sill beam and the intermediate connecting member is in contact.

To enable the connecting assembly to better transmit the force to the sill beam in the front-rear direction, as shown in FIG. 18 and FIG. 20, a projection of the sill beam 2100 in the front-rear direction of the vehicle may at least partially overlap a projection of the connecting assembly 6000 in the front-rear direction of the vehicle.

Similarly, to better transmit the force between the connecting assembly and the sill beam in the width direction of the vehicle, as shown in FIG. 18 and FIG. 20, in an embodiment of the present disclosure, a projection of the sill beam in a left-right direction of the vehicle may at least partially overlap a projection of the connecting assembly in the left-right direction of the vehicle.

A specific structure of the sill beam 2100 is not limited in the present disclosure. For example, in an embodiment of the present disclosure, the sill beam may include a sill body 2100a (that is, a body beam) and a sill reinforcement beam 2130. The body is provided with a sill reinforcement beam receiving space 2101, and the sill reinforcement beam is disposed within the sill reinforcement beam receiving space 2101. In an embodiment of the present disclosure, the sill body may be a cavity enclosed by the outer side panel 2210 and the inner side panel 2220 of the vehicle. The parts of the outer side panel and the inner side panel that correspond to the sill beam may also be referred to as an outer sill beam panel and an inner sill beam panel. The outer sill beam panel and the outer side panel may be integrally formed, and the inner sill beam panel and the inner side panel may be integrally formed. The connecting assembly may be connected to both the sill body and the sill reinforcement beam, and the intermediate connecting member 2430 may be connected to both the sill body and the sill reinforcement beam. By connecting the connecting assembly to the sill body 2100a and the sill reinforcement beam, the connection strength between the connecting assembly and the sill beam may be guaranteed. A connection method between the intermediate connecting member 2430 and the sill reinforcement beam is not limited in the present disclosure. For example, the intermediate connecting member and the sill reinforcement beam may be connected by connecting a side reinforcement member 2420 to the sill reinforcement beam described below.

As shown in FIG. 66 to FIG. 70, in an embodiment of the present disclosure, the vehicle may further include a side reinforcement member 2420 (that is, an inner C-pillar), at least a part of the side reinforcement member 2420 is disposed within the sill reinforcement beam receiving space 2101, and the side reinforcement member 2420 is connected to both the sill reinforcement beam 2130 and the body 2100a. Specifically, in the illustrated embodiment, the connecting assembly may be connected to the side reinforcement member 2420 and the intermediate connecting member 2430 via fasteners. The side reinforcement member 2420 is connected to the sill reinforcement beam, and the side reinforcement member 2420 is also connected to the intermediate connecting member 2430 via the fasteners. In this design, by setting the side reinforcement member 2420, the connection strength between the C-pillar 2400 and the sill beam 2100 and the connecting assembly may be ensured, and the strength between the sill beam and the A-pillar 2300 may be improved.

As shown in FIG. 7, FIG. 71 and FIG. 75, in an embodiment of the present disclosure, a projection of the sill reinforcement beam 2130 in the width direction of the vehicle, a projection of the intermediate connecting member 2430 in the width direction of the vehicle, and a projection of the side reinforcement member 2420 in the width direction of the vehicle at least partially overlap with each other. In this design, when the vehicle is impacted from both sides, the sill reinforcement beam, the intermediate connecting member 2430, and the side reinforcement member 2420 may better transmit and disperse the impact force from the sides.

As shown in FIG. 75, in an embodiment of the present disclosure, the side reinforcement member 2420 may extend into the sill reinforcement beam receiving space 2101 to connect to the C-pillar reinforcement panel 2410 of the vehicle. This design allows force from the roof of the vehicle to be transmitted downwards through the C-pillar reinforcement panel to the side reinforcement member 2420, and then the force is dispersed through other components connected to the side reinforcement member 2420. In addition, when the vehicle is impacted from the rear, the side reinforcement member 2420 may transmit part of the force upward through the C-pillar reinforcement panel 2410 to disperse the impact force from the rear. In addition, when the side reinforcement member 2420 of the vehicle is impacted from the left or right sides, the side reinforcement member may transmit the impact force to the C-pillar reinforcement panel, thereby allowing the impact force to be dispersed to the passenger compartment frame 2000 of the vehicle through the C-pillar, and improving performance like collision safety and torsional rigidity of the vehicle.

As shown in FIG. 18 and FIG. 20, in an embodiment of the present disclosure, in the height direction of the vehicle, the C-pillar reinforcement panel 2410 may be located on an upper side of the sill beam 2100, thereby transmitting the impact force received by the sill beam and side reinforcement member 2420 upward through the C-pillar reinforcement panel.

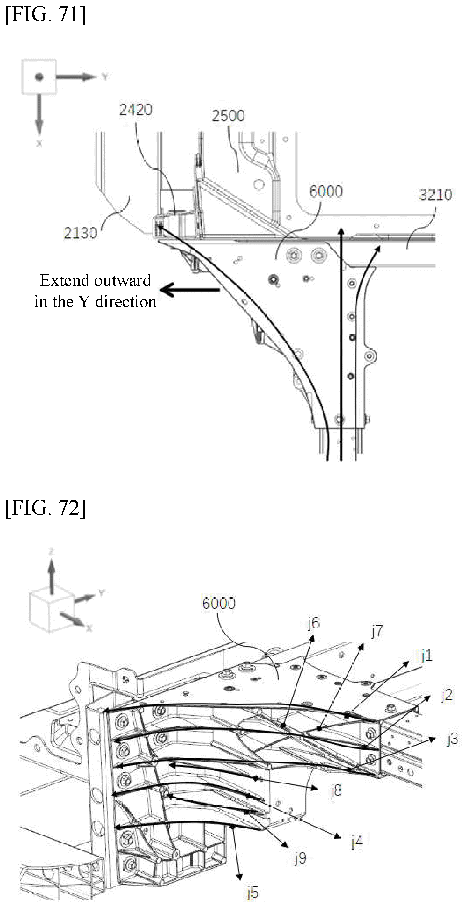

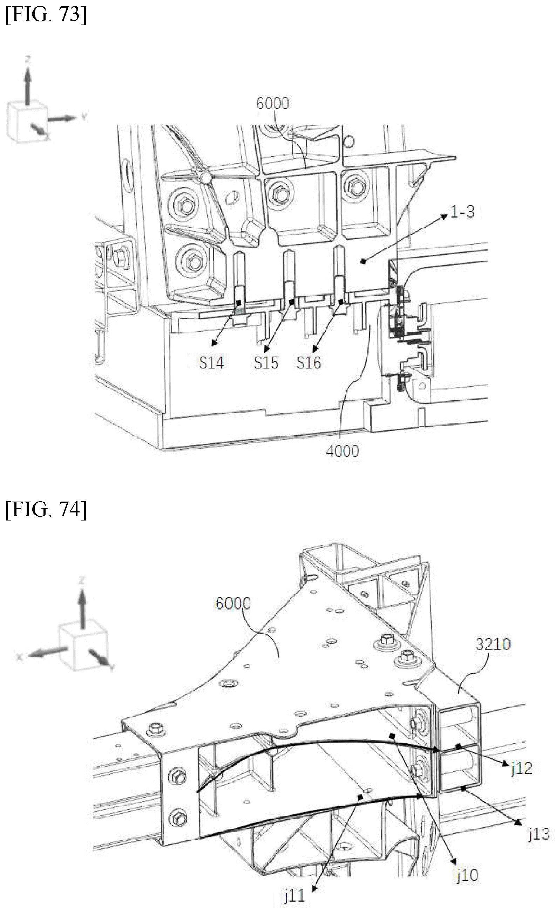

As shown in FIG. 72 and FIG. 74, in an embodiment of the present disclosure, the connecting assembly may further include force transmission ribs j1-j13, and the force transmission ribs may extend along the rear compartment frame 3000 toward the sill beam. By setting the force transmission ribs, the structure of the connecting assembly may be strengthened, and the impact force from the rear may be better transmitted forward. A form of the force transmission rib is not limited in the present disclosure. For example, the force transmission rib may include a main rib, a star-shaped rib, or the like.

In an embodiment of the present disclosure, a projection of the force transmission rib in the front-rear direction of the vehicle may at least partially overlap a projection of the sill beam in the front-rear direction of the vehicle. This design allows for better dispersion of the impact force from the rear to the sill beam via the force transmission ribs.

As shown in FIG. 26, in an embodiment of the present disclosure, the passenger compartment frame 2000 may further include a seat crossmember 2610, and a projection of the sill beam 2100 in the height direction of the vehicle may at least partially overlap a projection of the seat crossmember 2610 in the height direction of the vehicle. This design physically prevents the seat crossmember from being pulled up when subjected to the upward load (the sill beam acts as a barrier), thereby ensuring the safety of the passenger compartment.

As shown in FIG. 26, in an embodiment of the present disclosure, a projection of the sill beam 2100 in the width direction of the vehicle at least partially overlaps a projection of the seat crossmember in the width direction of the vehicle. In this design, when the vehicle is impacted from the left or right sides, the sill beam may transmit part of the impact force to the seat crossmember. The seat crossmember disperses the impact force, thereby reducing the damage to the passenger compartment, and protecting the safety of passengers.

As shown in FIG. 9, in an embodiment of the present disclosure, the sill beam may include a receiving portion 2170, and the receiving portion is used for partially receiving the seat crossmember. The receiving portion may be formed by a structure of the sill beam. A specific shape is not limited in the present disclosure, provided that the receiving portion may at least partially receive the seat crossmember. Specifically, in the illustrated embodiment, the sill beam may be constructed in a stepped shape. The sill beam may include a first step surface, a second step surface, and a third step surface arranged sequentially in the height direction. A connecting surface is formed between the second step surface and the third step surface. The receiving portion is formed by the third step surface and the connecting surface. The third step surface overlaps the seat crossmember in the height direction, and the connecting surface overlaps the seat crossmember in the width direction.

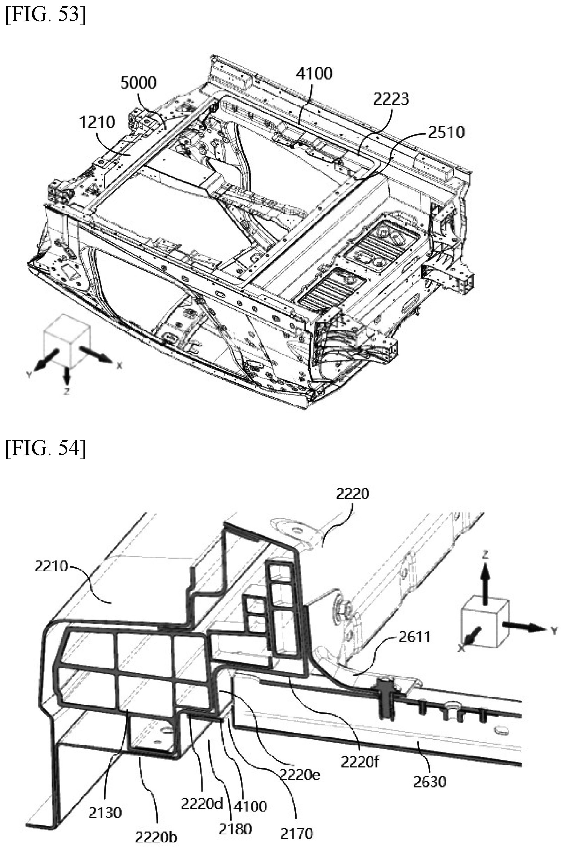

As shown in FIG. 54, in an embodiment of the present disclosure, the sill beam may be provided with a battery pack mounting portion 2180. In the height direction of the vehicle, the battery pack mounting portion may be located on a lower side of the receiving portion 2170, and in the width direction of the vehicle, the battery pack mounting portion may be located an outer side of the receiving portion. In this design, the seat crossmember is connected to the battery pack, and the battery pack is provided with a battery pack side member 4500 arranged in the left-right direction. The battery pack side member is connected to the sill beam battery pack mounting portion, and the seat crossmember is then connected to the battery pack side member 4500. Therefore, when the seat crossmember is connected to the battery pack, the seat crossmember is still under the battery pack, to ensure the seat crossmember less prone to vertical movement. In addition, the battery pack side member and the sill beam are spaced apart in the width direction of the vehicle, and the seat crossmember and sill beam are spaced apart in both the width direction and the height direction. In addition, the seat crossmember and the battery pack may be connected by the lateral fasteners mentioned below. In an event of side collision, the force may first be transmitted to the lateral fasteners through the sill beam, and then to the seat crossmember. Because the lateral fasteners are weak, and the seat crossmember, the battery pack, and the sill beam 2100 are spaced apart in the width direction, there is a collapsable distance when the force is transmitted. Then the force is transmitted to the seat crossmember, to form multi-layer force transmission in the vertical direction and multi-segment force transmission in the left-right direction.

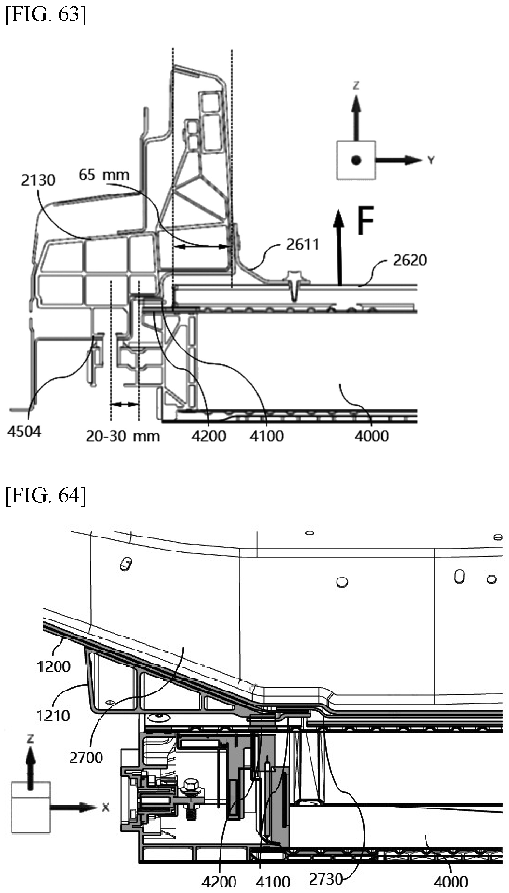

As shown in FIG. 63 and FIG. 64, in an embodiment of the present disclosure, the sill beam 2100 may be further provided with a battery pack sealing portion 4100 (that is, a sealing member). It needs to be explained that the battery pack sealing portion herein refers to a position at which the sealing member is attached. The sealing member is used for sealing connection with the battery pack, thereby ensuring the airtightness of the inner battery pack and preventing rainwater, impurities, or the like from entering the battery pack through a connection gap between the battery pack and the vehicle body. In the height direction of the vehicle, the battery pack sealing portion may be located between the receiving portion 2170 and the battery pack mounting portion 2180. In the width direction of the vehicle, the battery pack sealing portion is located between the receiving portion and the battery pack mounting portion. For example, in the embodiment in which the sill beam is constructed as a stepped structure, the battery pack sealing portion may be formed on a third step surface. While the battery pack and the sill beam are sealed, projections of the battery pack and the sill beam are overlap in the vertical direction, thereby extending the battery pack in the left-right direction, and satisfying sealing requirements while increasing the capacity.

As shown in FIG. 26, in an embodiment of the present disclosure, the vehicle may further include a lateral fastener 2611 connecting the sill beam 2100 and the seat crossmember 2610. The lateral fastener may be used for forming the sill beam and the seat crossmember into an integrated whole, so that the lateral impact force on the sill beam may be transmitted to the seat crossmember. A mounting position of the lateral fastener is not limited in the present disclosure. For example, in the illustrated embodiment, the lateral fastener may be located on the upper side of the seat crossmember.

As shown in FIG. 55, in an embodiment of the present disclosure, the battery pack 4000 of the vehicle may be at least partially formed as a vehicle floor. This design eliminates the need for the vehicle floor and reduces the vehicle weight. In addition, a gap between the battery pack and the vehicle body may be reduced, to lower the center of gravity of the vehicle, and improve handling; or increase the height of the passenger compartment; or increase a vehicle-to-ground gap to improve vehicle passability.

As shown in FIG. 18, FIG. 75 and FIG. 83, in an embodiment of the present disclosure, an upper end of the rear C-pillar reinforcement panel 2412 of the vehicle may be connected to a vehicle frame side member 2840 of the passenger compartment frame 2000. It should be noted that, the vehicle frame side member 2840 extends along the front-rear direction of the vehicle and is connected to the A-pillar 2300 and C-pillar 2400 of the vehicle for force transmission. This design allows the impact force from the rear to be transmitted to the sill beam and the vehicle frame side member 2840 through the rear C-pillar reinforcement panel 2412, to increase the force transmission area and extend the force transmission path.

In an embodiment of the present disclosure, the upper end of the rear C-pillar reinforcement panel 2412 may be connected to a rear upper crossmember 3220 of the passenger compartment frame 2000. The rear upper crossmember 3220, the rear C-pillar reinforcement panel 2412, the side reinforcement member 2420, the connecting assembly, and the rear crossmember may form an annular structure, to facilitate force transmission of the battery pack, and when the connecting assembly is connected to the battery pack, the rigidity of the vehicle body may be effectively improved. In addition, the receiving space for receiving the on-board charger is formed at this position. Therefore, after the battery pack is connected, this annular structure enlarges the receiving space. In addition, because the battery pack is located at the bottom, a "ri" (sun) shaped structure may be formed at the rear, to further improve the rigidity.

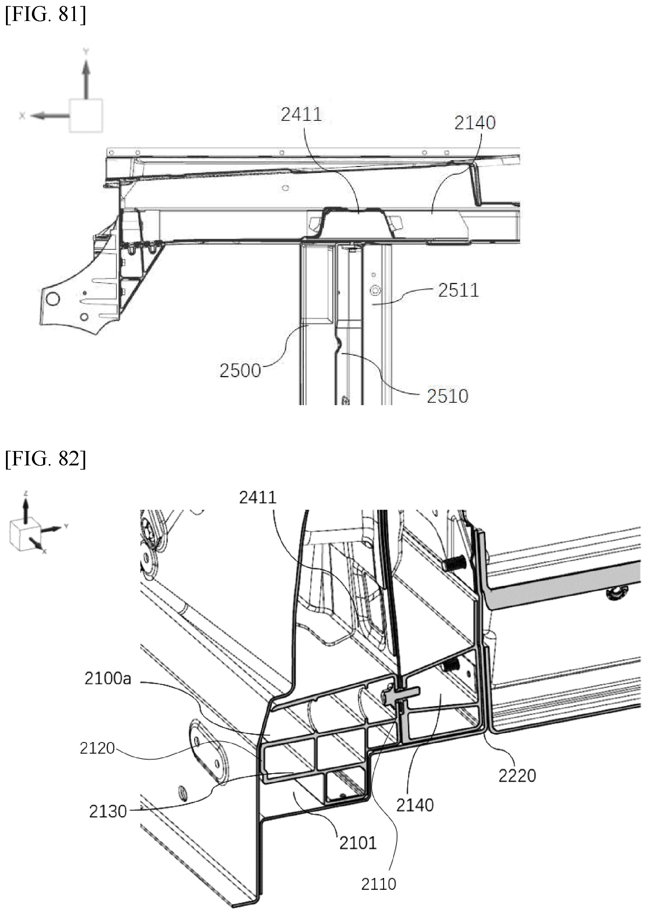

As shown in FIG. 75 and FIG. 82, in an embodiment of the present disclosure, the vehicle may further include a front C-pillar reinforcement panel 2411, an upper end of the front C-pillar reinforcement panel 2411 is connected to the frame side member, and a lower end of the front C-pillar reinforcement panel is connected to the sill beam 2100 of the vehicle. In this design, the front C-pillar reinforcement panel 2411, the frame side member, the sill beam, the battery pack 4000, and a vehicle roof may also form an annular structure, thereby improving the rigidity of the vehicle body. The vehicle roof here refers to the roof section, both sides of the vehicle roof is connected to the side panel assembly. The A-pillar 2300 and the C-pillar 2400 are both located on the side panel assembly.

In an embodiment of the present disclosure, the front C-pillar reinforcement panel 2411 may be disposed on a front side of the rear C-pillar reinforcement panel 2412.

As shown in FIG. 75, in an embodiment of the present disclosure, the rear C-pillar reinforcement panel 2412 may be provided with a front C-pillar reinforcement panel connecting portion 2412a. The rear C-pillar reinforcement panel 2412 may be connected to the front C-pillar reinforcement panel 2411 through the front C-pillar reinforcement panel connecting portion 2412a, so that the front C-pillar reinforcement panel 2411 and the rear C-pillar reinforcement panel 2412 may transmit the force in the front-rear direction. In addition, the front C-pillar reinforcement panel connecting portion 2412a and the sill beam are spaced apart in the height direction, to form a three-layer force transmission path in the vertical direction: the vehicle frame side member 2840, the front C-pillar reinforcement panel 2411 connecting portion and the sill beam, to achieve a better force transmission effect.

### II. Battery pack mounting members

The battery pack mounting member 5000 (that is, the front compartment battery pack mounting member) may be connected to at least one end portion of the sill beam 2100 in a front-rear direction. The battery pack mounting member has a battery pack mounting surface 4502 (or a second battery pack mounting surface) and the battery pack mounting members are an integral part. In this design, the integral part is connected to the battery pack, so that the strength of the battery pack mounting point may be better improved, and the combination of the integral part and the battery pack may effectively improve the rigidity of the vehicle body. In addition, during force transmission in the front-rear direction, effective force transmission to the sill beam may be achieved. In addition, as the battery pack mounting members are the integral part, with the support of the battery pack and the sill beam, the force transmission capability in the front-rear direction can be effectively improved; and the integral part has good rigidity, so that the force transmission effect and the rigidity is improved. Similar to the connecting assembly mentioned above, the integral part herein refers to a separate part, and the battery back mounting members may be a single integral part or a part formed by connecting a plurality of components. It should be noted that the battery pack mounting member may be connected to the front end of the sill beam or the rear end of the sill beam. For ease of description, an example in which the battery pack mounting member is connected to the front end of the sill beam is used below.

In an embodiment of the present disclosure, the battery pack mounting member may be integrally formed. This design may increase the rigidity of the battery pack mounting member, thereby improving the effect of the battery pack mounting member connected to the vehicle body and the battery pack, and effectively improving the torsional resistance and overall integrity of the vehicle.

As shown in FIG. 10, in an embodiment of the present disclosure, the battery pack mounting member 5000 may be connected to a front side end portion of the sill beam 2100 in the front-rear direction. This design may improve the force transmission effect of the front compartment of the vehicle in collision and increase the rigidity of the front compartment. Specifically, when the front compartment of the vehicle is impacted, the impact force may be transmitted to the sill beam and the battery pack via the battery pack mounting member, to reduce damage to the passenger compartment. In some embodiments, to further improve the force transmission effect between the battery pack mounting member and the sill beam, a projection of the battery pack mounting member in the front-rear direction of the vehicle may at least partially overlap a projection of the sill beam in the front-rear direction of the vehicle.

As shown in FIG. 3, in an embodiment of the present disclosure, the vehicle may further include a front side member 1100. In the front-rear direction of the vehicle, the battery pack mounting member 5000 may be disposed behind the front side member 1100, and the front side member is connected to the battery pack mounting member. In this design, when the front side member of the vehicle is impacted, the impact force may be transmitted to the sill beam and the battery pack via the battery pack mounting bracket, to reduce damage to the passenger compartment. To improve the force transmission effect between the battery pack mounting member and the front side member, in some embodiments, a projection of the front side member in the front-rear direction of the vehicle may at least partially overlap a projection of the battery pack mounting member in the front-rear direction of the vehicle.

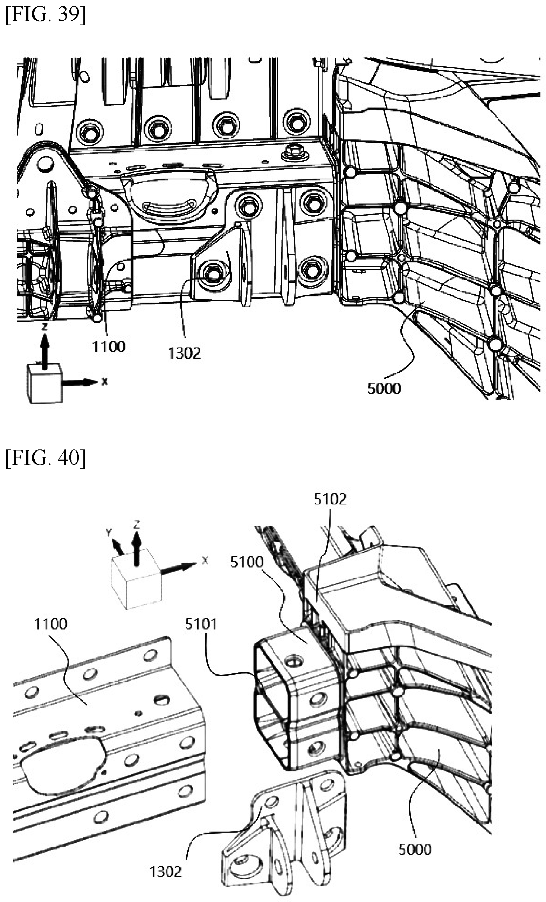

How the front side member 1100 is connected to the battery pack mounting member is not limited in the present disclosure. For example, in an embodiment shown in FIG. 40, a front end of the battery pack mounting member 5000 may be provided with a protruding beam 5100 aligned with the front side member 1100, and a rear end of the front side member may be formed as a hollow shape to fit around the outer periphery of the protruding beam and may be fixed by using bolts or the like.

To improve the connection strength between the front side member 1100 and the battery pack mounting member, and prevent the front side member from intruding into the passenger compartment under the force, as shown in FIG. 40, in an embodiment of the present disclosure, the front end of the battery pack mounting member may have a stop surface 5102 surrounding the protruding beam, and the stop surface is located at the end of the protruding beam away from the front side member.

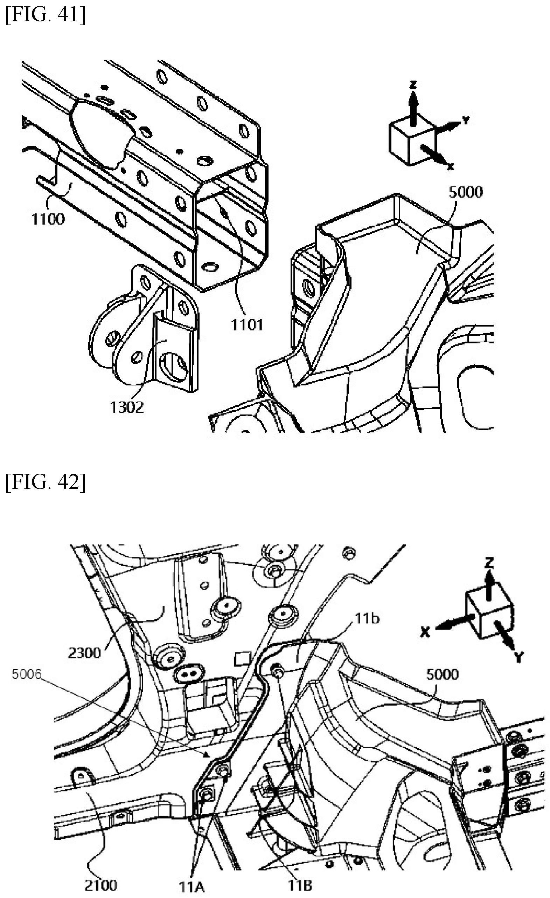

As shown in FIG. 40 and FIG. 41, in some other embodiments, the cross-section of the protruding beam 5100 may be formed in the shape of a Chinese character "ri" (sun), and a part of the front side member 1100 located at the front end of the protruding beam may be provided with a second reinforcement rib 1101 corresponding to a second intermediate rib 5101 of the protruding beam.

After the front side member 1100, the battery pack mounting member 5000, and sill beam 2100 are connected in sequence, a force transmission path from the front of the vehicle to the rear of the vehicle may be formed by using the three components, thereby improving the smoothness of force transmission throughout the vehicle body. In addition, by connecting the connecting assembly to the rear end of the sill beam, the rigidity of the connecting assembly is better and the process is simpler.

In an embodiment of the present disclosure, at least one of the front side member 1100 and the sill beam may be detachably connected to the battery pack mounting member 5000. In this design, the battery pack mounting member is designed as an independent part, allowing for individual optimization of the battery pack mounting member to improve the strength and the rigidity. In addition, the detachable design simplifies the manufacturing and connection processes of the vehicle body, thereby facilitating disassembly and assembly.

In an embodiment of the present disclosure, the front side member is detachably connected to the battery pack mounting member. As described above, the design makes the assembly process at this position more convenient and simpler, and easier to operate. It should be noted that, the battery pack mounting member may be connected to the passenger compartment frame 2000 by adhesive bonding. Most of the battery pack mounting member is made of metal, and a part that connects to the passenger compartment may be made of carbon fiber to facilitate bonding.

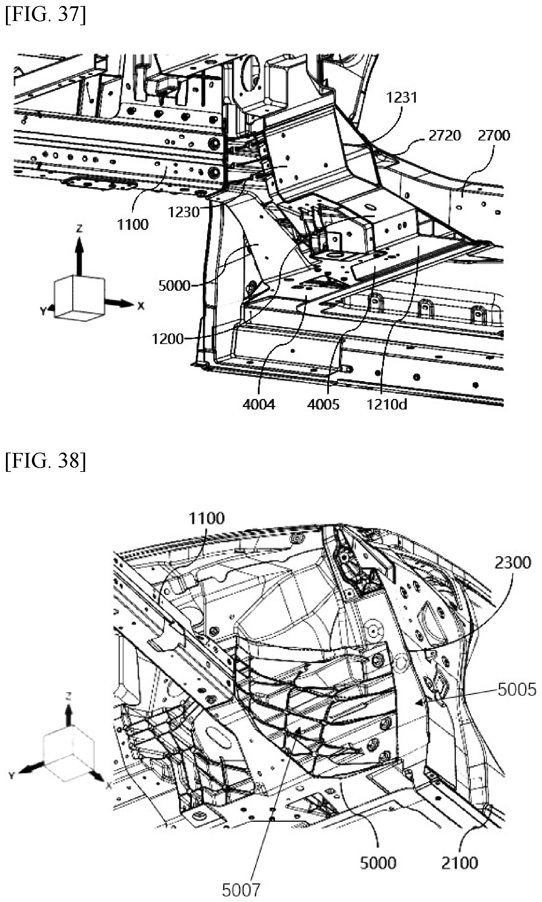

As shown in FIG. 38 and FIG. 42, in an embodiment of the present disclosure, the vehicle may further include an A-pillar 2300, and the battery pack mounting member 5000 may be connected to the A-pillar 2300. A connection between the battery pack mounting member and the A-pillar is not limited in the present disclosure. The connection may be direct or indirect. This design allows for more force transmission paths in the front-rear direction and in the width direction. The force may be transmitted through the sill beam and the battery pack, and may also be transmitted through the A-pillar. In addition, the battery pack, the A-pillar, the sill beam, and the battery pack mounting member may be integrated together. In particular, the battery pack mounting members are directly connected to the sill beam, the front side member 1100, the A-pillar, and the battery pack. When the battery pack mounting members are an integral part, the components are better connected for force transmission. The connection points between the battery pack connecting member and each component is also strong, so the overall integrity is better, thereby ensuring better rigidity of the vehicle body. In addition, the battery pack is a large component located under the vehicle body, and these components are on both sides of the front part of the vehicle. This connection method allows the entire battery pack to strengthen the rigidity of this part of the structure, thereby integrating the front side of the vehicle into a whole. This can improve the rigidity of the front side of the vehicle, suppress deformation during driving, and improve the driving and riding experience. In addition, in an event of collision, because these components are connected together, the components can effectively suppress the vertical overturning torque of the front side member during collision, prevent damage to the passenger compartment, and also prevent damage to the battery pack after the components are overturned.

As shown in FIG. 42, in an embodiment of the present disclosure, a projection of the battery pack mounting member 5000 in the width direction of the vehicle at least partially overlaps a projection of the A-pillar 2300 in the width direction of the vehicle. This design ensures better force transmission effect of the battery pack mounting member and the A-pillar in the width direction.

As shown in FIG. 37, in an embodiment of the present disclosure, the vehicle may further include a front panel 1200, and the battery pack mounting member 5000 is connected to the front panel 1200, the A-pillar 2300, and the sill beam 2100. Because the battery pack mounting member, the battery pack, the sill beam, and the A-pillar form a hollow annular structure in the vertical direction, this design allows the front panel to fill in the hollow part, to further improve the rigidity of the structure.

In some embodiments, the battery pack mounting member and the front panel 1200 may be directly connected. The front panel may be integrated formed. In this design, the integral part has high rigidity, and has better performance when combined with other components.

To improve the force transmission effect of the battery pack mounting member in the front-rear direction, ensure smoother force transmission, and reduce the vertical overturning torque, as shown in FIG. 38, in an embodiment of the present disclosure, a first end of the battery pack mounting member 5000 may be connected to the front side member 1100 of the vehicle, and a second end of the battery pack mounting member may be connected to the sill beam 2100. It should be noted that, the second end of the battery pack mounting member may also be connected to the battery pack.

As shown in FIG. 38, in an embodiment of the present disclosure, a cross-section of the battery pack mounting member near the sill beam may be larger than a cross-section of the battery pack mounting member near the front side member 1100. In this design, when the impact force from the front of the vehicle is dispersed to the rear, the battery pack mounting members may increase the force transmission area, thereby preventing the pressure from being too high due to a small force transmission area, which could then damage the passenger compartment.

As shown in FIG. 55, in an embodiment of the present disclosure, the vehicle may further include a battery pack 4000, and the battery pack 4000 may be directly connected to at least one of the battery pack mounting member 5000 and the sill beam 2100. The direct connection may improve the connection strength at the connection point and improve the effect after the battery pack is connected to the battery pack mounting member and the sill beam. In some embodiments, the battery pack may be directly connected to both the battery pack mounting member and the sill beam.

As shown in FIG. 11 and FIG. 22, in an embodiment of the present disclosure, the vehicle may further include a battery pack 4000, and a projection of a corner of the battery pack in the height direction of the vehicle may be located within a projection of the battery pack mounting member 5000 in the height direction of the vehicle. It should be explained that the corner herein refers to a connection part between the front battery pack crossmember and the battery pack side member. The front crossmember and side member of the battery pack refer to a frame crossmember and a frame side member. The battery pack is connected to the vehicle through the frame crossmember and the frame side member. This design allows for protection of the corner through the battery pack mounting member.

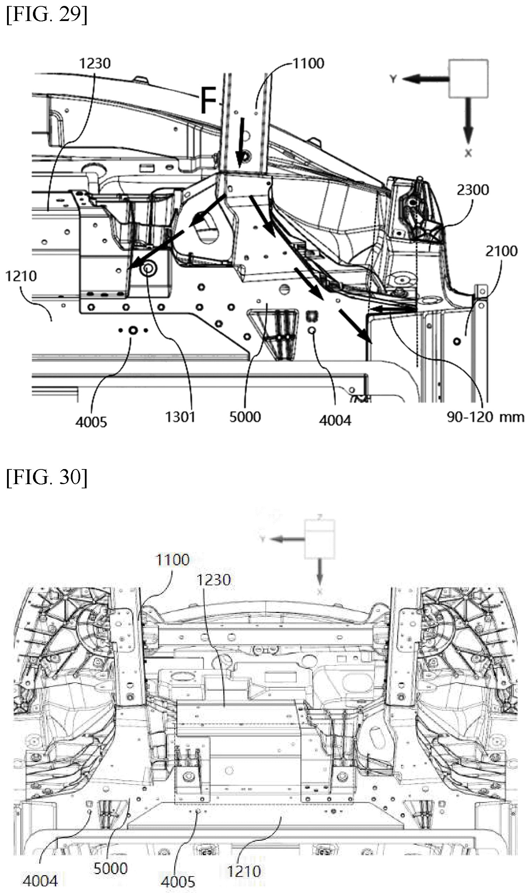

As shown in FIG. 29 and FIG. 30, in an embodiment of the present disclosure, the battery pack 4000 may be provided with a battery pack mounting point 4004, and the battery pack may be connected to the battery pack mounting member 5000 through the battery pack mounting point 4000. A minimum distance from the battery pack mounting point 4004 to the corner is less than a preset distance. Because the battery pack mounting points are usually located on the frame of the battery pack, that is, frames on the left and right side, adding a connection to the battery pack near the corner can improve the rigidity of the connection between the battery pack and the vehicle body.

For example, the preset distance may be 1/4 of the distance from the corner to an adjacent corner in the width direction of the vehicle.

For example, the preset distance is 1/4 of a maximum distance from a left edge to a right edge of the battery pack.

As shown in FIG. 3, in an embodiment of the present disclosure, two battery pack mounting members 5000 may be spaced apart in the width direction of the vehicle. The vehicle may further include a front lower crossmember 1210, and two ends of the front lower crossmember are respectively connected to the two battery pack mounting members. The two ends of the front lower crossmember may be directly connected to the battery pack mounting members, and indirectly connected to the sill beam via the battery pack mounting members. The battery pack connecting members are connected to the front side member 1100 and the A-pillar from front. The front lateral force of the vehicle is mainly transmitted through the two battery pack mounting members and the front lower crossmember. There are few force transmission components, and the battery pack mounting members are integrally formed. Therefore, there are few force transmission components on the front side, and consequently, there are few connection points. This reduces the risk of breakage at the force connection points during force transmission. The two battery pack mounting members are connected to the A-pillars, and the front lower crossmember is directly connected to the battery pack mounting members. This allows the force to be transmitted toward the A-pillar via the battery pack mounting members, thereby preventing deformation of components in the front compartment from intruding into the passenger compartment. In addition, in some other embodiments, the front lower crossmember may also be integrally formed, to further reduce the connection points of the front force transmission components.

As shown in FIG. 9, in some embodiments, the front lower crossmember 1210 may be connected to the battery pack 4000 of the vehicle. In this design, the battery pack is connected to the front lower crossmember and the two battery pack mounting members. Because the three components are connected to the A-pillar for force transmission, when the battery pack, the front lower crossmember, and the battery pack mounting members are connected, components in the front compartment may be connected and integrated into a whole, thereby improving the rigidity of the battery pack and the rigidity of the vehicle body.

In some embodiments, the front lower crossmember 1210 may be directly connected to the battery pack, to further reduce the connection points of the front force transmission components, and improve the connection strength. In addition, in some other embodiments, the front lower crossmember and the battery pack may also be indirectly connected. This is not limited in the present disclosure.

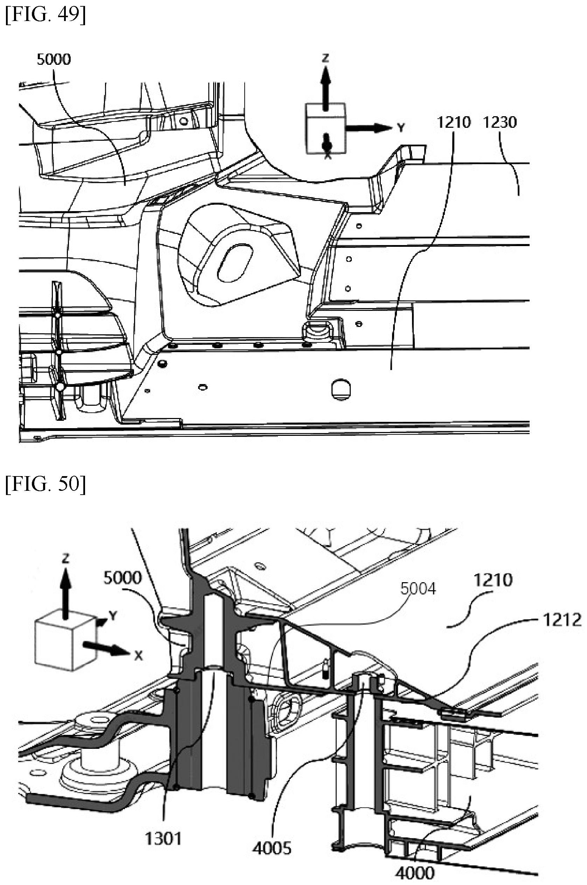

As shown in FIG. 50, in an embodiment of the present disclosure, a bottom surface of the front lower crossmember 1210 may be provided with a crossmember mounting surface 1212 (that is, a lower crossmember battery pack mounting surface), and the battery pack mounting member 5000 may be provided with a battery pack mounting member mounting surface 5004. The crossmember mounting surface 1212 and the battery pack mounting member mounting surface may be formed as a battery pack mounting surface. This design increases the connection area between the battery pack and the vehicle body, thereby improving the connection strength and the force transmission effect.

The crossmember mounting surface 1212 and the battery pack mounting member mounting surface may be located on a same horizontal plane. This design allows for smoother force transmission and prevents damage to the battery pack when the battery pack is connected.

As shown in FIG. 50, in an embodiment of the present disclosure, a projection of at least one of the front lower crossmember 1210 and the battery pack mounting member 5000 in the height direction of the vehicle at least partially overlaps a projection of the battery pack 4000 in the height direction of the vehicle. A projection of the at least one of the front lower crossmember and the battery pack mounting member in the height direction of the vehicle at least partially overlaps a projection of cells of the battery pack in the height direction of the vehicle. This design allows the battery pack to be extended further forward to increase the capacity of the battery pack.

As shown in FIG. 10, in an embodiment of the present disclosure, at least a part of a bottom surface of the sill beam 2100 may be formed as the battery pack mounting surface. This design may increase the connection area between the battery pack and the vehicle body and improve the connection stability. In addition, the battery pack may also be allowed to expand to the left-right direction, to increase the capacity of the battery pack.

As shown in FIG. 10, in an embodiment of the present disclosure, the projection of the sill beam 2100 in the height direction of the vehicle may at least partially overlap the projection of the cells of the battery pack 4000 of the vehicle in the height direction of the vehicle. The battery pack is allowed to be expand to both sides, to increase the capacity of the battery pack. In addition, by increasing the overlapping area with the sill beam, the battery pack may be better integrated with the vehicle body in the front-rear direction, to improve the rigidity of the vehicle body. In addition, the connection between the battery pack and the sill beam may form an extremely large force-bearing surface, to suppress the overturning torque of the front components in the vertical direction when the components are under the force.

As shown in FIG. 50, in an embodiment of the present disclosure, the crossmember mounting surface 1212, the battery pack mounting surface 5004, and at least a part of the bottom surface of the sill beam 2100 may be formed as the battery pack mounting surface. This design allows for an expansion of the battery pack area from the front side and left and right sides, thereby increasing the capacity of the battery pack.

As shown in FIG. 50, the crossmember mounting surface 1212, the battery pack mounting surface 5004, and at least a part of the bottom surface of the sill beam 2100 are located on a same horizontal plane. This design allows for smoother force transmission and prevents damage to the battery pack when the battery pack is connected.

In an embodiment of the present disclosure, the battery pack mounting member and the front lower crossmember 1210 may be sealed together. This design enables front sealing, and together with the front panel 1200, enables multiple seals for the passenger compartment.

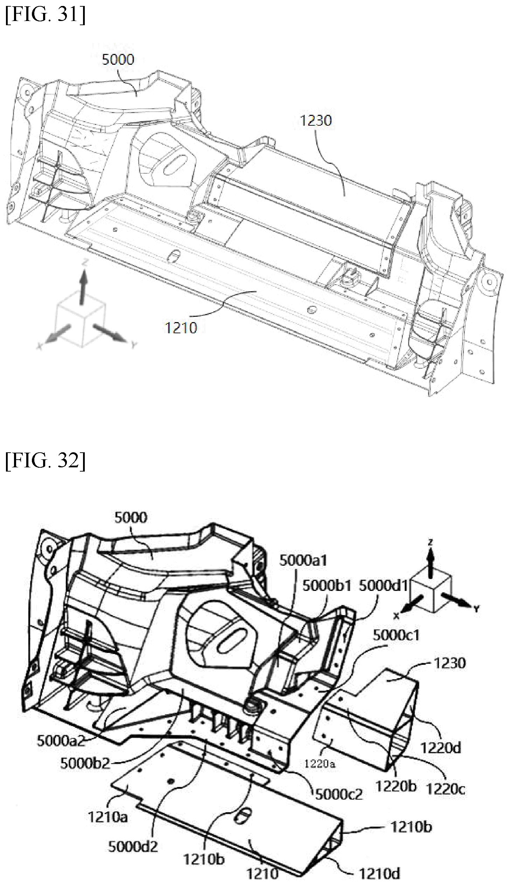

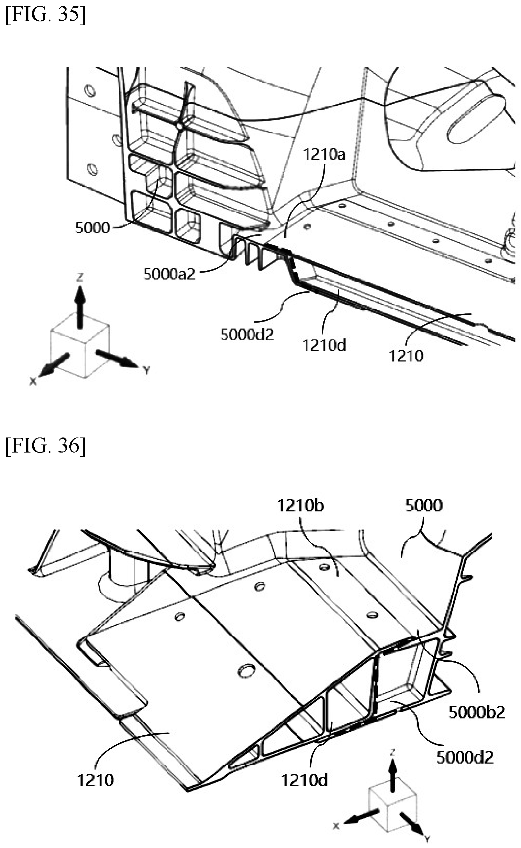

As shown in FIG. 32 and FIG. 35, in some embodiments, the battery pack mounting member may be provided with a front lower crossmember connecting portion 5000a2/5000b2/5000c2/5000d2, and the front lower crossmember 1210 may be provided with a second connecting member connecting portion 1210a/1210b/1210c/1210d. The front lower crossmember connecting portion is connected to the second connecting member connecting portion 1210a/1210b/1210c/1210d. To facilitate sealing, the second connecting member connecting portion 1210a/1210b/1210c/1210d may be located on an upper side of the front lower crossmember connecting portion in the height direction of the vehicle. Specifically, as shown in the figure, the battery pack mounting member may be provided with a first connecting portion 11a2, a second connecting portion 11b2, a third connecting portion 11c2, and a fourth connecting portion 11d2 of the front lower crossmember. A first surface 15a of the front lower crossmember is connected to the first connecting portion of the front lower crossmember, a second surface 15b of the front lower crossmember is connected to the second connecting portion 11b2 of the front lower crossmember, the third surface 15c of the front lower crossmember is connected to the third connecting portion 11c2 of the front lower crossmember, and the fourth surface 15d of the front lower crossmember is connected to the fourth connecting portion 11d2 of the front lower crossmember, forming two Z-shaped overlapping relationships, thereby improving the connection strength.

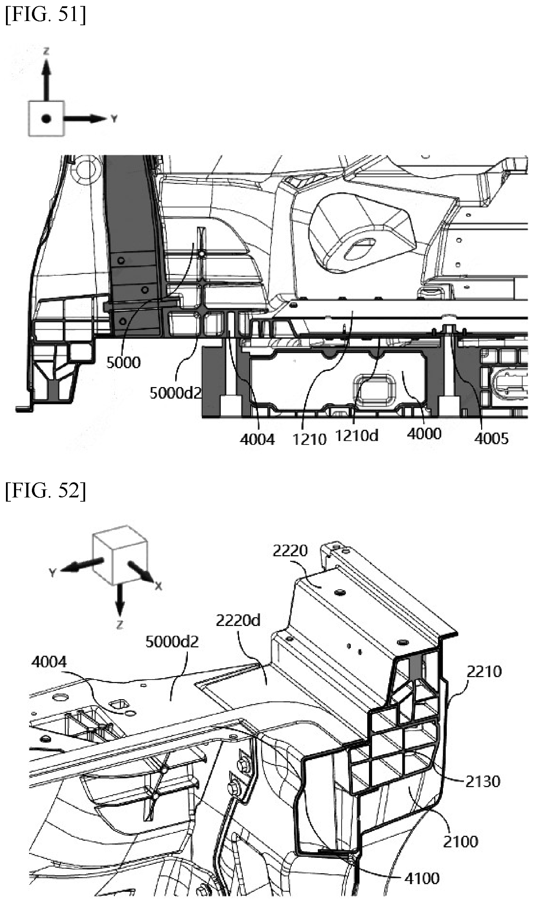

As shown in FIG. 50 and FIG. 51, in an embodiment of the present disclosure, the front lower crossmember 1210 may be connected to a rear side of the battery pack mounting member 5000. It should be explained that "rear side" herein does not mean that the front lower crossmember is completely located at the rear side of the battery pack mounting member, provided that a connection point with the battery pack mounting member is located at the rear side of the front bearing surface of the battery pack mounting member. In this design, because the battery pack mounting member is located far forward, the forward impact force is first be transmitted to the battery pack mounting member, the larger and more robust component, and then distributed to both sides via the front lower crossmember, resulting in better force transmission.

As shown in FIG. 13, in an embodiment of the present disclosure, the vehicle may further include a first crossmember 1220 (that is, a front upper crossmember) connecting the two battery pack mounting members 5000. The first crossmember may increase the force transmission path of the vehicle in the width direction.

In some embodiments, a length of the first crossmember may be shorter than a length of the front lower crossmember 1210. In this design, because the front lower crossmember is located below the first crossmember for mounting the battery pack, and may transmit the force to the battery pack mounting member, the load-bearing area may be increased when the front lower crossmember is long. It can also make the connection position between the front lower crossmember and the battery pack mounting member closer to the connection position between the A-pillar and the battery pack mounting member, thereby reducing the torque between the two mounting positions.

In some embodiments, the first crossmember may be sealed to the battery pack mounting member to achieve front sealing, thereby providing multiple seals for the passenger compartment together with the front panel 1200.

As shown in FIG. 13, in an embodiment of the present disclosure, the first crossmember 1220 may be located on an upper side of the front lower crossmember 1210 in the height direction of the vehicle. In this design, when the front compartment of the vehicle is impacted from the front, the front side member 1100 and the front subframe assembly 1300 are located at two different heights. The front side member is higher (higher than the front floor surface), and the first crossmember is at the same height as the front side member, to transmit the load of the upper layer. The front lower crossmember is at the same height as the front floor surface. In other words, the front lower crossmember is at the same height as the front subframe assembly 1300, to transmit the load of the lower layer.

As shown in FIG. 13 and FIG. 15, in an embodiment of the present disclosure, the first crossmember 1220 may be located on a front side of the front lower crossmember 1210 in the front-rear direction of the vehicle. In this design, when the vehicle is impacted from the front, the first crossmember is first impacted and transmits the force to the A-pillar through the battery pack mounting members on both sides. Then the front lower crossmember is impacted and transmits the force to the battery pack. To a certain extent, the first crossmember at the front may protect the battery pack. In addition, the first crossmember, the front lower crossmember, and the two battery pack mounting members may be joined together to form a "kou"-shaped (mouth-shaped) structure, to improve the force transmission performance at this position, thereby improving performance like the impact resistance and torsional resistance of the vehicle.

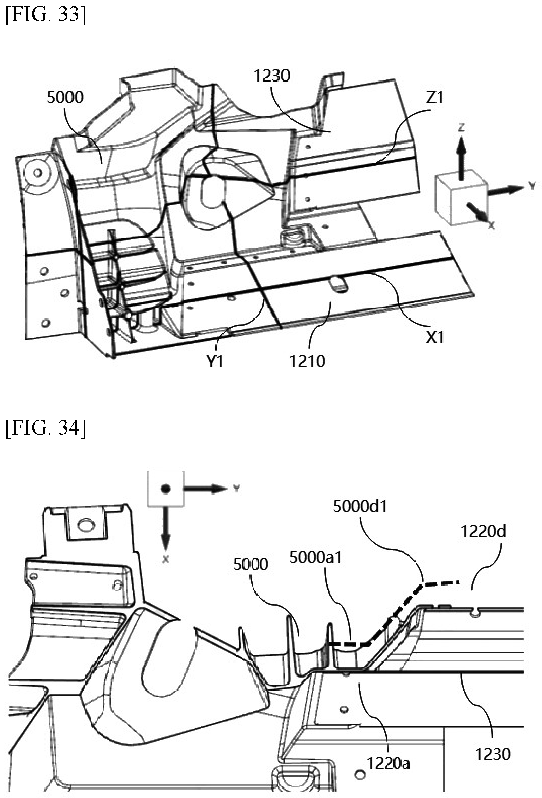

Similar to the front lower crossmember 1210, as shown in FIG. 32 and FIG. 34, in an embodiment of the present disclosure, the battery pack mounting member 5000 may be provided with a first crossmember connecting portion (5000a1/5000b1/5000c1/5000d1), and the first crossmember may be provided with a first connecting member connecting portion (1220a/1220b/1220c/1220d), and the first crossmember connecting portion is connected to the first connecting member connecting portion (1220a/1220b/1220c/1220d). To facilitate sealing connection, the first connecting member connecting portion (1220a/1220b/1220c/1220d) may be located on an upper side of the first crossmember connecting member in the height direction of the vehicle. Specifically, as shown in the figure, the battery pack mounting member may be provided with a first connecting portion 5000a1, a second connecting portion 5000b1, a third connecting portion 5000c1, and a fourth connecting portion 5000d1 of the first crossmember. The first surface 1220a of the first crossmember is connected to the first connecting portion 5000a1 of the first crossmember, the second surface 1220b of the first crossmember is connected to the second connecting portion 5000b1 of the first crossmember, the third surface 1220c of the first crossmember is connected to the third connecting portion 5000c1 of the first crossmember, and the fourth surface 1220d of the first crossmember is connected to the fourth connecting portion 5000d1 of the first crossmember, forming the Z-shaped overlapping relationship shown in the figure, thereby improving the connection strength.

Similar to the front lower crossmember 1210, as shown in FIG. 13 and FIG. 15, in an embodiment of the present disclosure, the first crossmember 1220 may be connected to a rear side of the battery pack mounting member. Similar to the foregoing descriptions, the rear side herein does not mean that the first crossmember is completely located at the rear side of the battery pack mounting member, provided that a connection point with the battery pack mounting member is located at the rear side of the front bearing surface of the battery pack mounting member. In this design, because the battery pack mounting member is located far forward, the forward impact force is first transmitted to the battery pack mounting member, the larger and more robust component, and then dispersed to both sides via the first crossmember, resulting in better force transmission.

As shown in FIG. 15, in an embodiment of the present disclosure, the vehicle may further include a center console 2700, and the center console 2700 may be connected to the first crossmember 1220, to form a force transmission path from the first crossmember to the center console 2700 in the length direction of the vehicle.

To improve the force transmission effect between the first crossmember and the center console 2700, as shown in FIG. 15, in an embodiment of the present disclosure, a projection of the first crossmember 1220 in the front-rear direction of the vehicle at least partially overlaps a projection of the center console 2700 in the front-rear direction of the vehicle.

As shown in FIG. 37, in an embodiment of the present disclosure, a cross section of the first crossmember 1220 may be formed in the shape of a Chinese character "ri" (sun), and a third intermediate rib 1231 of the first crossmember may be flush with an upper surface of the center console 2700. The "ri" (sun) shaped structure may improve the strength of the first crossmember, and the third intermediate rib of the first crossmember is flush with the upper surface of the center console 2700, to facilitate force transmission in the front-rear direction.

As shown in FIG. 9 and FIG. 15, in an embodiment of the present disclosure, the cross-section of the front lower crossmember 1210 may be formed as a right triangle, and an inclined surface of the front lower crossmember faces upward and rearward. The triangular structure takes up less space, creating space above and behind the front lower crossmember for arranging other components.

As shown in FIG. 9, in an embodiment of the present disclosure, the center console 2700 may be connected to the front lower crossmember 1210. This allows for the formation of a force transmission path between the front lower crossmember and the center console 2700.

A connection method between the center console 2700 and the first crossmember and the front lower crossmember is not limited in the present disclosure. For example, in an embodiment of the present disclosure, the front panel 1200 may be fastened to the first crossmember and the front lower crossmember and is located on the upper side of the first crossmember and the front lower crossmember, and the center console 2700 is fastened to the front panel, to be indirectly connected to the first crossmember and the front lower crossmember.

To improve the force transmission effect between the front lower crossmember 1210 and the center console 2700 in the front-rear direction, as shown in FIG. 16, in an embodiment of the present disclosure, a projection of the front lower crossmember 1210 in the front-rear direction of the vehicle may at least partially overlap a projection of the center console 2700 in the front-rear direction of the vehicle.

As shown in FIG. 5 and FIG. 28, in an embodiment of the present disclosure, the vehicle may further include a front panel 1200, a rear floor crossmember, a front seat crossmember 2630, and a rear seat crossmember 2620. The front panel may be connected above the first crossmember and the front lower crossmember, and the center console 2700 may be connected to the front panel, the rear floor crossmember, the front seat crossmember 2630, and the rear seat crossmember 2620.

As shown in FIG. 22, in an embodiment of the present disclosure, a front subframe mounting point 5003 may be formed on the battery pack mounting member 5000, and the front subframe mounting point 5003 is adapted to be connected to the front subframe assembly 1300 of the vehicle. By connecting the front subframe assembly 1300 to the battery pack mounting member, an additional force transmission path may be added for the vehicle body. Specifically, when the front side member 1100 of the vehicle is impacted, the impact force may be at least partially transmitted to the front subframe assembly 1300 through the battery pack mounting members for dispersion, thereby protecting the passenger compartment.

In an embodiment of the present disclosure, the front subframe mounting point may be located on a side of the mounting point of the battery pack mounting member away from the sill beam, so that the force of the front subframe assembly 1300 may be transmitted to the battery pack, thereby preventing the front subframe assembly 1300 from intruding into the passenger compartment.

In an embodiment of the present disclosure, the front subframe mounting point may be located in front of the front lower crossmember 1210, so that the front lower crossmember may limit the rearward displacement of the front subframe and prevent the front subframe from moving rearward and intruding into the passenger compartment. The distance between the front subframe mounting point and the front lower crossmember in the length direction may be 100 mm to 150 mm.

As shown in FIG. 38, in an embodiment of the present disclosure, the battery pack mounting member may include a first mounting portion 5005, the first mounting portion 5005 may be directly connected to the A-pillar 2300 of the vehicle, and at least a part of the first mounting portion is located on the front side of the A-pillar. It needs to be explained here that the lower part of the A-pillar overlaps a part of the sill beam, meaning that this "part" belongs to both the A-pillar and the sill beam. Therefore, the connection between the first mounting portion and the A-pillar is actually the connection between the first mounting portion and the sill beam. This design integrates the sill beam, the A-pillar, and the battery pack mounting member into a whole, providing a plurality of force transmission paths to protect the driving compartment.

As shown in FIG. 42, in an embodiment of the present disclosure, the battery pack mounting member may further include a second mounting portion 5006, and the second mounting portion is connected to a side of the A-pillar 2300 facing the passenger compartment of the vehicle. The first mounting portion and the second mounting portion allow the battery pack mounting members to be connected to the A-pillars in two directions, to improve the connection strength between the battery pack mounting member and the A-pillar and increase the force transmission paths in the front-rear and left-right directions.

As shown in FIG. 42, in an embodiment of the present disclosure, the second mounting portion 5006 may be connected to the sill beam, to increase the force transmission path between the battery pack mounting member and the sill beam.

A specific structure of the sill beam 2100 is not limited in the present disclosure. For example, in the embodiment shown in FIG. 82, the sill beam 2100 may include a body beam 2100a (that is, a sill body) and a sill reinforcement beam 2130 located within the body beam 2100a. It should be explained that "inner" herein refers to the inside and outside in the width direction of the vehicle. In this case, the second mounting portion may be connected to the sill reinforcement beam 2130, and the second mounting portion 5006 is located on a side of the sill reinforcement beam facing the passenger compartment. By setting the sill reinforcement beam, the strength and force transmission effect of the sill beam of the vehicle may be improved.

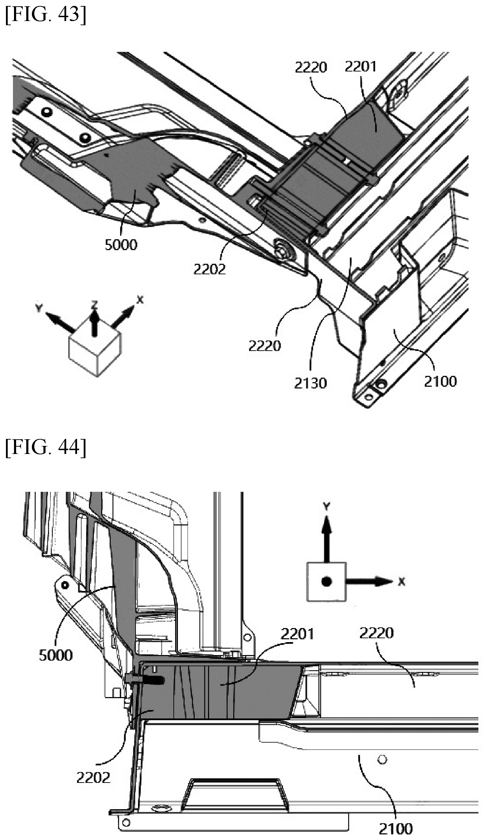

As shown in FIG. 43 to FIG. 48 and FIG. 82, in an embodiment of the present disclosure, the sill beam 2100 may further include an inner sill plate 2110 and an outer sill plate 2120, where the inner sill plate 2110 and the outer sill plate 2120 enclose the body beam 2100a; and include a first insert 2201, where the first insert 2201 is located between the outer sill plate 2120 and the inner sill plate 2110. The second mounting portion is connected to the inner sill plate 2110, the first insert 2201, and the sill reinforcement beam in sequence. The battery pack mounting member is fastened to the sill reinforcement beam 2130 by using bolts that pass through the first insert 2201 and the side panel assembly. It should be explained that the side panel assembly herein includes the outer side panel 2210, the inner side panel 2220, the inner sill plate 2110, and the outer sill plate 2120. The inner sill plate 2110 and the inner side panel are integrally formed, and the outer sill plate 2120 and the outer side panel are integrally formed. The outer side panel and the inner side panel may enclose the A-pillar 2300.

The first insert is not limited in the present disclosure. For example, in an embodiment shown in FIG. 43 to FIG. 48, a second insert 2202 may be filled by cavity-reinforced foam or plastic, or other cavity-filling lightweight material. The first insert is an aluminum profile embedded in the second insert 2202, providing mounting threads or through holes for the reinforcement beams and the battery pack mounting members.

As shown in FIG. 43 to FIG. 48, in an embodiment of the present disclosure, the second insert 2202 may be fitted with a third insert 2203 and a fourth insert 2204. A portion in which the third insert and the fourth insert are located is the A-pillar. The battery pack mounting member is used for connecting to the third insert in the width direction and the fourth insert in the length direction, that is, forming a connection with the A-pillar through the third insert and the fourth insert in the width direction and the length direction.

As shown in FIG. 42 and FIG. 43, in an embodiment of the present disclosure, a projection of the sill reinforcement beam 2130 in the width direction of the vehicle at least partially overlaps a projection of the second mounting portion 5006 in the width direction of the vehicle, to ensure better force transmission in the width direction of the vehicle.

As shown in FIG. 82, in an embodiment of the present disclosure, the inner sill plate 2110 may be constructed as a bent plate and have a plane flush with the bottom surface of the battery pack mounting member, to provide a mounting position for a sealing plate of the battery pack.

The position of the battery pack mounting member for overlapping with the inner side panel may be formed in an L-shape to overlap the inner sill plate 2110 in both the width direction and the length direction.

As shown in FIG. 42, in an embodiment of the present disclosure, the bottom surface of the second mounting portion 5006 and the mounting surface of the sill beam 2100 may be located on a same horizontal plane. This design facilitates easier sealing and prevents foreign objects from entering the passenger compartment.

As shown in FIG. 50, in an embodiment of the present disclosure, the battery pack 4000 of the vehicle may be sealed to the crossmember mounting surface 1212, the battery pack mounting member mounting surface 5004, and at least a part of a bottom surface of the sill beam 2100. This design prevents impurities and moisture from entering the passenger compartment through the connection gaps.

How the battery pack is sealed to the crossmember mounting surface 1212, the battery pack mounting member mounting surface, and at least a part of the bottom surface of the sill beam is not limited in the present disclosure. For example, in an embodiment shown in FIG. 10, the vehicle may further include a sealing member 4100, and the battery pack is sealed to at least a part of the bottom surface of the crossmember mounting surface 1212, the battery pack mounting member mounting surface, and the sill beam through the sealing member. The sealing member may be a sealing plate, a sealing gasket, or the like.

The crossmember mounting surface 1212, the battery pack mounting member mounting surface, and at least a part of the bottom surface of the sill beam are flush in the height direction to provide mounting positions for the sealing member of the battery pack.

A structure of the inner side panel 2220 is not limited in the present disclosure. The structure of the inner side panel 2220 is described below with reference to the embodiment shown in FIG. 26. Specifically, the inner side panel 2220 may be constructed to have a first step surface, a second step surface, a third step surface that are staggered from bottom to top, and a connecting surface connecting the second step surface and the third step surface. The vehicle may further include a front seat crossmember 2630 and a rear seat crossmember 2620. The battery pack may be mounted on the first step surface, the sealing plate may be connected to the second step surface, and a space may be formed between the third step surface and the connecting surface to allow for the passage of the front seat crossmember 2630 and the rear seat crossmember 2620.

As shown in FIG. 26, in an embodiment of the present disclosure, an outer surface of the inner side panel may be provided with an inner sill structure 2150. A first reinforcement profile 2151 may be provided at a position corresponding to the front seat crossmember 2630 on the outer surface of the inner sill structure, and a second reinforcement profile 2152 may be provided at a position corresponding to the rear seat crossmember 2620. The outer surfaces of the first reinforcement profile and the second reinforcement profile respectively abut against the sill reinforcement beam 2130. The inner sill structure may be connected to upper surfaces of the front seat crossmember 2630 and the rear seat crossmember 2620 via lateral fasteners. By setting the inner sill structure, the first reinforcement profile, and a second reinforcement profile, the strength of the sill beam, and the connection strength with the front seat crossmember 2630 and the rear seat crossmember 2620, may be effectively improved.

In an embodiment of the present disclosure, the middle part of the front seat crossmember 2630 may be bonded to the battery pack, and two ends of the front seat crossmember 2630 may be connected to the battery pack by screws. The middle part of the rear seat crossmember 2620 may be bonded to the battery pack, and two ends of the rear seat crossmember 2620 may be connected to the battery pack.

To improve the sealing performance at the connection between the battery pack and the vehicle body, as shown in FIG. 26, in an embodiment of the present disclosure, a distance between the mounting point of the battery pack and the first step surface and the sealing plate in the width direction is 20 mm to 30 mm. The battery pack may be compressed and fitted with the sealing plate through the battery pack sealing foam 4200. Designing this width distance to be smaller allows for greater compression and sealing at the corresponding position of the battery pack and the sealing plate when the battery pack is fixed to the first step surface.

As shown in FIG. 38, in an embodiment of the present disclosure, the battery pack mounting member may be provided with a third reinforcement rib, and the third reinforcement rib extends along the direction from the front side member 1100 of the vehicle to the A-pillar. This design may improve the strength of the battery pack mounting member through the third reinforcement rib, and enable the battery pack mounting member to better transmit the force in the front-rear direction of the vehicle.

As shown in FIG. 38, in an embodiment of the present disclosure, a mounting groove may be formed on the battery pack mounting member 5000, and a mounting hole for a steering column to pass through may be formed at the bottom of the mounting groove. During assembly, other components with the sealing foam attached extend into the mounting groove, and the sealing foam is compressed against the bottom surface of the groove to achieve sealing.

The foregoing describes preferred implementations of the present disclosure in detail with reference to the accompanying drawings. However, the present disclosure is not limited to specific details in the foregoing implementations. Within the scope of the technical concept of the present disclosure, a plurality of simple variations may be made to the technical solution of the present disclosure, and all these simple variations fall within the protection scope of the present disclosure.

In addition, it should be noted that, various specific technical features described in the foregoing specific implementations may be combined in any appropriate manner without contradiction. To avoid unnecessary repetition, various possible combinations are not further described in the present disclosure.

In addition, any combination of various different implementations of the present disclosure may be made. The combination should also be considered as the content disclosed in the present disclosure as long as the combination does not violate the idea of the present disclosure.

## Claims

1. A vehicle (1), comprising:
a rear compartment frame (3000);
a passenger compartment frame (2000); and
a connecting assembly (6000), the connecting assembly (6000) being disposed between the rear compartment frame (3000) and the passenger compartment frame (2000) in a front-rear direction of the vehicle, and the connecting assembly (6000) being separately connected to the rear compartment frame (3000) and the passenger compartment frame (2000), wherein
the connecting assembly (6000) is an integral part.

2. The vehicle (1) according to claim 1, wherein the connecting assembly (6000) is integrally formed.

3. The vehicle (1) according to claim 1 or 2, wherein the connecting assembly (6000) is provided with a first mounting surface (6001), and the first mounting surface (6001) is configured as at least a part of a battery pack mounting surface (4502).

4. The vehicle (1) according to claim 3, wherein the passenger compartment frame (2000) comprises a sill beam (2100), and at least a part of a bottom surface of the sill beam (2100) is configured as at least a part of the battery pack mounting surface (4502), wherein
the first mounting surface (6001) is flush with at least the part of the bottom surface of the sill beam (2100) on a horizontal plane, or at least a part of the first mounting surface (6001) is located inside the sill beam (2100).

5. The vehicle (1) according to claim 4, wherein the passenger compartment frame (2000) further comprises a first connecting plate (2520), and the first connecting plate (2520) is connected to the sill beam (2100);
the vehicle (1) further comprises a battery pack (4000), and the battery pack (4000) and the first connecting plate (2520) are spaced apart in a height direction of the vehicle to form a receiving space (7100); and
the receiving space (7100) is adapted to receive an on-board charger.

6. The vehicle (1) according to claim 5, wherein the passenger compartment frame (2000) further comprises a second connecting plate (2500); the second connecting plate (2500) is connected to at least one of the first connecting plate (2520) and the sill beam (2100); and the battery pack (4000), the first connecting plate (2520), the second connecting plate (2500), and the sill beam (2100) form the receiving space (7100).

7. The vehicle (1) according to claim 6, wherein the battery pack (4000), the first connecting plate (2520), the second connecting plate (2500), the sill beam (2100), and the connecting assembly (6000) form the receiving space (7100).

8. The vehicle (1) according to any one of claims 1 to 7, wherein the two connecting assemblies (6000) are spaced apart in a width direction of the vehicle, the vehicle (1) further comprises a rear crossmember (3210), and two ends of the rear crossmember (3210) are respectively connected to the two connecting assemblies (6000);
the connecting assembly (6000) further comprises a connecting portion (6100), one end of the connecting portion (6100) is connected to the rear crossmember (3210), and the other end of the connecting portion (6100) is formed as a rear side member connecting portion (6110) for connecting a rear side member (3100).

9. The vehicle (1) according to claim 8, wherein a projection of the rear crossmember (3210) in the front-rear direction of the vehicle at least partially overlaps a projection of the rear side member connecting portion (6110) in the front-rear direction of the vehicle, or
a projection of the rear crossmember (3210) in a left-right direction of the vehicle at least partially overlaps a projection of the rear side member connecting portion (6110) in the left-right direction of the vehicle, or
a projection of the rear side member (3100) in the front-rear direction of the vehicle at least partially overlaps a projection of the rear crossmember (3210) in the front-rear direction of the vehicle.

10. The vehicle (1) according to claim 8 or 9, wherein the passenger compartment frame (2000) further comprises the first connecting plate (2520), the battery pack (4000) of the vehicle (1) and the first connecting plate (2520) are spaced apart in the height direction of the vehicle to form the receiving space (7100), and the rear crossmember (3210) and the battery pack (4000) are spaced apart in the height direction of the vehicle, so that an air vent (7200) in communication with the receiving space is formed between the battery pack (4000) and the rear crossmember (3210).

11. The vehicle (1) according to any one of claims 8 to 10, wherein in the height direction of the vehicle, the rear crossmember (3210) is located on a side of the first connecting plate (2520) away from the battery pack (4000), or
in the height direction of the vehicle, the first connecting plate (2520) is located on an upper side of the first mounting surface (6001).

12. The vehicle (1) according to any one of claims 3 to 7, wherein the connecting assembly (6000) is provided with a rear subframe mounting point (3301), wherein
in the height direction of the vehicle, a plane on which the rear subframe mounting point (3301) is located is located on an upper side of the first mounting surface (6001), or
in the front-rear direction of the vehicle, the rear subframe mounting point (3301) is located on a rear side of a connecting portion between the battery pack (4000) of the vehicle (1) and the connecting assembly (6000).

13. The vehicle (1) according to claim 12, wherein the connecting assembly (6000) further comprises a rear side member connecting portion (6110), and in the front-rear direction of the vehicle, the rear side member connecting portion (6110) is located on a rear side of the rear subframe mounting point (3301); and
in the height direction of the vehicle, the first mounting surface (6001) is located on a lower side of the rear subframe mounting point (3301), and the rear side member connecting portion (6110) is located on an upper side of the rear subframe mounting point (3301).

14. The vehicle (1) according to claim 12 or 13, wherein the connecting assembly (6000) further comprises the rear side member connecting portion (6110), and in the height direction of the vehicle, the rear side member connecting portion (6110) is located on an upper side of a plane on which the rear subframe mounting point (3301) is located.

15. The vehicle (1) according to any one of claims 1 to 14, wherein the passenger compartment frame (2000) comprises a sill beam (2100), and the connecting assembly (6000) is connected to a rear end of the sill beam (2100);
the sill beam (2100) has a first connecting surface (2102) and a second connecting surface (2103) that intersect each other, and both the first connecting surface (2102) and the second connecting surface (2103) are connected to the connecting assembly (6000);
the first connecting surface (2102) is located on a rear end face of the sill beam (2100), and the connecting assembly (6000) is directly connected to the first connecting surface (2102);
the vehicle (1) further comprises an intermediate connecting member (2430), the second connecting surface (2103) is an inner surface of the sill beam (2100), and the connecting assembly (6000) is connected to the second connecting surface (2103) via the intermediate connecting member (2430);
the intermediate connecting member (2430) comprises a third connecting surface (2431) and a fourth connecting surface (2432), the third connecting surface (2431) is connected to the second connecting surface (2103), and the fourth connecting surface (2432) is connected to the connecting assembly (6000).

16. The vehicle (1) according to claim 15, wherein the fourth connecting surface (2432) is parallel to or located on a same plane as the first connecting surface (2102).

17. The vehicle (1) according to claim 15 or 16, wherein a projection of the sill beam (2100) in the front-rear direction of the vehicle at least partially overlaps a projection of the connecting assembly (6000) in the front-rear direction of the vehicle, or
a projection of the sill beam (2100) in the left-right direction of the vehicle at least partially overlaps a projection of the connecting assembly (6000) in the left-right direction of the vehicle.

18. The vehicle (1) according to claim 15 or 16, wherein the sill beam (2100) comprises a sill body (2100a) and a sill reinforcement beam (2130), the sill body (2100a) is provided with a sill reinforcement beam receiving space (2101), and the sill reinforcement beam (2130) is disposed within the sill reinforcement beam receiving space (2101);
the connecting assembly (6000) is connected to both the sill body (2100a) and the sill reinforcement beam (2130); and the intermediate connecting member (2430) is connected to both the sill body (2100a) and the sill reinforcement beam (2130).

19. The vehicle (1) according to claim 18, further comprising a side reinforcement member (2420), at least a part of the side reinforcement member (2420) is disposed within the sill reinforcement beam receiving space (2101), and the side reinforcement member (2420) is connected to both the sill reinforcement beam (2130) and the sill body (2100a); and
a projection of the sill reinforcement beam (2130) in the width direction of the vehicle, a projection of the intermediate connecting member (2430) in the width direction of the vehicle, and a projection of the side reinforcement member (2420) in the width direction of the vehicle at least partially overlap with each other.

20. The vehicle (1) according to claim 19, wherein the side reinforcement member (2420) extends out of the sill reinforcement beam receiving space (2101) to be connected to a rear C-pillar reinforcement panel (2412) of the vehicle; and
the rear C-pillar reinforcement panel (2412) is located on an upper side of the sill beam (2100).

21. The vehicle (1) according to any one of claims 15 to 20, wherein the connecting assembly (6000) further comprises force transmission ribs (j1-j13), the force transmission ribs (j1-j13) extend along the rear compartment frame (3000) toward the sill beam (2100); and
a projection of the force transmission ribs (j1-j13) in the front-rear direction of the vehicle at least partially overlaps a projection of the sill beam (2100) in the front-rear direction of the vehicle.

22. The vehicle (1) according to any one of claims 15 to 21, wherein the passenger compartment frame (2000) further comprises a seat crossmember (2610), and a projection of the sill beam (2100) in the height direction of the vehicle at least partially overlaps a projection of the seat crossmember (2610) in the height direction of the vehicle.

23. The vehicle (1) according to claim 22, wherein the sill beam (2100) comprises a receiving portion (2170), and the receiving portion (2170) is used for partially receiving the seat crossmember (2610);
the sill beam (2100) is provided with a battery pack mounting portion (2180), in the height direction of the vehicle, the battery pack mounting portion (2180) is located on a lower side of the receiving portion (2170), and in the width direction of the vehicle, the battery pack mounting portion (2180) is located on an outer side of the receiving portion (2170).

24. The vehicle (1) according to claim 23, wherein the sill beam (2100) is further provided with a battery pack sealing portion (4100), in the height direction of the vehicle, the battery pack sealing portion (4100) is located between the receiving portion (2170) and the battery pack mounting portion (2180), and in the width direction of the vehicle, the battery pack sealing portion (4100) is located between the receiving portion (2170) and the battery pack mounting portion (2180).

25. The vehicle (1) according to any one of claims 1 to 24, wherein an upper end of the rear C-pillar reinforcement panel (2412) of the vehicle (1) is connected to a vehicle frame side member (2840) of the passenger compartment frame (2000); the upper end of the rear C-pillar reinforcement panel (2412) is connected to a rear upper crossmember (3220) of the passenger compartment frame (2000);
the vehicle (1) further comprises a front C-pillar reinforcement panel (2411), an upper end of the front C-pillar reinforcement panel (2411) is connected to the vehicle frame side member (2840), and a lower end of the front C-pillar reinforcement panel (2411) is connected to the sill beam (2100) of the vehicle; the front C-pillar reinforcement panel (2411) is disposed on a front side of the rear C-pillar reinforcement panel (2412);
the rear C-pillar reinforcement panel (2412) is provided with a front C-pillar reinforcement panel connecting portion (2412a), and the rear C-pillar reinforcement panel (2412) is connected to the front C-pillar reinforcement panel (2411) via the front C-pillar reinforcement panel connecting portion (2412a).
